# EUROPEAN PATENT SPECIFICATION

(11) **EP 4 256 935 B1**
(45) Date of publication and mention of the grant of the patent: **01.04.2026**
(21) Application number: 23163540.0
(22) Date of filing: 22.03.2023
(51) Int. Cl.: A01C 7/20, A01B 79/00, A01C 21/00

(54) **AGRICULTURAL PLANTING SYSTEM AND METHOD OF GENERATING A FUNCTIONAL PREDICTIVE GROUND ENGAGEMENT MAP**
LANDWIRTSCHAFTLICHES PFLANZSYSTEM UND VERFAHREN ZUR ERZEUGUNG EINER FUNKTIONELLEN PRÄDIKTIVEN BODENEINGRIFFSKARTE
SYSTÈME DE PLANTATION AGRICOLE ET PROCÉDÉ DE GÉNÉRATION D'UNE CARTE PRÉDICTIVE FONCTIONNELLE D'ENGAGEMENT DU SOL

(30) Priority: 04.04.2022 US 202263327236 P
(43) Date of publication of application: 11.10.2023
(73) Proprietor: Deere & Company, Moline, IL 61265 (US)
(72) Inventor: HUBNER, Cary S., 68163 Mannheim (DE); GRAHAM, William Douglas, 68163 Mannheim (DE); VANDIKE, Nathan R., 68163 Mannheim (DE)
(74) Representative: Reichert, Christian

(56) References cited:
- US-A1- 2020 329 631
- US-A1- 2021 029 877

## Description

The present description relates to mobile agricultural machines, particularly mobile agricultural planters configured to plant seeds at a field.

### BACKGROUND

Some such agricultural machines include row crop planters, grain drills, air seeders or the like. The agricultural seeding or planting machines may be towed by a towing vehicle such as a tractor.

As one example, a plurality of row units can be mounted to the agricultural planting machine, such as a planter or seeder. The agricultural planting machine is often towed by a towing vehicle, such as a tractor, over soil where seed is planted in the soil, using the row units. The row units on the planting machine follow the ground profile by using a combination of a down force assembly that imparts a down force to the row unit to push disk openers into the ground and open a furrow and gauge wheels to set depth of penetration of the disk openers.

The seed can be carried, prior to being planted, by a container or tank on the row unit itself, or it can be pneumatically delivered to the row unit by a cart that is also pulled by the towing vehicle. In either case, the seed can be delivered to the furrow by a seed delivery system.

US 2021/0029877 A1 describes an agricultural work machine with a control system receiving one or more information maps. The information maps map one or more agricultural characteristic values at different geographic locations of a field. An in-situ sensor on the agricultural work machine senses an agricultural characteristic as the agricultural work machine moves through the field. A predictive map generator generates a predictive map that predicts a predictive agricultural characteristic at different locations in the field based on a relationship between the values in the one or more information maps and the agricultural characteristic sensed by the in-situ sensor. The predictive map can be output and used in automated machine control for example in a planter.

US 2020/0329631 A1 describes a planter with a closing wheel downforce controlled based on a map with values representing coverage of the field with residues or penetration depths from previous operations.

### SUMMARY

The present invention is defined by the claims.

An agricultural system comprises a communication system that receives an information map that includes values of a characteristic corresponding to different geographic locations in a field; an in-situ sensor that detects a value of a ground engagement characteristic corresponding to a geographic location in the field; a predictive model generator that generates a predictive ground engagement model that models a relationship between the characteristic values and values of the ground engagement characteristic based on the value of the ground engagement characteristic detected by the in-situ sensor at the geographic location and a value of the characteristic in the information map at the geographic location; a predictive map generator that generates a functional predictive ground engagement map of the worksite, that maps predictive values of the ground engagement characteristic to the different geographic locations in the worksite, based on the values of the characteristic in the information map and based on the predictive ground engagement model; and a mobile agricultural planting machine with a control system configured to generate a control signal to control a suspension subsystem of the mobile agricultural planting machine, based on the functional predictive ground engagement map.

The predictive map generator may configure the functional predictive ground engagement map for consumption by the control system.

The in-situ sensor may detect, as the value of the ground engagement characteristic, a downforce margin value corresponding to the geographic location, wherein the predictive ground engagement model models a relationship between the characteristic values and downforce margin values based on the downforce margin value detected by the in-situ sensor corresponding to the geographic location and the value of the characteristic in the information map at the geographic location; and wherein the functional predictive ground engagement map maps predictive downforce margin values to the different geographic locations in the worksite based on the values of the characteristic in the information map and based on the predictive ground engagement model.

The in-situ sensor may also detect, as the value of the ground engagement characteristic, a ride quality value corresponding to the geographic location; wherein the predictive ground engagement model models a relationship between the characteristic values and ride quality values based on the ride quality value detected by the in-situ sensor corresponding to the geographic location and the value of the characteristic in the information map at the geographic location; and wherein the functional predictive ground engagement map maps predictive ride quality values to the different geographic locations in the worksite based on the values of the characteristic in the information map and based on the predictive ground engagement model.

The in-situ sensor may further detect, as the value of the ground engagement characteristic, a percent ground contact value corresponding to the geographic location; wherein the predictive ground engagement model models a relationship between the characteristic values and percent ground contact values based on the percent ground contact value detected by the in-situ sensor corresponding to the geographic location and the value of the characteristic in the information map at the geographic location; and wherein the functional predictive ground engagement map maps predictive percent ground contact values to the different geographic locations in the worksite based on the values of the characteristic in the information map and based on the predictive ground engagement model.

The in-situ sensor may also detect, as the value of the ground engagement characteristic, a machine dynamics value corresponding to the geographic location; wherein the predictive ground engagement model models a relationship between the characteristic values and machine dynamics values based on the machine dynamics value detected by the in-situ sensor corresponding to the geographic location and the value of the characteristic in the information map at the geographic location; and wherein the functional predictive ground engagement map maps predictive machine dynamics values to the different geographic locations in the worksite based on the values of the characteristic in the information map and based on the predictive ground engagement model.

The information map may comprise one or more information maps, wherein each one of the one or more information maps include values of a respective characteristic corresponding to different geographic locations in the field, wherein the one or more information maps comprise one or more of:
a topographic map that maps, as the values of the respective characteristic, topographic values to the different geographic locations in the field;
a speed map that maps, as the values of the respective characteristic, speed values to the different geographic locations in the field;
a soil moisture map that maps, as the values of the respective characteristic, soil moisture values to the different geographic locations in the field;
a soil type map that maps, as the values of the respective characteristic, soil type values to the different geographic locations in the field;
a soil roughness map that maps, as the values of the respective characteristic, soil roughness values to the different geographic locations in the field;
an irrigation map that maps, as the values of the respective characteristic, irrigation values to the different geographic locations in the field;
a tillage map that maps, as the values of the respective characteristic, tillage values to the different geographic locations in the field;
a traffic map that maps, as the values of the respective characteristic, traffic characteristic values to the different geographic locations in the field; and
a compaction map that maps, as the values of the respective characteristic, compaction values to the different geographic locations in the field; and
wherein the predictive ground engagement model models a relationship between one or more of topographic values, speed values, soil moisture values, soil type values, soil roughness values, irrigation values, tillage values, traffic characteristic values, and compaction values and values of the ground engagement characteristic based on the value of the ground engagement characteristic detected by the in-situ sensor corresponding to the geographic location and one or more of the topographic value, the speed value, the soil moisture value, the soil type value, the soil roughness value, the irrigation value, the tillage value, the ruts value, and the compaction value, in the respective maps, at the geographic location, the predictive ground engagement model being configured to receive one or more of a topographic value, a speed value, a soil moisture value, a soil type value, a soil roughness value, an irrigation value, a tillage value, a traffic characteristic value, and a compaction value, as one or more model inputs, and generate a predictive value of the ground engagement characteristic as a model output based on the modeled relationship.

The predictive map generator may generate the functional predictive ground engagement map of the worksite, that maps predictive values of the ground engagement characteristic to the different geographic locations in the worksite, based on one or more of the topographic values, the speed values, the soil moisture values, the soil type values, the soil roughness values, the irrigation values, the tillage values, the traffic characteristic values, and the compaction values in the respective information map and based on the predictive ground engagement model.

The agricultural system may further comprise a control system that generates a control signal to control a propulsion subsystem of a mobile agricultural planting machine, to control a speed of the mobile agricultural planting machine based on the functional predictive ground engagement map.

The agricultural system may further comprise a control system that generates a control signal to control a downforce subsystem of a mobile agricultural planting machine to adjust a downforce applied by the downforce subsystem on a component of the mobile agricultural planting machine, based on the functional predictive ground engagement map.

The agricultural system may also comprise a control system that generates a control signal to control a depth subsystem of a mobile agricultural planting machine to adjust the planting depth of an agricultural planting machine, based on the functional predictive ground engagement map.

A computer implemented method of generating a functional predictive ground engagement map, comprises: receiving an information map that indicates values of a characteristic corresponding to different geographic locations in a field; detecting, with an in-situ sensor, a value of a ground engagement characteristic corresponding to a geographic location; generating a predictive ground engagement model that models a relationship between the characteristic and the ground engagement characteristic; controlling a predictive map generator to generate the functional predictive ground engagement map of the field, that maps predictive values of the ground engagement characteristic to the different locations in the field based on the values of the characteristic in the information map and the predictive ground engagement model; and generating a control signal to control a suspension subsystem of the mobile agricultural planting machine, based on the functional predictive ground engagement map.

The method may further comprise generating control signals to control a controllable subsystem on a mobile agricultural planting machine based on the functional predictive ground engagement map.

Detecting, with an in-situ sensor, a value of the ground engagement characteristic may comprise detecting, with one or more in-situ sensors, one or more of a downforce margin value, a ride quality value, a percent ground contact value, and a machine dynamics value.

Generating the predictive ground engagement model may comprise: identifying a relationship between the characteristic and one or more of downforce margin, ride quality, percent ground contact, and machine dynamics based on one or more of the downforce margin value, ride quality value, the percent ground contact value, and the machine dynamics value detected by the one or more in-situ sensors corresponding to the geographic location and the value of the characteristic, in the information map, at the geographic location; and controlling a predictive model generator to generate the predictive ground engagement model that receives a value of the characteristic as a model input and generates one or more of a predictive downforce margin value, a predictive ride quality value, a predictive percent ground contact value, and a predictive machine dynamics value as a model output based on the identified relationship.

Controlling the predictive map generator may comprise controlling the predictive map generator to generate the functional predictive map of the field, that maps one or more of predictive downforce margin values, predictive ride quality values, predictive percent ground contact values, and predictive machine dynamics values to the different geographic locations in the field based on the values of the characteristic in the information map and the predictive ground engagement model.

The computer implemented method may further comprise controlling an interface mechanism to present the functional predictive ground engagement map.

In an embodiment an agricultural mobile machine includes a towing machine and a towed planting machine and further comprising a control system that generates a control signal to control a controllable subsystem of the mobile machine based on the functional predictive ground engagement map and the geographic location of the mobile machine at the field.

This Summary is provided to introduce a selection of concepts in a simplified form that are further described below in the Detailed Description.

### BRIEF DESCRIPTION OF THE DRAWINGS

FIG. 1 is a partial top view and partial block diagram of one example of a mobile agricultural planting system architecture that includes an agricultural planting machine.
FIG. 2 is a side view showing one example of a row unit of the agricultural planting machine illustrated in FIG. 1.
FIG. 3 is a side view showing another example of a row unit of the agricultural planting machine illustrated in FIG. 1.
FIG. 4 is a perspective view of a portion of a seed metering system.
FIG. 5 shows an example of a seed delivery system that can be used with a seed metering system.
FIG. 6 shows an example of a seed delivery system that can be used with a seed metering system.
FIG. 7 is a block diagram showing some portions of an agricultural planting system, including a mobile agricultural planting machine, in more detail, according to some examples of the present disclosure.
FIG. 8A-8B is a block diagram showing one example of a predictive model generator and predictive map generator.
FIGS. 9A-9B (collectively referred to herein as FIG. 9) show a flow diagram illustrating one example of operation of an agricultural system in generating a map.
FIG. 10 is a block diagram showing one example of a mobile machine in communication with a remote server environment.
FIGS. 11-13 show examples of mobile devices that can be used in an agricultural planting system.
FIG. 14 is a block diagram showing one example of a computing environment that can be used in an agricultural planting system.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

The present description relates to using in-situ data taken concurrently with an operation, in combination with prior or predicted data, such as prior or predicted data represented in a map, to generate a predictive model and a predictive map, such as a predictive ground engagement model and predictive ground engagement map. The predictive ground engagement map is used to control a mobile machine.

As discussed above, agricultural planting machines, such as planters or seeders, are often towed over soil where seed is delivered to furrows opened by row units on the agricultural planting machines. The row units on the agricultural planting machines follow the ground profile and maintain desired engagement with the soil by using a combination of a down force assembly to impart down force to the row units and gauge wheels to set depth of penetration of disk openers (furrow openers). The gauge wheels operably control a height of a frame of the agricultural planting machine from a surface of the ground to control a depth of engagement of the disk openers in the ground. Variance in characteristics of the field, such as topography, soil moisture, soil type, soil roughness, compaction, obstacles, as well as various other characteristics, can affect the performance of the agricultural planting machine in maintaining desired engagement with the ground. Changes in the field characteristics can cause the row units to dig further into the ground which can cause the seed furrow to be deeper than desired and thus the resulting placement of seeds to be suboptimal. Changes in the field characteristics can also cause the row to move away from the ground, which can cause the seed furrow to be shallower than desired and thus the resulting placement of seeds to be suboptimal. In some examples, the row unit can move away from the ground such that there is no ground contact and thus no furrow. This can result in no seed being planted in the soil. These are just some examples of the deleterious effects of changing field characteristics on ground engagement performance of the agricultural planter.

In some cases, sensor technology can be employed to detect the ground engagement performance of the agricultural planting or seeding machine, such as by detecting ground engagement characteristics, such as characteristics of ride quality, downforce margin, percent ground contact, and machine dynamics and subsequent control can be undertaken based on the sensor readings. However, such control can suffer from latencies in sensor readings as well as machine latencies. Thus, it would be desirable to provide a system that allows for pro-active control that can maintain desired performance through variable conditions. Pro-active control reduces (or eliminates) the problems associate with latency.

In one example, the present description relates to obtaining a map such as a topographic map. The topographic map includes geolocated values of topographic characteristics (topographic characteristic values, sometimes referred to herein as topographic values) across different locations at a worksite. For example, the topographic map can include elevation values indicative of the elevation of the worksite at various locations, as well as slope values indicative of the slope of the worksite at various locations. The topographic map, and the values therein, can be based on historical data, such as topographic data detected during previous operations at the worksite by the same mobile machine or by a different mobile machine. The topographic map, and the values therein, can be based on fly-over or satellite-based sensor data, such as LIDAR data of the worksite, as well as scouting data provided by a user or operator such as from a scouting operation of the worksite. These are merely some examples. The topographic map can be generated in a variety of other ways.

In one example, the present descriptions relate to obtaining a map such as a speed map. The speed map includes geolocated values of speed characteristics (speed characteristic values, sometimes referred to herein as speed values) of the mobile machine, such as travel speed values, acceleration values, and deceleration values. The speed map, and the values therein, can be a prescribed speed map that includes speed values that are prescribed for the particular operation, such as by an operator or user or a control system. The speed map, and the values therein, can be based on historical speed values during prior operations at the worksite such as prior operation by the same mobile machine or a different mobile machine. The speed map, and the values therein, can be a predictive speed map with predictive speed values. In one example, the predictive speed map is generated by obtaining an agricultural characteristic map of the field and a sensed speed, a sensed acceleration, and/or a sensed deceleration of the agricultural planter (such as speed data obtained from a data signal from a speed sensor) and determining a relationship between the obtained map, and the values therein, and the sensed speed data. The determined relationship, in combination with the obtained map, is used to generate a predictive speed map having predictive speed values. These are merely examples. The speed map can be generated in a variety of other ways.

In one example, the present description relates to obtaining a map such as a soil moisture map. The soil moisture map includes geolocated values of soil moisture at the field. The soil moisture map, and the values therein, can be based on soil moisture values detected during prior operations at the worksite such as prior operations by the same mobile machine or a different mobile machine. The soil moisture map, and the values therein, can be a predictive soil moisture map with predictive soil moisture values. In one example, the predictive soil moisture values can be based on images generated during a survey of the field, such as an aerial survey of the field. In another example, the predictive soil moisture map is generated by obtaining a map of the field that maps a characteristic to different locations at the field, and a sensed in-situ soil moisture (such as soil moisture data obtained from a data signal from a soil moisture sensor) and determining a relationship between the obtained map, and the values therein, and the in-situ sensed soil moisture data. The determined relationship, in combination with the obtained map, is used to generate a predictive soil moisture map having predictive soil moisture values. The soil moisture map can be based on historical soil moisture values. The soil moisture map can be based on soil moisture modeling, which may take into account, among other things, weather characteristics and characteristics of the field, such as topography, soil type, remaining crop stubble/residue, etc. These are merely some examples. The soil moisture map can be generated in a variety of other ways.

In one example, the present description relates to obtaining a map such as a soil type map. The soil type map includes geolocated values of soil type at the field. Soil type can refer to taxonomic units in soil science, wherein each soil type includes defined sets of shared properties. Soil types can include, for example, sandy soil, clay soil, silt soil, peat soil, chalk soil, loam soil, and various other soil types. Thus, the soil type map provides geolocated values of soil type at different locations in the field of interest which indicate the type of soil at those locations. The soil type map can be generated on the basis of data collected during another operation on the field of interests, for example, previous operations in the same season or in another season. The machines performing the previous operations can have on board sensors that detect characteristics indicative of soil type. Additionally, operating characteristics, machine settings, or machine performance characteristics during previous operations can be indicative of soil type. In other examples, surveys of the field of interest can be performed, either by various machines with sensors such as imaging systems (e.g., an aerial survey) or by humans. For example, samples of the soil at the field of interest can be taken at one or more locations and observed or lab tested to identify the soil type at the different location(s). In some examples, third-party service providers or government agencies, for instance, the USDA Natural Resources Conservation Services (NRCS), the United States Geological Survey (USGS), as well as various other parties may provide data indicative of soil type at the field of interest. The soil type map can be generated in a variety of other ways.

In one example, the present description relates to obtaining a map such as a soil roughness map. The soil roughness map illustratively maps georeferenced values of soil roughness across different geographic locations in a field of interest. Soil roughness is a measure of the irregularity of the soil surface within an area of interest. Soil roughness can be measured by obtaining a surface profile of the soil surface, such as from imaging systems or optical sensors that may be on-board machines operating at the field of interest earlier in the same season or in a previous season, or on-board a machine performing an aerial survey of the field. In other examples, machines performing prior operations on the worksite may include sensors that detect characteristics indicative of soil roughness, such as inertial measurement units which can indicate machine dynamics, such as pitch, roll, or yaw, as well as machine bouncing. The soil roughness map can be generated in a variety of other ways.

In one example, the present description relates to obtaining a map such as an irrigation map. The irrigation map illustratively maps georeferenced values of irrigation characteristics across different geographic locations in a field of interest. The irrigation characteristics can include location information indicative of locations on the field of interest where irrigation substance (e.g., water) was applied and/or was not applied, the timing of the application of irrigation substance, and the amount of irrigation substance applied. The irrigation map may be derived from sensor readings during one or more prior irrigation operations at the field of interest. For example, the irrigation machine may include one or more sensors, such as one or more of flow rate sensors, pressure sensors, geographic position sensors, timing circuitry (e.g., a clock) as well as various other sensors, that may provide sensor data indicative of irrigation characteristics. In other examples, the irrigation map may be derived in other ways. In one example, the present description relates to obtaining a map such as a tillage map. The tillage map illustratively maps georeferenced tillage characteristic values across different geographic locations in a field of interest. The tilling characteristics can include location information indicative of locations on the field of interest where tilling occurred and/or where tilling did not occur, operating parameters of the tillage machine (such as operating depth, aggressiveness, speed, etc.), tillage quality (e.g., the clods of dirt, residue, or other debris left o the surface, surface profile, etc.), and the timing of the tillage operation. The tilling map may be derived from sensor readings during one or more prior tillage operations at the field of interest. For example, the tillage machine may include one or more sensors, such as operating characteristic sensors (e.g., speed sensors, position sensors, etc.), geographic position sensors, timing circuitry (e.g., a clock), as well as various other sensors, that may provide data indicative of tillage characteristics. In other examples, the tillage map may be derived in other ways.

In one example, the present description relates to obtaining a map such as a traffic map. The traffic map included geolocated values of traffic characteristics at the field, which can indicate the locations of machine tire or track (or other traction elements) travel paths at the field as well as the presence and/or the dimension of ruts at different locations in the field. The traffic map, and the values therein, can be based on a survey of the field, such as an aerial survey using imaging systems or other optical sensors. In other example, the traffic map, and the values therein, can be based on data from previous operations on the field of interest, such as previous operations earlier in the same season on in a previous season. For instance, sensor data, such as sensor data indicative of machine location, wheel or track slippage, machine sinking, as well as various other sensor data can be used to generate the traffic map. The traffic map can be generated in a variety of other ways.

In one example, the present description relates to obtaining a map such as a compaction map. The compaction map includes geolocated values of compaction at the field. The compaction map, and the values therein, can be based on survey of a field, such as a survey utilizing a soil penetrometer that generates sensor data indicative of compaction at one or more locations at the field. In another example, the compaction map, and the values therein, can be based on data from prior operations on the field, such as the number and type of machines that operated on the field, the number of passes over various locations on the field, and the type of operation performed. In other examples, compaction map can be based on a combination of data, such as soil moisture data, soil type data, as well as data from prior operation(s) on the field. These are merely some examples. The compaction map can be generated in a variety of other ways. In one example, the present description relates to obtaining in-situ data from in-situ sensors on the mobile agricultural machine taken concurrently with an operation. The in-situ sensor data can include ground engagement characteristic data generated by ground engagement characteristic sensors. The ground engagement characteristic data and corresponding ground engagement characteristic sensors can include one or more of: in-situ downforce margin data generated by in-situ downforce margin sensors; in-situ ride quality data generated by in-situ ride quality sensors; in-situ percent ground contact data generated by in-situ percent ground contact sensors; and in-situ machine dynamics data generated by in-situ machine dynamics sensors. The various in-situ data is derived from various in-situ sensors on the mobile machine, as will be described in further detail herein. These are merely some examples of the in-situ data and in-situ sensors contemplated herein.

The present discussion proceeds, in some examples, with respect to systems that obtain one or more maps of a field, such as one or more of a topographic map, a speed map, a soil moisture map, a soil type map, a soil roughness map, an irrigation map, a tillage map, a traffic map, a compaction map, as well as various other types of maps and also use an in-situ sensor to detect a variable indicative of an agricultural characteristic value, such as a ground engagement characteristic value. The systems generate a model that models a relationship between the values on the obtained map(s) and the output values from the in-situ sensor. The model is used to generate a predictive map that predicts agricultural characteristic values, such as ground engagement characteristic values, for example, one or more of downforce margin values, ride quality values, percent ground contact values, and machine dynamics values. The predictive map, generated during an operation, can be presented to an operator or other user or used in automatically controlling a mobile agricultural machine during an operation or both. In some examples, the predictive map can be used to control one or more of a travel speed, downforce, deceleration of the mobile machine, depth, closing/packing wheel force, ride suspension settings, as well as various other parameters.

While the various examples described herein proceed with respect to agricultural planters, it will be appreciated that the systems and methods described herein are applicable to various other types of agricultural planting machines including, but not limited to, seeders, such as air seeders, and drills.

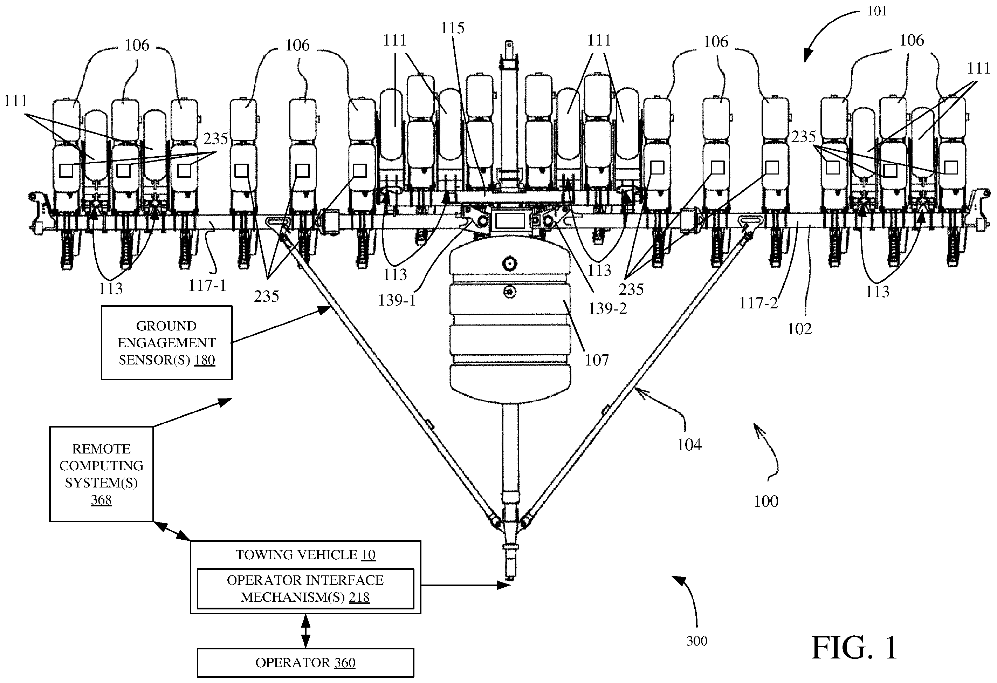

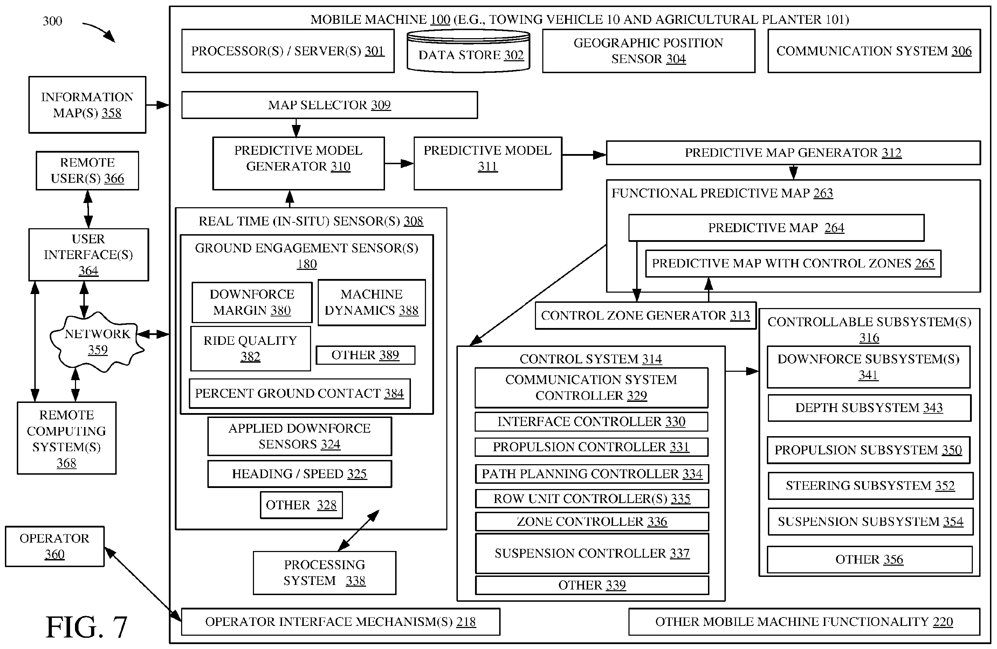

FIG. 1 is a partial pictorial, partial schematic top view of one example of an agricultural planting system architecture 300 that includes a mobile agricultural planting machine 100 that includes mobile agricultural planting implement 101 (or planter) and towing vehicle 10 that can be operated by an operator 360. In the illustrated example, agricultural system architecture 300 also includes a remote computing system 368. FIG. 1 also illustrates that mobile agricultural planter 101 can include one or more ground engagement sensors 180 which sense ground engagement characteristic values, such as downforce margin values, ride quality values, percent ground contact values, and machine dynamics values. Ground engagement sensors 180 are described in greater detail below. Various components of agricultural system architecture 300 (shown in more detail in FIG. 7) can be on individual parts of agricultural planter 101, centrally located on agricultural planter 101, towing vehicle 10, or remote computing systems 368, or can be distributed in various ways across two or more of agricultural planter 101, towing vehicle 10, and remote computing systems 368. Operator 360 can illustratively interact with operator interface mechanisms 218 to manipulate and control towing vehicle 10, remote computing systems 368, and at least some portions of agricultural planter 101.

While the various examples herein describe a planting machine consisting of planting implement and a towing vehicle, in other examples, it may be that the machine that carries the ground engaging tools also includes a propulsion subsystem, that is, in some examples, the planter could be self-propelled and not require a separate towing vehicle.

Agricultural planter 101 is a row crop planting machine that illustratively includes a toolbar 102 that is part of a frame 104. FIG. 1 also shows that a plurality of planting row units 106 are mounted to the toolbar 102. Agricultural planter 101 can be towed behind towing vehicle 10, such as a tractor. FIG. 1 shows that material, such as seed, fertilizer, etc. can be stored in a tank 107 and pumped, using one or more pumps, through supply lines to the row units. The seed, fertilizer, etc., can also be stored on the row units themselves. As shown in the illustrated example of FIG. 1, each row unit can include a respective row unit controller 235 which can be used to control operating parameters of each row unit, such as the downforce, operating depth, as well as various other operating parameters. Agricultural planter 101 includes a set of frame wheels 111, attached to tool bar 102 or another frame, that support the planter over the surface at which it operates. Agricultural planter includes a suspension subsystem. Frane wheels include a respective controllable suspension 113 (e.g., air suspension, hydraulic suspension, electromechanical suspension, etc.) which is controllably adjusted, such as by controlling an amount or pressure of fluid (e.g., air or hydraulic fluid) or controlling resistance. The suspension 113 is controlled to control a height of tool bar 102 relative to the field.

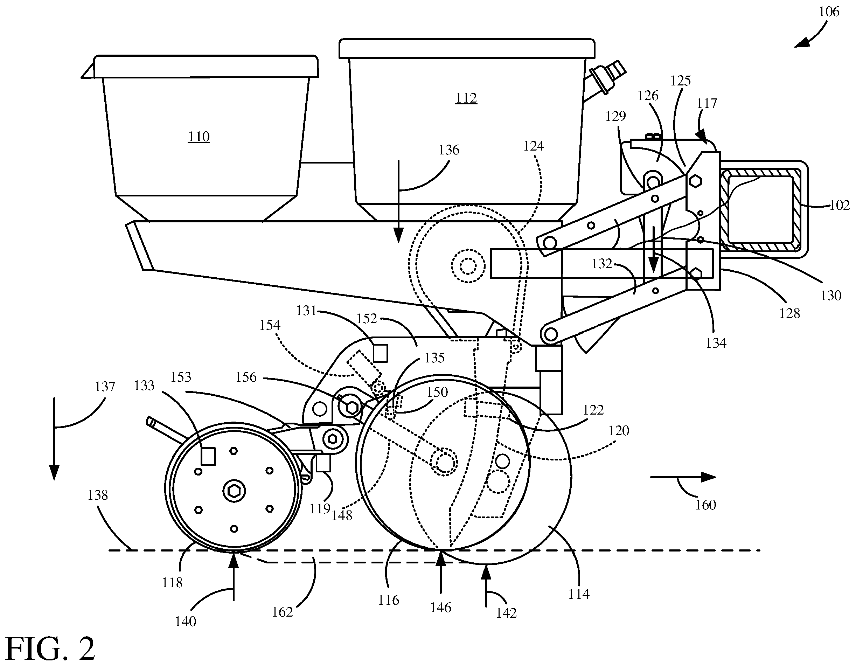

In some examples, implement 101 comprises multiple sections, such as center section (or frame) 115 and wing sections (or wing frames) 117 (117-1 and 117-2). The wing sections, in some examples, can be deployable between a transport position (not shown) and an operating (or deployed) position (shown in FIG. 1) by operation of respective actuators 139-1 and 139-2 which actuate to fold and unfold the wing sections 117. The actuators 139 can be various types of actuators, such as hydraulic actuators, pneumatic actuators, electromechanical actuators, etc. In addition to folding and unfolding the wing sections, the actuators 139 can controllably vary a downforce applied to the wing sections 117. Such adjustment can also function to shift weight or load to the various different sections of the implement 101, for instance shifting weight or load to the center section 115 which is in the path of the towing vehicle 10 or shifting weight from the center section 115 to one or more of the wing sections 117. In other examples, the sections wing sections 117 may not be foldable and unfoldable, and thus, actuators 139 only act to controllably vary a downforce applied to wing sections 117. In some examples, instead of foldable wing section or in addition to foldable wing sections, row unit downforce generators (shown in FIG. 2) can raise and lower the row units 106, such as raise the row units 106 for road transport or the actuators 113 can raise and lower the toolbar 102 or another frame, such as to raise the machine for road transport, or both. FIG. 2 is a side view showing one example of a row unit 106. In the example shown in FIG. 2, row unit 106 illustratively includes a chemical tank 110 and a seed storage tank 112. It also illustratively includes a furrow opener 114 (e.g., a double disk opener) that opens a furrow 162, a set of gauge wheels 116, and a furrow closer118 (e.g., a set of closing wheels) that close furrow 162. Seeds from tank 112 are fed by gravity into a seed meter 124. The seed meter 124 controls the rate which seeds are dropped into a seed tube 120 or other seed delivery system, such as a brush belt or flighted brush belt (both shown below) from seed storage tank 112. The seeds can be sensed by a seed sensor 119 or 122, or both.

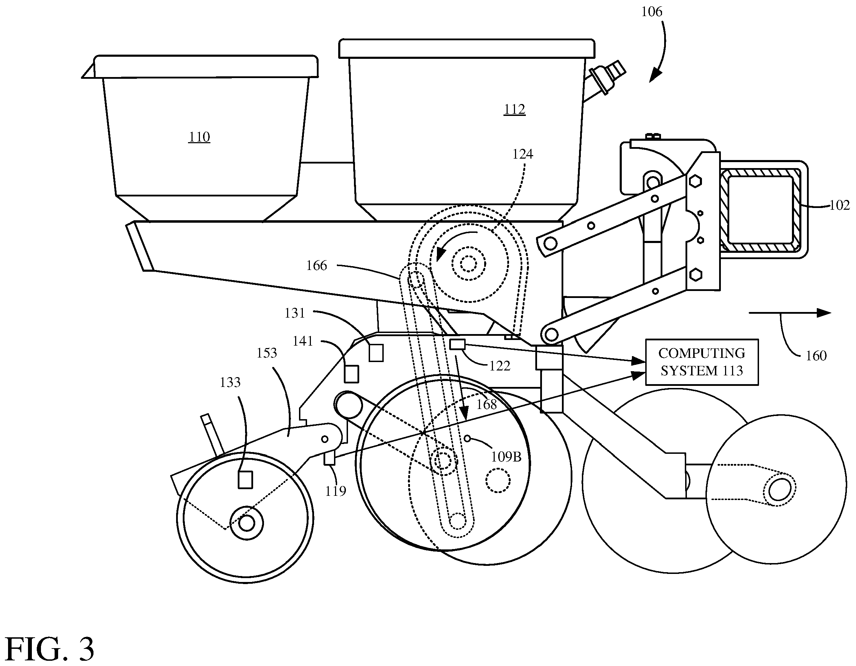

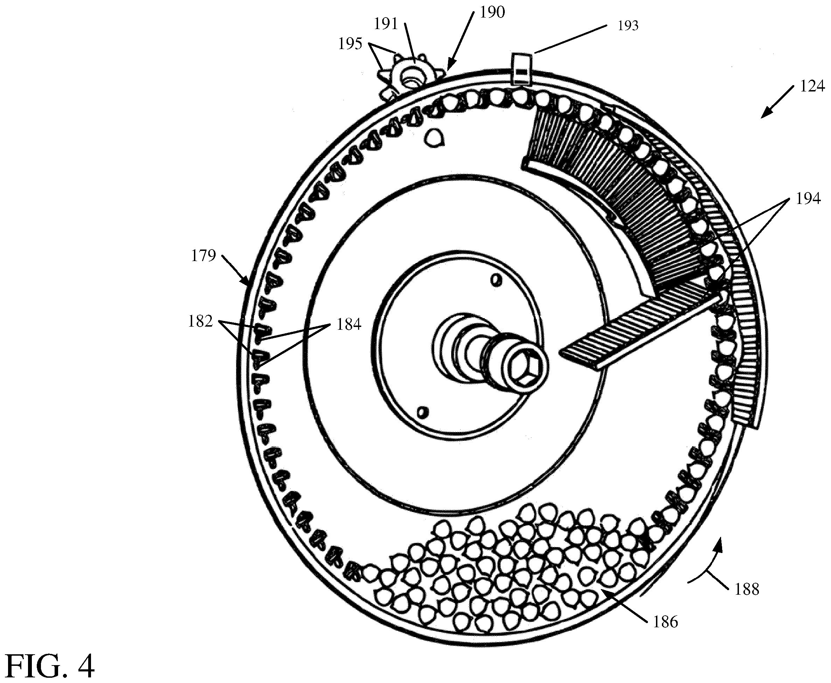

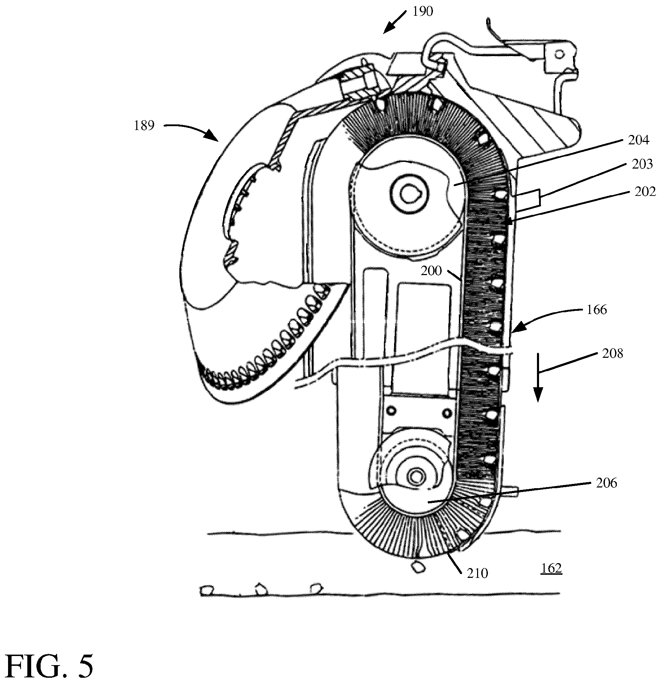

Some parts of the row unit 106 will now be discussed in more detail. First, it will be noted that there are different types of seed meters 124, and the one that is shown is shown for the sake of example only and is described in greater detail below with respect to FIG. 4. For instance, in one example, each row unit 106 need not have its own seed meter. Instead, metering or other singulation or seed dividing techniques can be performed at a central location, for groups of row units 106. The metering systems can include rotatable disks, rotatable concave or bowl-shaped devices, among others. The seed delivery system can be a gravity drop system (such as seed tube 120 shown in FIG. 2) in which seeds are dropped through the seed tube 120 and fall (via gravitational force) through the seed tube and out the outlet end 121 into the furrow (or seed trench) 162. Other types of seed delivery systems are assistive systems, in that they do not simply rely on gravity to move the seed from the metering system into the ground. Instead, such systems actively capture the seeds from the seed meter and physically move the seeds from the meter to a lower opening where the exit into the ground or trench. Some examples of these assistive systems are described in greater detail below with respect to FIGS. 3 and 5.

A downforce generator or actuator 126 is mounted on a coupling assembly 128 that couples row unit 106 to toolbar 102. Downforce actuator 126 can be a hydraulic actuator, a pneumatic actuator, a spring-based mechanical actuator or a wide variety of other actuators. In the example shown in FIG. 2, a rod 130 is coupled to a parallel linkage 132 and is used to exert an additional downforce (in the direction indicated by arrow 134) on row unit 106. The total downforce (which includes the force indicated by arrow 134 exerted by actuator 126, plus the force due to gravity acting on the row unit 106, and indicated by arrow 136) is offset by upwardly directed forces acting on closing wheels 118 (from ground 138 and indicated by arrow 140) and furrow opener 114 (again from ground 138 and indicated by arrow 142). The remaining force (the sum of the force vectors indicated by arrows 134 and 136, minus the force indicated by arrows 140 and 142) and the force on any other ground engaging component on the row unit (not shown), is the differential force indicated by arrow 146. The differential force may also be referred to herein as downforce margin. The force indicated by arrow 146 acts on the gauge wheels 116. This load can be sensed by a gauge wheel load sensor 135 which may located anywhere on row unit 106 where it can sense that load. It can also be placed where the sensor 135 may not sense the load directly, but a characteristic indicative of that load. For example, it can be disposed near a set of gauge wheel control arms (or gauge wheel arm) 148 that movably mount gauge wheels to shank 152 and control an offset between gauge wheels 116 and the disks in double disk opener 114 to control planting depth. Percent ground contact is a measure of a percentage of time that the load (downforce margin) on the gauge wheels 116 is zero (indicating that the gauge wheels are out of contact with the ground). The percent ground contact is calculated on the basis of sensor data provided by the gauge wheel load sensor 135. In one example, the gauge wheel load sensor 135 is incorporated into the mechanical stop 150.

In addition, there may be other separate and controllable downforce actuators, such as one or more of a closing wheel downforce actuator 153 that controls the downforce exerted on furrow closer 118. Closing wheel downforce actuator 153 can be a hydraulic actuator, a pneumatic actuator, a spring-based mechanical actuator or a wide variety of other actuators. The downforce exerted by closing wheel downforce actuator 153 is represented by arrow 137. It will be understood that each row unit 106 can include the various components described with reference to FIGS. 2-6.

In the illustrated example, arms (or gauge wheel arms) 148 illustratively abut a mechanical stop (or arm contact member or wedge) 150. The position of mechanical stop 150 relative to shank 152 can be set by a planting depth actuator assembly 154. Control arms 148 illustratively pivot around pivot point 156 so that, as planting depth actuator assembly 154 actuates to change the position of mechanical stop 150, the relative position of gauge wheels 116, relative to the furrow opener 114, changes, to change the depth at which seeds are planted (e.g., the planting depth).

In operation, row unit 106 travels generally in the direction indicated by arrow 160. The furrow opener 114 opens the furrow 162 in the soil 138, and the depth of the furrow 162 is set by planting depth actuator assembly 154, which, itself, controls the offset between the lowest parts of gauge wheels 116 and furrow opener 114. Seeds are dropped through seed tube 120 into the furrow 162 and furrow closer 118 closes the soil.

As the seeds are dropped through seed tube 120, they can be sensed by seed sensor 122. Some examples of seed sensor 122 are an optical sensor or a reflective sensor, and can include a radiation transmitter and a receiver. The transmitter emits electromagnetic radiation and the receiver the detects the radiation and generates a signal indicative of the presences or absences of a seed adjacent to the sensor. These are just some examples of seed sensors. Row unit 106 also includes furrow sensor 119 can be used in addition to, or instead of, seed sensor 122. Furrow sensor 119 performs in-furrow sensing, including in-furrow seed sensing. Some examples of furrow sensor 119 are an optical sensor or a reflective sensor.

In addition to seed sensors and furrow sensors, the individual row units 106 can include a wide variety of different types of sensors, such as different types of ground engagement sensors 180, some examples of which are illustrated in FIGS. 2-3. For instance, ground engagement sensors 180 can include a ride quality sensor 131, such as an accelerometer that senses acceleration (bouncing) of row unit 106 (or planter 101). In the example shown in FIG. 2, accelerometer 131 is shown mounted to shank 152. This is only an example. In other examples, accelerometer 131 can be mounted in other places as well, such as on toolbar 102 or frame 104. In some examples, accelerometer 131 can be a single axis or a multi-axis (e.g., three axis) accelerometer. In some examples, accelerometer 131 is part of an inertial measurement unit which senses, in addition to acceleration of row unit 106, other characteristics such as position and orientation (e.g., pitch, roll, and yaw). For example, ground engagement sensors 180 can include machine dynamics sensors 141 that sense machine dynamics characteristics (e.g., pitch, roll, and yaw) of each row unit 106 or of planter 101. Machine dynamics sensors 141 can include inertial measurement units, which can include, among other things (e.g., gyroscopes, magnetometers, etc.), an accelerometer, such as accelerometer 131. Thus, while ride quality sensors 131 and machine dynamics sensors 141 are shown as separate, in some examples, ride quality and machine dynamics may be sensed by the same sensor system. Additionally, machine dynamics sensors 141 are shown mounted to shank 152, in other examples, machine dynamics sensors 141 can be mounted in other places as well, such as on toolbar 102 or frame 104.

Ground engagement sensors 180 can also include one or more closing wheel downforce sensors 133 which can be used to detect downforce margin and percent ground contact at the furrow closer 118. Ground engagement sensors 180 can also include one or more gauge wheel downforce sensors 135 which can be used to detect downforce margin and percent ground contact at the gauge wheels 116.

As an illustrative example, downforce actuator 126 can apply a downforce of 200 pounds (lbs.) (as represented by arrow 134), the weight of the row unit 106 may be 100 lbs. (as represented by arrow 137), and the ground resistance (or force applied on the gauge wheels 116 by the ground) may be 150 lbs. (as represented by arrow 146). Thus, the downforce margin at the gauge wheels is the difference between total downforce of 300 lbs. (200 lbs. applied downforce and 100 lbs. weight of the row unit) and the ground resistance of 150 lbs. Thus, in the example, the downforce margin is 150 lbs. Over a span of time, the percent ground contact can be detected by calculating a percentage of time that the ground resistance force (as detected by downforce sensors 135) is zero. Thus for a span of time T₁ to T₁₀ the ground resistance may have measured zero once (e.g., at T₆). Thus, the percent ground contact for the span of time T₁ to T₁₀ is 90%. FIG. 3 is similar to FIG. 2, and similar items are similarly numbered. However, instead of the seed delivery system being a seed tube 120 which relies on gravity to move the seed to the furrow 162, the seed delivery system shown in FIG. 3 is an assistive seed delivery system 166. Assistive seed delivery system 166 also illustratively has a seed sensor 122 disposed therein. Seed sensor 119 can be used in addition to, or instead of, seed sensor 122. Seed sensor 119 performs in-trench sensing, including in-trench seed sensing. Assistive seed delivery system 166 captures the seeds as they leave seed meter 124 and moves them in a direction indicated by arrow 168 toward furrow 162. System 166 has an outlet end 170 where the seeds exit system 166 into furrow 162 where the again reach their final seed position. FIG. 4 shows one example of a rotatable mechanism that can be used as part of the seed metering system (or seed meter) 124. The rotatable mechanism includes a rotatable disc, or concave element, 179. Concave element 179 has a cover (not shown) and is rotatably mounted relative to the frame of row unit 106. Rotatable concave element 179 is driven by a motor (not shown) and has a plurality of projections or tabs 182 that are closely proximate corresponding apertures 184. A seed pool 186 is disposed generally in a lower portions of an enclosure formed by rotating concave element 179 and its corresponding cover. Rotatable concave element 179 is rotatably driven by its motor (such as an electric motor, a pneumatic motor, a hydraulic motor, etc.) for rotation generally in the direction indicated by arrow 188, about a hub. A pressure differential is introduced into the interior of the metering mechanism so that the pressure differential influences seeds from seed pool 186 to be drawn to apertures 184. For instance, a vacuum can be applied to draw the seeds from seed pool 186 so that they come to rest in apertures 184, where the vacuum holds them in place. Alternatively, a positive pressure can be introduced into the interior of the metering mechanism to create a pressure differential across apertures 184 to perform the same function.

Once a seed comes to rest in (or proximate) an aperture 184, the vacuum or positive pressure differential acts to hold the seed within the aperture 184 such that the seed is carried upwardly generally in the direction indicated by arrow 188, from seed pool 186, to a seed discharge area 190. It may happen that multiple seeds are residing in an individual seed cell. **In** that case, a set of brushes or other members 194 that are located closely adjacent the rotating seed cells tend to remove the multiple seeds so that only a single seed is carried by each individual cell. Additionally, a seed sensor 193 can also illustratively be mounted adjacent to rotating element 189. Seed sensor 193 detects and generates a signal indicative of seed presence. Once the seeds reach the seed discharge area 190, the vacuum or other pressure differential is illustratively removed, and a positive seed removal wheel or knock-out wheel 191, can act to remove the seed from the seed cell. Wheel 191 illustratively has a set of projections 195 that protrude at least partially into apertures 184 to actively dislodge the seed from those apertures. When the seed is dislodged (such as seed 171), it is illustratively moved by the seed tube 120, seed delivery system 166 (some examples of which are shown above in FIGS. 2-3 and below in FIGS. 5-6) to the furrow 162 in the ground.

FIG. 5 shows an example where the rotating element 189 is positioned so that its seed discharge area 190 is above, and closely proximate, assistive seed delivery system 166. In the example shown in FIG. 5, assistive seed delivery system 166 includes a transport mechanism such as a belt 200 with a brush that is formed of distally extending bristles 202 attached to belt 200 that act as a receiver for the seeds. Belt 200 is mounted about pulleys 204 and 206. One of pulleys 204 and 206 is illustratively a drive pulley while the other is illustratively an idler pulley. The drive pulley is illustratively rotatably driven by a conveyance motor (not shown), which can be an electric motor, a pneumatic motor, a hydraulic motor, etc. Belt 200 is driven generally in the direction indicated by arrow 208

Therefore, when seeds are moved by rotating element 189 to the seed discharge area 190, where they are discharged from the seed cells in rotating element 189, they are illustratively positioned within the bristles 202 by the projections 182 that push the seed into the bristles. Assistive seed delivery system 166 illustratively includes walls that form an enclosure around the bristles, so that, as the bristles move in the direction indicated by arrow 208, the seeds are carried along with them from the seed discharge area 190 of the metering mechanism, to a discharge area 210 either at ground level, or below ground level within a trench or furrow 162 that is generated by the furrow opener 114 on the row unit 106.

Additionally, a seed sensor 203 is also illustratively coupled to assistive seed delivery system 166. As the seeds are moved in bristles 202 past sensor 203, sensor 203 can detect the presence or absence of a seed. Some examples of seed sensor 203 includes an optical sensor or reflective sensor.

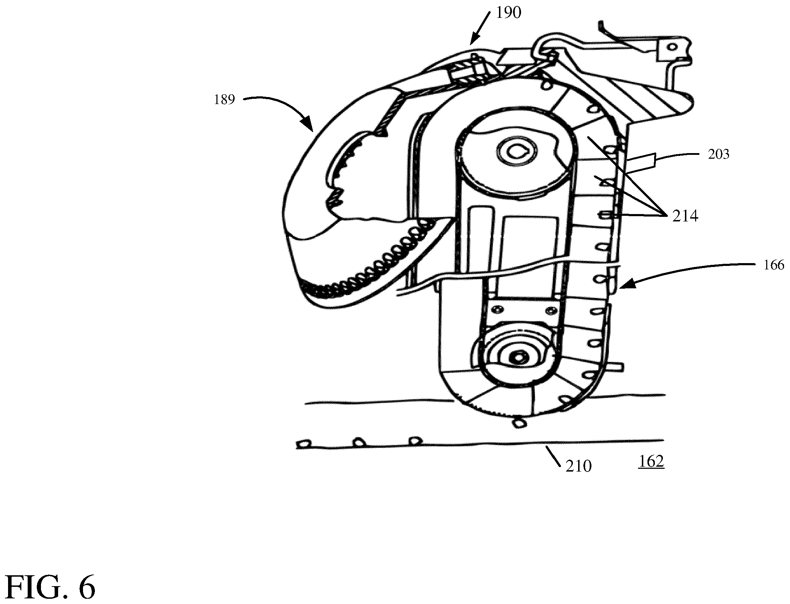

FIG. 6 is similar to FIG. 5, except that seed delivery system 166 is not formed by a belt with distally extending bristles. Instead, it is formed by a flighted belt (transport mechanism) in which a set of paddles 214 form individual chambers (or receivers), into which the seeds are dropped, from the seed discharge area 190 of the metering mechanism. The flighted belt moves the seeds from the seed discharge area 190 to the exit end 210 of the flighted belt, within the trench or furrow 162.

There are a wide variety of other types of seed delivery systems as well, that include a transport mechanism and a receiver that receives a seed. For instance, they include dual belt delivery systems in which opposing belts receive, hold and move seeds to the furrow, a rotatable wheel that has sprockets which catch seeds from the metering system and move them to the furrow, multiple transport wheels that operate to transport the seed to the furrow, an auger, among others.

FIG. 7 is a block diagram showing some portions of an agricultural planting system architecture 300. FIG. 7 shows that agricultural planting system architecture 300 includes mobile machine 100, one or more remote computing systems 368, one or more remote user interfaces 364, network 359, and one or more information maps 358. Mobile machine 100, itself, illustratively includes one or more processors or servers 301, data store 302, geographic position sensor 304, communication system 306, one or more in-situ sensors 308 that sense one or more characteristics of a worksite concurrent with an operation, and a processing system 338 that processes the sensors data (e.g., sensor signals, images, etc.) generated by in-situ sensors 308 to generate processed sensor data. The in-situ sensors 308 generate values corresponding to the sensed characteristics. Mobile machine 100 also includes a predictive model or relationship generator (collectively referred to hereinafter as "predictive model generator 310"), predictive model or relationship (collectively referred to hereinafter as "predictive model 311"), predictive map generator 312, control zone generator 313, control system 314, one or more controllable subsystems 316, and an operator interface mechanism 318. The mobile machine can also include a wide variety of other machine functionality 320. The in-situ sensors 308 can be on-board mobile machine 100, remote from mobile machine, such as deployed at fixed locations on the worksite or on another machine operating in concert with mobile machine 100, such as an aerial vehicle, and other types of sensors, or a combination thereof. In-situ sensors 308 sense characteristics of a worksite during the course of an operation. In-situ sensors 308 illustratively include ground engagement sensors 180, applied downforce sensors 324, heading/speed sensors 325, and can include various other sensors 328, such as the various other sensors described in FIGS. 1-6. Ground engagement sensors 180 illustratively include one or more downforce margin sensors 380 (e.g., 133, 135, etc.), one or more ride quality sensors 382 (e.g., 131, etc.), one or more percent ground contact sensors 384 (e.g., 133, 135, etc.), one or more machine dynamics sensors 388 (e.g., 141, etc.), and can include other types of ground engagement sensors 389. Ground engagement sensors 180 provide sensors data indicative of ground engagement characteristics, such as downforce margin, ride quality, percent ground contact, and machine dynamics.

Downforce margin sensors 380 detect a margin of the total downforce of row unit 106 that is exerted on gauge wheels 116. Thus, downforce margin sensors 380 illustratively detect the downforce of gauge wheels 116. Downforce margin sensors 380 can include load cells, strain gauges, pressure sensors, as well as various other types of downforce sensors. One example of a downforce margin sensor is gauge wheel downforce sensor 135 shown in FIGS. 2-3. To maintain a desired depth of a furrow throughout a planting operation, gauge wheels 116 need to maintain a given (setpoint, threshold, etc.) downforce with the soil over which the gauge wheels 116 travel. Variation in the downforce of gauge wheels 116 can indicate inconsistent ground engagement of the gauge wheels 116 with the soil over which they travel and thus variation in the depth of the furrow, as well as various other deleterious effects. As described above, down force margin is the difference between total downforce (sum of applied downforce and weight of row unit) and ground resistance.

Ride quality sensors 382 detect ride quality characteristics, such as an acceleration (bouncing) of row units 106 or agricultural planter 101, or both. Ride quality sensors 382 can include accelerometers, such as 1 to 3 axis accelerometers which sense acceleration (bouncing) of the row units 106 or agricultural planter 101, in 1 to 3 axes (e.g., the z, or vertical, axis, the y, or front-to-back axis, and/or the x, or side-to-side, axis). In some examples, the accelerometers are part of an inertial measurement unit, which in addition to sensing acceleration, or bouncing, of the agricultural planter 101 or row units 106, or both, sense various other characteristics such as machine orientation (e.g., pitch, roll, and yaw) with various other sensors, such as gyroscopes. The acceleration or bouncing of agricultural planter 101 or row units 106, or both, can indicate variation of engagement with the soil over which the agricultural planter or row units 106 are traveling. Variation in engagement with the soil can lead to variation in depth of the furrow, along with various other deleterious effects.

Percent ground contact sensors 384 illustratively sense when the downforce value of gauge wheels 116 is such that there is no downforce exerted by gauge wheels 116 on the soil over which gauge wheels 116 travel. In one example, percent ground contact sensors 384 utilize signals received from other sources, such as downforce margin sensors 380 (such as gauge wheel downforce sensors 135). Thus, while percent ground contact sensors 384 as described herein are shown as separate from downforce margin sensors 380, in some examples, percent ground contact is derived from signals received from downforce margin sensors 380 and subsequent processing (e.g., by processing system 338). Percent ground contact value represents a percentage of time (over a given period of time or over a given distance traveled) that gauge wheels 116 exerted downforce on the soil over which they travel (and thus were in contact with the soil). Lack of downforce exerted by gauge wheels 116 indicates variation in ground engagement. Variation in engagement with the soil can lead to variation in depth of the furrow, along with various other deleterious effects.

Machine dynamics sensors 388 illustratively sense dynamics of agricultural planter 101 or row units 106, or both, such as orientation (e.g., pitch, roll, and yaw). Machine dynamics sensors 388 can include various types of sensors, such as gyroscopes. In one example, the gyroscopes can be part of an inertial measurement unit (IMU), which in addition to sensing orientation, also sense various other characteristics such as acceleration or bouncing with various other sensors, such as accelerometers. The orientation of the agricultural planter 101 or row units 106 may have an effect on the performance of the agricultural planter 101 or row units 106, such as by affecting the engagement of various components of the agricultural planter 101 or row units 106 with the soil which may effect the depth of the furrow, along with various other deleterious effects.

Applied downforce sensors 324 illustratively detect a downforce applied by downforce subsystems 341 (e.g., actuators 126, 153, 139. etc.). Applied downforce sensors 136 can be in the form of pressure sensors that sense, for instance, a pressure used to apply downforce, such as a hydraulic pressure or pneumatic pressure. Applied downforce can be used in the calculation of downforce margin. In other examples, applied downforce sensors 324 may sense an operator, user, or control system input that establishes an applied downforce setting. Heading/speed sensors 325 detect a heading and speed at which mobile machine 100 is traversing the worksite during the operation. This can include sensors that sense the movement of ground-engaging elements (e.g., wheels or tracks of towing vehicle 10 or agricultural planter 101, or both) or can utilize signals received from other sources, such as geographic position sensor 304, thus, while heading/speed sensors 325 as described herein are shown as separate from geographic position sensor 304, in some examples, machine heading/speed is derived from signals received from geographic positions sensor 304 and subsequent processing. In other examples, heading/speed sensors 325 are separate sensors and do not utilize signals received from other sources.

Other in-situ sensors 328 may be any of the sensors described above with respect to FIGS. 1-6, such as one or more seed sensors. Other in-situ sensors 328 can be on-board mobile machine 100 or can be remote from mobile machine 100, such as other in-situ sensors 328 on-board another mobile machine that capture in-situ data of the worksite or sensors at fixed locations throughout the worksite. The remote data from remote sensors can be obtained by mobile machine 100 via communication system 206 over network 359.

In-situ data includes data taken from a sensor on-board the mobile machine 100 or taken by any sensor where the data are detected during the operation of mobile machine 100 at a worksite.

Processing system 338 processes the sensor signals generated by in-situ sensors 308 to generate processed sensor data indicative of one or more characteristics. For example, processing system generates processed sensor data indicative of characteristic values based on the sensor data generated by in-situ sensors 308, such as ground engagement characteristic values based on sensors data generated by ground engagement sensors 180, for instance downforce margin values based on sensor data generated by downforce margin sensors 380, ride quality values based on sensor data generated by ride quality sensors 382, percent ground contact values based on sensor data generated by percent ground contact sensors 384, or machine dynamics values based on sensor data generated by machine dynamics sensors 388, as well as various other ground engagement characteristic values based on sensor data generated by various other ground engagement sensors 389. Processing system 338 also processes sensor signals generated by other in-situ sensors 308 to generate processed sensor data indicative of other characteristic values, for instance applied downforce values based on sensor data generated by applied downforce sensors 324, machine speed (travel speed, acceleration, deceleration, etc.) values based on sensor data generated by heading/speed sensors 325, as well as various other values based on sensors signals generated by various other in-situ sensors 328.

It will be understood that processing system 338 can be implemented by one or more processers or servers, such as processors or servers 301. Additionally, processing system 338 can utilize various sensor signal filtering techniques, noise filtering techniques, sensor signal categorization, aggregation, normalization, as well as various other processing functionality. Similarly, processing system 338 can utilize various image processing techniques such as, sequential image comparison, RGB, edge detection, black/white analysis, machine learning, neural networks, pixel testing, pixel clustering, shape detection, as well any number of other suitable image processing and data extraction functionality.

FIG. 7 also shows remote users 366 interacting with mobile machine 100 or remote computing systems 368, or both, through user interfaces mechanisms 364 over network 359. Remote computing systems 368 can be a wide variety of different types of systems, or combinations thereof. For example, remote computing systems 368 can be in a remote server environment. Further, remote computing systems 368 can be remote computing systems, such as mobile devices, a remote network, a farm manager system, a vendor system, or a wide variety of other remote systems. In one example, mobile machine 100 can be controlled remotely by remote computing systems or by remote users 366, or both. As will be described below, in some examples, one or more of the components shown being disposed on mobile machine 100 in FIG. 7 can be located elsewhere, such as at remote computing systems 368. FIG. 7 also shows that an operator 360 may operate mobile machine 100. The operator 360 interacts with operator interface mechanisms 318. In some examples, operator interface mechanisms 318 may include joysticks, levers, a steering wheel, linkages, pedals, buttons, dials, keypads, user actuatable elements (such as icons, buttons, etc.) on a user interface display device, a microphone and speaker (where speech recognition and speech synthesis are provided), among a wide variety of other types of control devices. Where a touch sensitive display system is provided, operator 360 may interact with operator interface mechanisms 238 using touch gestures. These examples described above are provided as illustrative examples and are not intended to limit the scope of the present disclosure. Consequently, other types of operator interface mechanisms 318 may be used and are within the scope of the present disclosure.

FIG. 7 also shows that mobile machine 100 can obtain one or more information maps 358. As described herein, the information maps 358 include, for example, a topographic map, a speed map, a soil moisture map, a soil type map, a soil roughness map, an irrigation map, a tillage map, a traffic map, a compaction map, as well as various other maps. However, information maps 358 may also encompass other types of data, such as other types of data that were obtained prior to a planting operation or a map from a prior operation. In other examples, information maps 358 can be generated during a current operation, such a map generated by predictive map generator 312 based on a predictive model 311 generated by predictive model generator 310.

Information maps 358 may be downloaded onto mobile machine 100 over network 359 and stored in data store 302, using communication system 306 or in other ways. In some examples, communication system 306 may be a cellular communication system, a system for communicating over a wide area network or a local area network, a system for communicating over a near field communication network, or a communication system configured to communicate over any of a variety of other networks or combinations of networks. Network 264 illustratively represents any or a combination of any of the variety of networks. Communication system 306 may also include a system that facilitates downloads or transfers of information to and from a secure digital (SD) card or a universal serial bus (USB) card or both.

Geographic position sensors 304 illustratively sense or detect the geographic position or location of mobile machine 100. Geographic position sensors 304 can include, but are not limited to, a global navigation satellite system (GNSS) receiver that receives signals from a GNSS satellite transmitter. Geographic position sensors 304 can also include a real-time kinematic (RTK) component that is configured to enhance the precision of position data derived from the GNSS signal. Geographic position sensors 304 can include a dead reckoning system, a cellular triangulation system, or any of a variety of other geographic position sensors. Geographic positions sensors 304 can be on towing vehicle 10 or planter 101, or both.

Predictive model generator 310 generates a model that is indicative of a relationship between the values sensed by the in-situ sensors 308 and values mapped to the field by the information maps 358. For example, if the information map 358 maps topographic values to different locations in the worksite, and the in-situ sensor 308 are sensing values indicative of ground engagement characteristics, then model generator 310 generates a predictive ground engagement model that models the relationship between the topographic values and the ground engagement characteristic values. In another example, if the information map 358 maps speed values to different locations in the worksite, and the in-situ sensor 308 are sensing values indicative of ground engagement characteristics, then model generator 310 generates a predictive ground engagement model that models the relationship between the speed values and the ground engagement characteristic values. These are merely some examples. In other examples, the information maps 358 can map various other values, such as soil moisture values, soil type values, soil roughness values, irrigation values, tillage values, traffic characteristic values, and compaction values to different locations in the worksite, the in-situ sensor 308 can sense values indicative of ground engagement characteristics, and the model generator 310 generates predictive ground engagement models that respectively model the relationship between the mapped values (e.g., soil moisture values, soil type values, soil roughness values, irrigation values, tillage values, traffic characteristic values, and compaction values) and the ground engagement characteristic values.

In another example, predictive model generator generates a predictive ground engagement model that models a relationship between one or more mapped values, such as one or more of mapped topographic values, mapped speed values, mapped soil moisture values, mapped soil type values, mapped soil roughness values, mapped irrigation values, mapped tillage values, mapped traffic characteristic values, mapped compaction values, and other mapped characteristic values and values of one or more ground engagement characteristics, such as one or more of downforce margin values, ride quality values, percent ground contact values, and machine dynamics values.

In some examples, the predictive map generator 312 uses the predictive models generated by predictive model generator 310 to generate functional predictive maps that predict the value of a characteristic, such as a ground engagement characteristic, sensed by the in-situ sensors 308 at different locations in the worksite based upon one or more of the information maps 358. For example, where the predictive model is a predictive ground engagement model that models a relationship between one or more ground engagement characteristics (e.g., downforce margin, ride quality, percent ground contact, machine dynamics, etc.) sensed by in-situ sensors 308 and one or more of topographic values from a topographic map, speed values from a speed map, soil moisture values from a soil moisture map, soil type values from a soil type map, soil roughness values from a soil roughness map, irrigation values from an irrigation map, tillage values from a tillage map, traffic characteristic values from a traffic map, and compaction values from a compaction map, then predictive map generator 312 generates a functional predictive ground engagement map that predicts values of one or more ground engagement characteristics at different locations at the worksite based on one or more of the mapped values at those locations and the predictive ground engagement model.

In some examples, the type of values in the functional predictive map 263 may be the same as the in-situ data type sensed by the in-situ sensors 308. In some instances, the type of values in the functional predictive map 263 may have different units from the data sensed by the in-situ sensors 308. In some examples, the type of values in the functional predictive map 263 may be different from the data type sensed by the in-situ sensors 308 but have a relationship to the type of data type sensed by the in-situ sensors 308. For example, in some examples, the data type sensed by the in-situ sensors 308 may be indicative of the type of values in the functional predictive map 363. In some examples, the type of data in the functional predictive map 363 may be different than the data type in the information maps 358. In some instances, the type of data in the functional predictive map 263 may have different units from the data in the information maps 358. In some examples, the type of data in the functional predictive map 263 may be different from the data type in the information map 358 but has a relationship to the data type in the information map 358. For example, in some examples, the data type in the information maps 358 may be indicative of the type of data in the functional predictive map 263. In some examples, the type of data in the functional predictive map 263 is different than one of, or both of, the in-situ data type sensed by the in-situ sensors 308 and the data type in the information maps 358. In some examples, the type of data in the functional predictive map 263 is the same as one of, or both of, of the in-situ data type sensed by the in-situ sensors 308 and the data type in information maps 358. In some examples, the type of data in the functional predictive map 263 is the same as one of the in-situ data type sensed by the in-situ sensors 308 or the data type in the information maps 358, and different than the other.

As shown in FIG. 7, predictive map 264 predicts the value of a sensed characteristic (sensed by in-situ sensors 208), or a characteristic related to the sensed characteristic, at various locations across the worksite based upon one or more information values in one or more information maps 358 at those locations and using the predictive model 311. For example, if predictive model generator 310 has generated a predictive model indicative of a relationship between topographic values and values of a ground engagement characteristic (e.g., downforce margin values), then, given the topographic value at different locations across the worksite, predictive map generator 312 generates a predictive map 264 that predicts values of the ground engagement characteristic (e.g., downforce margin values) at different locations across the worksite. The topographic value, obtained from the topographic map, at those locations and the relationship between topographic values and the values of the ground engagement characteristic, obtained from the predictive model 311, are used to generate the predictive map 264. This is merely one example.

Some variations in the data types that are mapped in the information maps 358, the data types sensed by in-situ sensors 308, and the data types predicted on the predictive map 264 will now be described.

In some examples, the data type in one or more information maps 358 is different from the data type sensed by in-situ sensors 308, yet the data type in the predictive map 264 is the same as the data type sensed by the in-situ sensors 308. For instance, the information map 358 may be a speed map, and the variable sensed by the in-situ sensors 308 may be a ground engagement characteristic. The predictive map 264 may then be a predictive ground engagement map that maps predictive values of the ground engagement characteristic to different geographic locations in the in the worksite.

Also, in some examples, the data type in the information map 358 is different from the data type sensed by in-situ sensors 308, and the data type in the predictive map 264 is different from both the data type in the information map 358 and the data type sensed by the in-situ sensors 208.

In some examples, the information map 358 is from a prior pass through the field during a prior operation and the data type is different from the data type sensed by in-situ sensors 308, yet the data type in the predictive map 264 is the same as the data type sensed by the in-situ sensors 308. For instance, the information map 358 may be a tillage map generated during a previous tilling operation on the worksite, and the variable sensed by the in-situ sensors 308 may be a ground engagement characteristic. The predictive map 264 may then be a predictive ground engagement map that maps predictive values of the ground engagement characteristic to different geographic locations in the worksite.

In some examples, the information map 358 is from a prior pass through the field during a prior operation and the data type is the same as the data type sensed by in-situ sensors 308, and the data type in the predictive map 264 is also the same as the data type sensed by the in-situ sensors 308. For instance, the information map 358 may be a ground engagement map generated during a previous year, and the variable sensed by the in-situ sensors 308 may be a ground engagement characteristic. The predictive map 264 may then be a predictive ground engagement map that maps predictive values of the ground engagement characteristic to different geographic locations in the field. In such an example, the relative ground engagement characteristic differences in the georeferenced information map 358 from the prior year can be used by predictive model generator 310 to generate a predictive model that models a relationship between the relative ground engagement characteristic differences on the information map 358 and the ground engagement characteristic values sensed by in-situ sensors 308 during the current operation. The predictive model is then used by predictive map generator 310 to generate a predictive ground engagement map.

In another example, the information map 358 may be a topographic map generated during a prior operation in the same year, such as tillage operation performed by towing vehicle 10 (or another towing vehicle) and a towed tillage implement, and the variable sensed by the in-situ sensors 308 during the current planting operation may be a ground engagement characteristic. The predictive map 264 may then be a predictive ground engagement map that maps predictive ground engagement characteristic values to different geographic locations in the worksite. In such an example, a map of the topographic values at time of the tillage operation is geo-referenced, recorded, and provided to mobile machine 100 as an information map 358 of topographic values. In-situ sensors 308 during a current operation can detect a ground engagement characteristic at geographic locations in the field and predictive model generator 310 may then build a predictive model that models a relationship between ground engagement at time of the current operation and topographic values at the time of tillage operation. This is because the topographic values at the time of tillage operation are likely to be the same as at the time of the current operation or may be more accurate or otherwise may be more reliable than topographic values obtained in other ways.

In some examples, predictive map 264 can be provided to the control zone generator 313. Control zone generator 313 groups adjacent portions of an area into one or more control zones based on data values of predictive map 264 that are associated with those adjacent portions. A control zone may include two or more contiguous portions of a worksite, such as a field, for which a control parameter corresponding to the control zone for controlling a controllable subsystem is constant. For example, a response time to alter a setting of controllable subsystems 316 may be inadequate to satisfactorily respond to changes in values contained in a map, such as predictive map 264. In that case, control zone generator 313 parses the map and identifies control zones that are of a defined size to accommodate the response time of the controllable subsystems 316. In another example, control zones may be sized to reduce wear from excessive actuator movement resulting from continuous adjustment. In some examples, there may be a different set of control zones for each controllable subsystem 316 or for groups of controllable subsystems 316. The control zones may be added to the predictive map 264 to obtain predictive control zone map 265. Predictive control zone map 265 can thus be similar to predictive map 264 except that predictive control zone map 265 includes control zone information defining the control zones. Thus, a functional predictive map 263, as described herein, may or may not include control zones. Both predictive map 264 and predictive control zone map 265 are functional predictive maps 263. In one example, a functional predictive map 263 does not include control zones, such as predictive map 264. In another example, a functional predictive map 263 does include control zones, such as predictive control zone map 265.

It will also be appreciated that control zone generator 313 can cluster values to generate control zones and the control zones can be added to predictive control zone map 265, or a separate map, showing only the control zones that are generated. In some examples, the control zones may be used for controlling or calibrating mobile machine 100 or both. In other examples, the control zones may be presented to the operator 360 and used to control or calibrate mobile machine 100, and, in other examples, the control zones may be presented to the operator 360 or another user, such as a remote user 366, or stored for later use. Predictive map 264 or predictive control zone map 265 or both are provided to control system 314, which generates control signals based upon the predictive map 264 or predictive control zone map 265 or both. In some examples, communication system controller 329 controls communication system 306 to communicate the predictive map 264 or predictive control zone map 265 or control signals based on the predictive map 264 or predictive control zone map 265 to other mobile machines that are operating at the same worksite or in the same operation. In some examples, communication system controller 329 controls the communication system 306 to send the predictive map 264, predictive control zone map 265, or both to other remote systems, such as remote computing systems 368.

Control system 314 includes communication system controller 329, interface controller 330, propulsion controller 331, path planning controller 334, row unit controllers 335, zone controller 336, and control system 314 can include other items 339. Controllable subsystems 316 include downforce subsystem 341, depth subsystem 343, propulsion subsystem 350, steering subsystem 352, and subsystem 316 can include a wide variety of other controllable subsystems 356.

Interface controller 330 is operable to generate control signals to control interface mechanisms, such as operator interface mechanisms 318 or user interfaces 364, or both. The interface controller 330 is also operable to present the predictive map 264 or predictive control zone map 265 or other information derived from or based on the predictive map 264, predictive control zone map 265, or both to operator 360 or a remote user 366, or both. Operator 360 may be a local operator or a remote operator. As an example, interface controller 330 generates control signals to control a display mechanism to display one or both of predictive map 264 and predictive control zone map 265 for the operator 260 or a remote user 366, or both. Interface controller 330 may generate operator or user actuatable mechanisms that are displayed and can be actuated by the operator or user to interact with the displayed map. The operator or user can edit the map by, for example, correcting a value displayed on the map, based on the operator's or the user's observation.

Path planning controller 334 illustratively generates control signals to control steering subsystem 352 to steer mobile machine 100 according to a desired path or according to desired parameters, such as desired steering angles based on one or more of the predictive map 264 and the predictive control zone map 265. Path planning controller 334 can control a path planning system to generate a route for mobile machine 100 and can control propulsion subsystem 350 and steering subsystem 352 to steer mobile machine 100 along that route. Propulsion controller 331 illustratively generates control signals to control propulsion subsystem 350 to control a speed characteristic of mobile machine 100, such as one or more of travel speed, acceleration, and deceleration, based on one or more of the predictive map 264 and the predictive control zone map 265. Propulsion subsystem 350 may include various power train components of mobile machine 100, such as, but not limited to, an engine or motor, and a transmission (or gear box).

Row unit controllers 335 illustratively generates control signals to control one or more operating parameters of the row units 106. For example, each row unit controller 335 can generate control signals to control a respective downforce subsystem 341 to control operation of the downforce subsystem 341, such as the amount of downforce applied by one or more downforce generators or actuators (e.g., one or more of downforce generator or actuator 126, wing section downforce generators or actuators 139, and closing wheel downforce generator or actuator 153). Row unit controllers 335 can generate control signals to control downforce subsystems 341 based on one or more of the predictive map 264 and the predictive control zone map 265. In another example, each row unit controller 335 can generate control signals to control signals to control a respective depth subsystem 343 (e.g., depth actuator assembly 154) to control the position of gauge wheels 116 to control a depth of engagement of furrow openers 114. Row unit controllers 335 can generate control signals to control depth subsystems 343 based on one or more of the predictive map 264 and the predictive control zone map 265.

Zone controller 336 illustratively generates control signals to control one or more controllable subsystems 316 to control operation of the one or more controllable subsystems 316 based on the predictive control zone map 265.

Suspension controller 337 illustratively generates control signals to control suspension subsystem 354 (e.g., 113) to control the parameters of the suspension system of the planter 101 or mobile machine 100, or both. For example, where the suspension subsystem 354 is a controllable hydraulic suspension, suspension controller 337 illustratively generates control signals to control a flow of hydraulic fluid to suspension subsystem 354. In another example, where the suspension subsystem 354 is a controllable pneumatic (air) suspension, suspension controller 337 illustrative generates control signals to control a flow of air (from one or more onboard air compressors and one or more onboard air reservoirs) to suspension subsystem 354. Suspension controller 337 can generate control signals to control suspension subsystem 354 based on one or more of the predictive map 264 and the predictive control zone map 265. Other controllers 339 included on the mobile machine 100, or at other locations in agricultural system 300, can control other subsystems 316 based on the predictive map 264 or predictive control zone map 265 or both as well.

While the illustrated example of FIG. 7 shows that various components of agricultural system architecture 300 are located on mobile machine 100, it will be understood that in other examples one or more of the components illustrated on mobile machine 100 in FIG. 7 can be located at other locations, such as one or more remote computing systems 368. For instance, one or more of data stores 302, map selector 309, predictive model generator 310, predictive model 311, predictive map generator 312, functional predictive maps 263 (e.g., 264 and 265), control zone generator 313, and control system 314 can be located remotely from mobile machine 100 but can communicate with (or be communicated to) mobile machine 100 via communication system 306 and network 359. Thus, the predictive models 311 and functional predictive maps 263 may be generated at remote locations away from mobile machine 100 and communicated to mobile machine 100 over network 302, for instance, communication system 306 can download the predictive models 311 and functional predictive maps 263 from the remote locations and store them in data store 302. In other examples, mobile machine 100 may access the predictive models 311 and functional predictive maps 263 at the remote locations without downloading the predictive models 311 and functional predictive maps 263. The information used in the generation of the predictive models 311 and functional predictive maps 263 may be provided to the predictive model generator 310 and the predictive map generator 312 at those remote locations over network 359, for example in-situ sensor data generator by in-situ sensors 308 can be provided over network 359 to the remote locations. Similarly, information maps 358 can be provided to the remote locations.

Similarly, where various components are located remotely from mobile machine 100, those components can receive data from components of mobile machine 100 over network 359. For example, where predictive model generator 310 and predictive map generator 312 are located remotely from mobile machine 100, such as at remote computing systems 368, data generated by in-situ sensors 308 and geographic position sensors 304, for instance, can be communicated to the remote computing systems 368 over network 359. Additionally, information maps 358 can be obtained by remote computing systems 368 over network 359 or over another network.

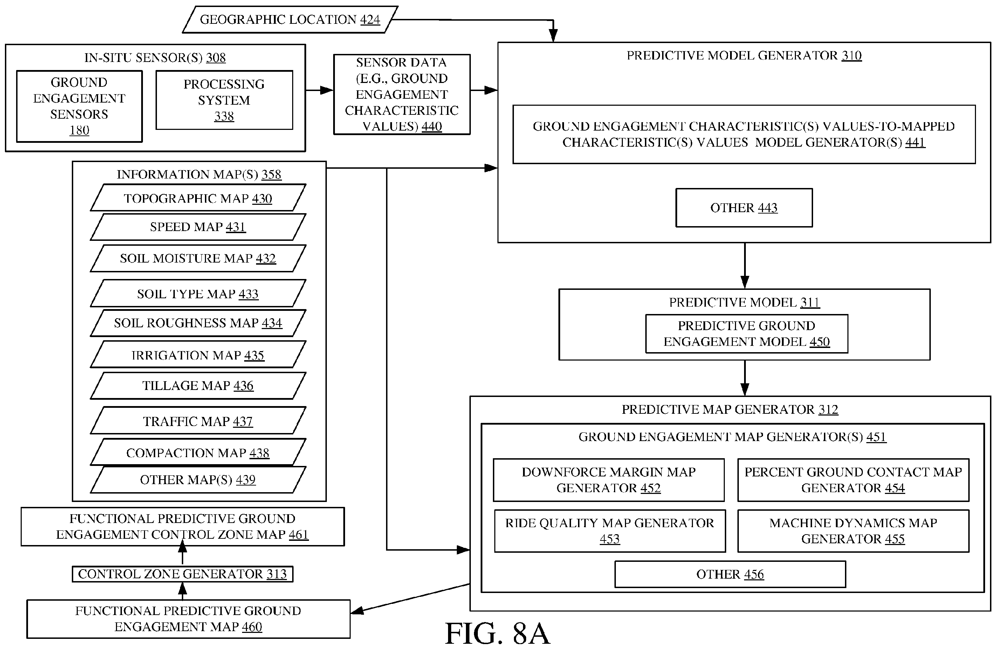

FIG. 8A is a block diagram of a portion of the agricultural system architecture 300 shown in FIG. 7. Particularly, FIG. 8A shows, among other things, examples of the predictive model generator 310 and the predictive map generator 312 in more detail. FIG. 8A also illustrates information flow among the various components shown. The predictive model generator 310 receives one or more of a topographic map 430, a speed map 431, a soil moisture map 432, a soil type map 433, a soil roughness map 434, an irrigation map 435, a tillage map 436, a traffic map 437, a compaction map 438, and another type of map 439. Predictive model generator 310 also receives a geographic location 424, or an indication of a geographic location, such as from geographic positions sensor 304. Geographic location 424 illustratively represents the geographic location of a value detected by in-situ sensors 308. In some examples, the geographic position of the mobile machine 100, as detected by geographic position sensors 304, will not be the same as the geographic position on the field to which a value detected by in-situ sensors 308 corresponds. It will be appreciated, that the geographic position indicated by geographic position sensor 304, along with timing, machine speed and heading, machine dimensions, and sensor position (e.g., relative to geographic position sensor) can be used to derive a geographic location at the field to which a value a detected by an in-situ sensor 308 corresponds.

In-situ sensors 308 illustratively include ground engagement sensors 180, as well as processing system 338. In some examples, processing system 338 is separate from in-situ sensors 308 (such as the example shown in FIG. 7). In some instances, ground engagement sensors 180 may be located on-board mobile machine 100. The processing system 338 processes sensor data generated from ground engagement sensors 180 to generate processed sensor data 440 indicative of ground engagement characteristic values, such as one or more of downforce margin values, ride quality values, percent ground contact values, and machine dynamics values.

As shown in FIG. 8A, the example predictive model generator 310 includes a ground engagement characteristic(s) values-to-mapped characteristic(s) values model generator 441. In other examples, the predictive model generator 310 may include additional, fewer, or different components than those shown in the example of FIG. 8A. Consequently, in some examples, the predictive model generator 310 may include other items 447 as well, which may include other types of predictive model generators to generate other types of ground engagement models, such as a ground engagement characteristic values-to-other mapped values model generator.

Ground engagement characteristic(s) values-to-mapped characteristic(s) values model generator 441 identifies a relationship between one or more ground engagement characteristics detected in in-situ sensor data 440, at a geographic location corresponding to where the sensor data indicating the ground engagement characteristic(s) were obtained, and one or more mapped characteristics values from the one or more maps (430-439) corresponding to the same location in the worksite where the ground engagement characteristics were detected. Based on this relationship established by ground engagement characteristic(s) values-to-mapped characteristic(s) values model generator 441, ground engagement characteristic(s) values-to-mapped characteristic(s) values model generator 441 generates a predictive ground engagement model. The predictive ground engagement model is used by one or more predictive ground engagement map generators 451 to predict ground engagement at different locations in the worksite based upon one or more of the georeferenced characteristics values contained in the one or more maps (430-439) at the same locations in the worksite. Thus, for a given location in the worksite, a ground engagement characteristic value can be predicted at the given location based on the predictive ground engagement model and the one or more mapped characteristics values, from the obtained maps, at that given location.

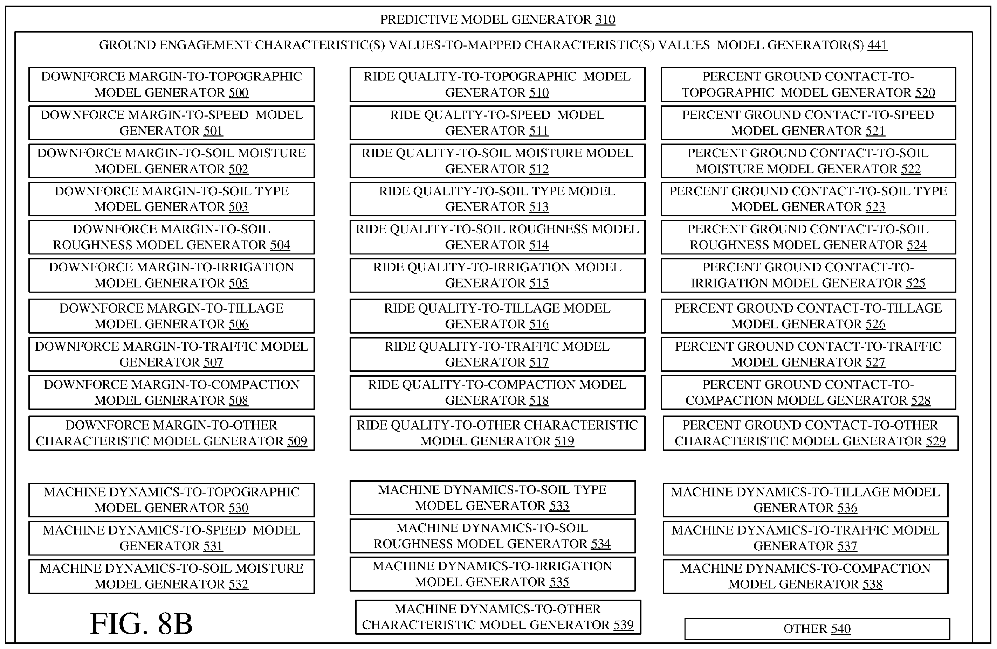

Prior to further describing FIG. 8A, discussion will proceed to FIG. 8B which shows various examples of different model generators 441.

FIG. 8B is a block diagram that shows ground engagement characteristic(s) values-to-mapped characteristic(s) values model generators 441 in more detail.

Downforce margin-to-topographic model generator 500 identifies a relationship between downforce margin values detected in in-situ sensor data 440, at respective geographic locations corresponding to where the respective downforce margin values correspond, and topographic values from the topographic map 430 corresponding to the same locations in the worksite where the respective downforce margin values correspond. Based on this relationship established by downforce margin-to-topographic model generator 500, downforce margin-to-topographic model generator 500 generates a predictive ground engagement model. The predictive ground engagement model is used by downforce margin map generator 452 to predict downforce margin values at different locations in the worksite based upon the georeferenced topographic values contained in the topographic map 430 at the different locations in the worksite. Thus, for a given location in the worksite, a downforce margin value can be predicted at the given location based on the predictive ground engagement model generated by model generator 500 and the topographic value, from the topographic map 430, at that given location.

Downforce margin-to-speed model generator 501 identifies a relationship between downforce margin values detected in in-situ sensor data 440, at respective geographic locations corresponding to where the respective downforce margin values correspond, and speed values from the speed map 431 corresponding to the same locations in the worksite where the respective downforce margin values correspond. Based on this relationship established by downforce margin-to-speed model generator 501, downforce margin-to-speed model generator 501 generates a predictive ground engagement model. The predictive ground engagement model is used by downforce margin map generator 452 to predict downforce margin values at different locations in the worksite based upon the georeferenced speed values contained in the speed map 431 at the different locations in the worksite. Thus, for a given location in the worksite, a downforce margin value can be predicted at the given location based on the predictive ground engagement model generated by model generator 501 and the speed value, from the speed map 431, at that given location.

Downforce margin-to-soil moisture model generator 502 identifies a relationship between downforce margin values detected in in-situ sensor data 440, at respective geographic locations corresponding to where the respective downforce margin values correspond, and soil moisture values from the soil moisture map 432 corresponding to the same locations in the worksite where the respective downforce margin values correspond. Based on this relationship established by downforce margin-to-soil moisture model generator 502, downforce margin-to-soil moisture model generator 502 generates a predictive ground engagement model. The predictive ground engagement model is used by downforce margin map generator 452 to predict downforce margin values at different locations in the worksite based upon the georeferenced soil moisture values contained in the soil moisture map 432 at the different locations in the worksite. Thus, for a given location in the worksite, a downforce margin value can be predicted at the given location based on the predictive ground engagement model generated by model generator 502 and the soil moisture value, from the soil moisture map 432, at that given location.

Downforce margin-to-soil type model generator 503 identifies a relationship between downforce margin values detected in in-situ sensor data 440, at respective geographic locations corresponding to where the respective downforce margin values correspond, and soil type values from the soil type map 433 corresponding to the same locations in the worksite where the respective downforce margin values correspond. Based on this relationship established by downforce margin-to-soil type model generator 503, downforce margin-to-soil type model generator 503 generates a predictive ground engagement model. The predictive ground engagement model is used by downforce margin map generator 452 to predict downforce margin values at different locations in the worksite based upon the georeferenced soil type values contained in the soil type map 433 at the different locations in the worksite. Thus, for a given location in the worksite, a downforce margin value can be predicted at the given location based on the predictive ground engagement model generated by model generator 503 and the soil type value, from the soil type map 433, at that given location.

Downforce margin-to-soil roughness model generator 504 identifies a relationship between downforce margin values detected in in-situ sensor data 440, at respective geographic locations corresponding to where respective downforce margin values correspond, and soil roughness values from the soil roughness map 434 corresponding to the same locations in the worksite where the respective downforce margin values correspond. Based on this relationship established by downforce margin-to-soil roughness model generator 504, downforce margin-to-soil roughness model generator 504 generates a predictive ground engagement model. The predictive ground engagement model is used by downforce margin map generator 452 to predict downforce margin values at different locations in the worksite based upon the georeferenced soil roughness values contained in the soil roughness map 434 at the different locations in the worksite. Thus, for a given location in the worksite, a downforce margin value can be predicted at the given location based on the predictive ground engagement model generated by model generator 504 and the soil roughness value, from the soil roughness map 434, at that given location.

Downforce margin-to-irrigation model generator 505 identifies a relationship between downforce margin values detected in in-situ sensor data 440, at respective geographic locations corresponding to where the respective downforce margin values correspond, and irrigation values from the irrigation map 435 corresponding to the same locations in the worksite where the respective downforce margin values correspond. Based on this relationship established by downforce margin-to-irrigation model generator 505, downforce margin-to-irrigation model generator 505 generates a predictive ground engagement model. The predictive ground engagement model is used by downforce margin map generator 452 to predict downforce margin values at different locations in the worksite based upon the georeferenced irrigation values contained in the irrigation map 435 at the different locations in the worksite. Thus, for a given location in the worksite, a downforce margin value can be predicted at the given location based on the predictive ground engagement model generated by model generator 505 and the irrigation value, from the irrigation map 435, at that given location.

Downforce margin-to-tillage model generator 506 identifies a relationship between downforce margin values detected in in-situ sensor data 440, at respective geographic locations corresponding to where the respective downforce margin values correspond, and tillage values from the tillage map 436 corresponding to the same locations in the worksite where the respective downforce margin values correspond. Based on this relationship established by downforce margin-to-tillage model generator 506, downforce margin-to-tillage model generator 506 generates a predictive ground engagement model. The predictive ground engagement model is used by downforce margin map generator 452 to predict downforce margin values at different locations in the worksite based upon the georeferenced tillage values contained in the tillage map 436 at the different locations in the worksite. Thus, for a given location in the worksite, a downforce margin value can be predicted at the given location based on the predictive ground engagement model generated by model generator 506 and the tillage value, from the tillage map 436, at that given location.

Downforce margin-to-traffic model generator 507 identifies a relationship between downforce margin values detected in in-situ sensor data 440, at respective geographic locations corresponding to where the respective downforce margin values correspond, and traffic characteristic values from the traffic map 437 corresponding to the same locations in the worksite where the respective downforce margin values correspond. Based on this relationship established by downforce margin-to-traffic model generator 507, downforce margin-to-traffic model generator 507 generates a predictive ground engagement model. The predictive ground engagement model is used by downforce margin map generator 452 to predict downforce margin values at different locations in the worksite based upon the georeferenced traffic characteristic values contained in the traffic map 437 at the different locations in the worksite. Thus, for a given location in the worksite, a downforce margin value can be predicted at the given location based on the predictive ground engagement model generated by model generator 507 and the traffic characteristic value, from the traffic map 437, at that given location.

Downforce margin-to-compaction model generator 508 identifies a relationship between downforce margin values detected in in-situ sensor data 440, at respective geographic locations corresponding to where the respective downforce margin values correspond, and compaction values from the compaction map 438 corresponding to the same locations in the worksite where the respective downforce margin values correspond. Based on this relationship established by downforce margin-to-compaction model generator 508, downforce margin-to-compaction model generator 508 generates a predictive ground engagement model. The predictive ground engagement model is used by downforce margin map generator 452 to predict downforce margin values at different locations in the worksite based upon the georeferenced compaction values contained in the compaction map 438 at the different locations in the worksite. Thus, for a given location in the worksite, a downforce margin value can be predicted at the given location based on the predictive ground engagement model generated by model generator 508 and the compaction value, from the compaction map 438, at that given location.

Downforce margin-to-other characteristic model generator 509 identifies a relationship between downforce margin values detected in in-situ sensor data 440, at respective geographic locations corresponding to where the respective downforce margin values correspond, and other characteristic values from an other map 439 corresponding to the same locations in the worksite where the respective downforce margin values correspond. Based on this relationship established by downforce margin-to-other characteristic model generator 509, downforce margin-to-other characteristic model generator 509 generates a predictive ground engagement model. The predictive ground engagement model is used by downforce margin map generator 452 to predict downforce margin values at different locations in the worksite based upon the georeferenced other characteristic values contained in the other map 439 at the different locations in the worksite. Thus, for a given location in the worksite, a downforce margin value can be predicted at the given location based on the predictive ground engagement model generated by model generator 509 and the other characteristic value, from the other map 439, at that given location.

In light of the above, the predictive model generator 310 is operable to produce a plurality of predictive ground engagement models, such as one or more of the predictive ground engagement models generated by model generators 500, 501, 502, 503, 504, 505, 506, 507, 508, and 509. In another example, two or more of the predictive models described above may be combined into a single predictive ground engagement model, such as a predictive ground engagement model that predicts a ground engagement characteristic (e.g., downforce margin) based upon two or more of the topographic values, the speed values, the soil moisture values, the soil type values, the soil roughness values, the irrigation values, the tillage values, the traffic characteristic values, the compaction values, and the other characteristic values at different locations in the field. Any of these ground engagement models, or combinations thereof, are represented collectively by predictive ground engagement model 450 in FIG. 8A. The predictive ground engagement model 450 is provided to predictive map generator 312. In the example of FIG. 8A, predictive map generator 312 includes a downforce margin map generator 452. In other examples, predictive map generator 312 may include additional or different map generators. Thus, in some examples, predictive map generator 312 may include other items 456 which may include other types of map generators to generate other types of maps.

Downforce margin map generator 452 receives one or more of the topographic map 430, the speed map 431, the soil moisture map 432, the soil type map 433, the soil roughness map 434, the irrigation map 435, the tillage map 436, the traffic map 437, the compaction map 438, and an other map 439, along with the predictive ground engagement model 450 which predicts a ground engagement characteristic (e.g., downforce margin) based upon one or more of a topographic value, a speed value, a soil moisture value, a soil type value, a soil roughness value, an irrigation value, a tillage value, a traffic characteristic value, a compaction value, and an other characteristic value, and generates a predictive map that predicts a ground engagement characteristic (e.g., downforce margin) at different locations in the worksite.

Predictive map generator 312 outputs a functional predictive ground engagement map 460 that is predictive of a ground engagement characteristic (e.g., downforce margin). The functional predictive ground engagement map 460 is a predictive map 264. The functional predictive ground engagement map 460, in one example, predicts a ground engagement characteristic (e.g., downforce margin) at different locations in a worksite. The functional predictive ground engagement map 460 may be provided to control zone generator 313, control system 314, or both. Control zone generator 313 generates control zones and incorporates those control zones into the functional predictive ground engagement map 460 to produce a predictive control zone map 265, that is a functional predictive ground engagement control zone map 461. One or both of functional predictive ground engagement map 460 and functional predictive ground engagement control zone map 461 may be provided to control system 314, which generates control signals to control one or more of the controllable subsystems 316 based upon the functional predictive ground engagement map 460, the functional predictive ground engagement control zone map 461, or both.

Ride quality-to-topographic model generator 510 identifies a relationship between ride quality values detected in in-situ sensor data 440, at respective geographic locations corresponding to where the respective ride quality values correspond, and topographic values from the topographic map 430 corresponding to the same locations in the worksite where the respective ride quality values correspond. Based on this relationship established by ride quality-to-topographic model generator 510, ride quality-to-topographic model generator 510 generates a predictive ground engagement model. The predictive ground engagement model is used by ride quality map generator 453 to predict ride quality values at different locations in the worksite based upon the georeferenced topographic values contained in the topographic map 430 at the different locations in the worksite. Thus, for a given location in the worksite, a ride quality value can be predicted at the given location based on the predictive ground engagement model generated by model generator 510 and the topographic value, from the topographic map 430, at that given location.

Ride quality-to-speed model generator 511 identifies a relationship between ride quality values detected in in-situ sensor data 440, at respective geographic locations corresponding to where the respective ride quality values correspond, and speed values from the speed map 431 corresponding to the same locations in the worksite where the respective ride quality values correspond. Based on this relationship established by ride quality-to-speed model generator 511, ride quality-to-speed model generator 511 generates a predictive ground engagement model. The predictive ground engagement model is used by ride quality map generator 453 to predict ride quality values at different locations in the worksite based upon the georeferenced speed values contained in the speed map 431 at the different locations in the worksite. Thus, for a given location in the worksite, a ride quality value can be predicted at the given location based on the predictive ground engagement model generated by model generator 511 and the speed value, from the speed map 431, at that given location.

Ride quality-to-soil moisture model generator 512 identifies a relationship between ride quality values detected in in-situ sensor data 440, at respective geographic locations corresponding to where the respective ride quality values correspond, and soil moisture values from the soil moisture map 432 corresponding to the same locations in the worksite where the respective ride quality values correspond. Based on this relationship established by ride quality-to-soil moisture model generator 512, ride quality-to-soil moisture model generator 512 generates a predictive ground engagement model. The predictive ground engagement model is used by ride quality map generator 453 to predict ride quality values at different locations in the worksite based upon the georeferenced soil moisture values contained in the soil moisture map 432 at the different locations in the worksite. Thus, for a given location in the worksite, a ride quality value can be predicted at the given location based on the predictive ground engagement model generated by model generator 512 and the soil moisture value, from the soil moisture map 432, at that given location.

Ride quality-to-soil type model generator 513 identifies a relationship between ride quality values detected in in-situ sensor data 440, at respective geographic locations corresponding to where the respective ride quality values correspond, and soil type values from the soil type map 433 corresponding to the same locations in the worksite where the respective ride quality values correspond. Based on this relationship established by ride quality-to-soil type model generator 513, ride quality-to-soil type model generator 513 generates a predictive ground engagement model. The predictive ground engagement model is used by ride quality map generator 453 to predict ride quality values at different locations in the worksite based upon the georeferenced soil type values contained in the soil type map 433 at the different locations in the worksite. Thus, for a given location in the worksite, a ride quality value can be predicted at the given location based on the predictive ground engagement model generated by model generator 513 and the soil type value, from the soil type map 433, at that given location.

Ride quality-to-soil roughness model generator 514 identifies a relationship between ride quality values detected in in-situ sensor data 440, at respective geographic locations corresponding to where respective ride quality values correspond, and soil roughness values from the soil roughness map 434 corresponding to the same locations in the worksite where the respective ride quality values correspond. Based on this relationship established by ride quality-to-soil roughness model generator 514, ride quality-to-soil roughness model generator 514 generates a predictive ground engagement model. The predictive ground engagement model is used by ride quality map generator 453 to predict ride quality values at different locations in the worksite based upon the georeferenced soil roughness values contained in the soil roughness map 434 at the different locations in the worksite. Thus, for a given location in the worksite, a ride quality value can be predicted at the given location based on the predictive ground engagement model generated by model generator 514 and the soil roughness value, from the soil roughness map 434, at that given location.

Ride quality-to-irrigation model generator 515 identifies a relationship between ride quality values detected in in-situ sensor data 440, at respective geographic locations corresponding to where the respective ride quality values correspond, and irrigation values from the irrigation map 435 corresponding to the same locations in the worksite where the respective ride quality values correspond. Based on this relationship established by ride quality-to-irrigation model generator 515, ride quality-to-irrigation model generator 515 generates a predictive ground engagement model. The predictive ground engagement model is used by ride quality map generator 453 to predict ride quality values at different locations in the worksite based upon the georeferenced irrigation values contained in the irrigation map 435 at the different locations in the worksite. Thus, for a given location in the worksite, a ride quality value can be predicted at the given location based on the predictive ground engagement model generated by model generator 515 and the irrigation value, from the irrigation map 435, at that given location.

Ride quality-to-tillage model generator 516 identifies a relationship between ride quality values detected in in-situ sensor data 440, at respective geographic locations corresponding to where the respective ride quality values correspond, and tillage values from the tillage map 436 corresponding to the same locations in the worksite where the respective ride quality values correspond. Based on this relationship established by ride quality-to-tillage model generator 516, ride quality-to-tillage model generator 516 generates a predictive ground engagement model. The predictive ground engagement model is used by ride quality map generator 453 to predict ride quality values at different locations in the worksite based upon the georeferenced tillage values contained in the tillage map 436 at the different locations in the worksite. Thus, for a given location in the worksite, a ride quality value can be predicted at the given location based on the predictive ground engagement model generated by model generator 516 and the tillage value, from the tillage map 436, at that given location.

Ride quality-to-traffic model generator 517 identifies a relationship between ride quality values detected in in-situ sensor data 440, at respective geographic locations corresponding to where the respective ride quality values correspond, and traffic characteristic values from the traffic map 437 corresponding to the same locations in the worksite where the respective ride quality values correspond. Based on this relationship established by ride quality-to-traffic model generator 517, ride quality-to-traffic model generator 517 generates a predictive ground engagement model. The predictive ground engagement model is used by ride quality map generator 453 to predict ride quality values at different locations in the worksite based upon the georeferenced traffic characteristic values contained in the traffic map 437 at the different locations in the worksite. Thus, for a given location in the worksite, a ride quality value can be predicted at the given location based on the predictive ground engagement model generated by model generator 517 and the traffic characteristic value, from the traffic map 437, at that given location.

Ride quality-to-compaction model generator 518 identifies a relationship between ride quality values detected in in-situ sensor data 440, at respective geographic locations corresponding to where the respective ride quality values correspond, and compaction values from the compaction map 438 corresponding to the same locations in the worksite where the respective ride quality values correspond. Based on this relationship established by ride quality-to-compaction model generator 518, ride quality-to-compaction model generator 518 generates a predictive ground engagement model. The predictive ground engagement model is used by ride quality map generator 453 to predict ride quality values at different locations in the worksite based upon the georeferenced compaction values contained in the compaction map 438 at the different locations in the worksite. Thus, for a given location in the worksite, a ride quality value can be predicted at the given location based on the predictive ground engagement model generated by model generator 518 and the compaction value, from the compaction map 438, at that given location.

Ride quality-to-other characteristic model generator 519 identifies a relationship between ride quality values detected in in-situ sensor data 440, at respective geographic locations corresponding to where the respective ride quality values correspond, and other characteristic values from an other map 439 corresponding to the same locations in the worksite where the respective ride quality values correspond. Based on this relationship established by ride quality-to-other characteristic model generator 519, ride quality-to-other characteristic model generator 519 generates a predictive ground engagement model. The predictive ground engagement model is used by ride quality map generator 453 to predict ride quality values at different locations in the worksite based upon the georeferenced other characteristic values contained in the other map 439 at the different locations in the worksite. Thus, for a given location in the worksite, a ride quality value can be predicted at the given location based on the predictive ground engagement model generated by model generator 519 and the other characteristic value, from the other map 439, at that given location.

In light of the above, the predictive model generator 310 is operable to produce a plurality of predictive ground engagement models, such as one or more of the predictive ground engagement models generated by model generators 510, 511, 512, 513, 514, 515, 516, 517, 518, and 519. In another example, two or more of the predictive models described above may be combined into a single predictive ground engagement model, such as a predictive ground engagement model that predicts a ground engagement characteristic (e.g., ride quality) based upon two or more of the topographic values, the speed values, the soil moisture values, the soil type values, the soil roughness values, the irrigation values, the tillage values, the traffic characteristic values, the compaction values, and the other characteristic values at different locations in the field. Any of these ground engagement models, or combinations thereof, are represented collectively by predictive ground engagement model 450 in FIG. 8A.

The predictive ground engagement model 450 is provided to predictive map generator 312. In the example of FIG. 8A, predictive map generator 312 includes a ride quality generator 453. In other examples, predictive map generator 312 may include additional or different map generators. Thus, in some examples, predictive map generator 312 may include other items 456 which may include other types of map generators to generate other types of maps. Ride quality map generator 453 receives one or more of the topographic map 430, the speed map 431, the soil moisture map 432, the soil type map 433, the soil roughness map 434, the irrigation map 435, the tillage map 436, the traffic map 437, the compaction map 438, and an other map 439, along with the predictive ground engagement model 450 which predicts a ground engagement characteristic (e.g., ride quality) based upon one or more of a topographic value, a speed value, a soil moisture value, a soil type value, a soil roughness value, an irrigation value, a tillage value, a traffic characteristic value, a compaction value, and an other characteristic value, and generates a predictive map that predicts a ground engagement characteristic (e.g., ride quality) at different locations in the worksite.

Predictive map generator 312 outputs a functional predictive ground engagement map 460 that is predictive of a ground engagement characteristic (e.g., ride quality). The functional predictive ground engagement map 460 is a predictive map 264. The functional predictive ground engagement map 460, in one example, predicts a ground engagement characteristic (e.g., ride quality) at different locations in a worksite. The functional predictive ground engagement map 460 may be provided to control zone generator 313, control system 314, or both. Control zone generator 313 generates control zones and incorporates those control zones into the functional predictive ground engagement map 460 to produce a predictive control zone map 265, that is a functional predictive ground engagement control zone map 461. One or both of functional predictive ground engagement map 460 and functional predictive ground engagement control zone map 461 may be provided to control system 314, which generates control signals to control one or more of the controllable subsystems 316 based upon the functional predictive ground engagement map 460, the functional predictive ground engagement control zone map 461, or both.

Percent ground contact-to-topographic model generator 520 identifies a relationship between percent ground contact values detected in in-situ sensor data 440, at respective geographic locations corresponding to where the respective percent ground contact values correspond, and topographic values from the topographic map 430 corresponding to the same locations in the worksite where the respective percent ground contact values correspond. Based on this relationship established by percent ground contact-to-topographic model generator 520, percent ground contact-to-topographic model generator 520 generates a predictive ground engagement model. The predictive ground engagement model is used by percent ground contact map generator 454 to predict percent ground contact values at different locations in the worksite based upon the georeferenced topographic values contained in the topographic map 430 at the different locations in the worksite. Thus, for a given location in the worksite, a percent ground contact value can be predicted at the given location based on the predictive ground engagement model generated by model generator 520 and the topographic value, from the topographic map 430, at that given location.

Percent ground contact-to-speed model generator 521 identifies a relationship between percent ground contact values detected in in-situ sensor data 440, at respective geographic locations corresponding to where the respective percent ground contact values correspond, and speed values from the speed map 431 corresponding to the same locations in the worksite where the respective percent ground contact values correspond. Based on this relationship established by percent ground contact-to-speed model generator 521, percent ground contact-to-speed model generator 521 generates a predictive ground engagement model. The predictive ground engagement model is used by percent ground contact map generator 454 to predict percent ground contact values at different locations in the worksite based upon the georeferenced speed values contained in the speed map 431 at the different locations in the worksite. Thus, for a given location in the worksite, a percent ground contact value can be predicted at the given location based on the predictive ground engagement model generated by model generator 521 and the speed value, from the speed map 431, at that given location. Percent ground contact-to-soil moisture model generator 522 identifies a relationship between percent ground contact values detected in in-situ sensor data 440, at respective geographic locations corresponding to where the respective percent ground contact values correspond, and soil moisture values from the soil moisture map 432 corresponding to the same locations in the worksite where the respective percent ground contact values correspond. Based on this relationship established by percent ground contact-to-soil moisture model generator 522, percent ground contact-to-soil moisture model generator 522 generates a predictive ground engagement model. The predictive ground engagement model is used by percent ground contact map generator 454 to predict percent ground contact values at different locations in the worksite based upon the georeferenced soil moisture values contained in the soil moisture map 432 at the different locations in the worksite. Thus, for a given location in the worksite, a percent ground contact value can be predicted at the given location based on the predictive ground engagement model generated by model generator 522 and the soil moisture value, from the soil moisture map 432, at that given location. Percent ground contact-to-soil type model generator 523 identifies a relationship between percent ground contact values detected in in-situ sensor data 440, at respective geographic locations corresponding to where the respective percent ground contact values correspond, and soil type values from the soil type map 433 corresponding to the same locations in the worksite where the respective percent ground contact values correspond. Based on this relationship established by percent ground contact-to-soil type model generator 523, percent ground contact-to-soil type model generator 523 generates a predictive ground engagement model. The predictive ground engagement model is used by percent ground contact map generator 454 to predict percent ground contact values at different locations in the worksite based upon the georeferenced soil type values contained in the soil type map 433 at the different locations in the worksite. Thus, for a given location in the worksite, a percent ground contact value can be predicted at the given location based on the predictive ground engagement model generated by model generator 523 and the soil type value, from the soil type map 433, at that given location.

Percent ground contact-to-soil roughness model generator 524 identifies a relationship between percent ground contact values detected in in-situ sensor data 440, at respective geographic locations corresponding to where respective percent ground contact values correspond, and soil roughness values from the soil roughness map 434 corresponding to the same locations in the worksite where the respective percent ground contact values correspond. Based on this relationship established by percent ground contact-to-soil roughness model generator 524, percent ground contact-to-soil roughness model generator 524 generates a predictive ground engagement model. The predictive ground engagement model is used by percent ground contact map generator 454 to predict percent ground contact values at different locations in the worksite based upon the georeferenced soil roughness values contained in the soil roughness map 434 at the different locations in the worksite. Thus, for a given location in the worksite, a percent ground contact value can be predicted at the given location based on the predictive ground engagement model generated by model generator 524 and the soil roughness value, from the soil roughness map 434, at that given location.

Percent ground contact-to-irrigation model generator 525 identifies a relationship between percent ground contact values detected in in-situ sensor data 440, at respective geographic locations corresponding to where the respective percent ground contact values correspond, and irrigation values from the irrigation map 435 corresponding to the same locations in the worksite where the respective percent ground contact values correspond. Based on this relationship established by percent ground contact-to-irrigation model generator 525, percent ground contact-to-irrigation model generator 525 generates a predictive ground engagement model. The predictive ground engagement model is used by percent ground contact map generator 454 to predict percent ground contact values at different locations in the worksite based upon the georeferenced irrigation values contained in the irrigation map 435 at the different locations in the worksite. Thus, for a given location in the worksite, a percent ground contact value can be predicted at the given location based on the predictive ground engagement model generated by model generator 525 and the irrigation value, from the irrigation map 435, at that given location.

Percent ground contact-to-tillage model generator 526 identifies a relationship between percent ground contact values detected in in-situ sensor data 440, at respective geographic locations corresponding to where the respective percent ground contact values correspond, and tillage values from the tillage map 436 corresponding to the same locations in the worksite where the respective percent ground contact values correspond. Based on this relationship established by percent ground contact-to-tillage model generator 526, percent ground contact-to-tillage model generator 526 generates a predictive ground engagement model. The predictive ground engagement model is used by percent ground contact map generator 454 to predict percent ground contact values at different locations in the worksite based upon the georeferenced tillage values contained in the tillage map 436 at the different locations in the worksite. Thus, for a given location in the worksite, a percent ground contact value can be predicted at the given location based on the predictive ground engagement model generated by model generator 526 and the tillage value, from the tillage map 436, at that given location.

Percent ground contact-to-traffic model generator 527 identifies a relationship between percent ground contact values detected in in-situ sensor data 440, at respective geographic locations corresponding to where the respective percent ground contact values correspond, and traffic characteristic values from the traffic map 437 corresponding to the same locations in the worksite where the respective percent ground contact values correspond. Based on this relationship established by percent ground contact-to-traffic model generator 527, percent ground contact-to-traffic model generator 527 generates a predictive ground engagement model. The predictive ground engagement model is used by percent ground contact map generator 454 to predict percent ground contact values at different locations in the worksite based upon the georeferenced traffic characteristic values contained in the traffic map 437 at the different locations in the worksite. Thus, for a given location in the worksite, a percent ground contact value can be predicted at the given location based on the predictive ground engagement model generated by model generator 527 and the traffic characteristic value, from the traffic map 437, at that given location.

Percent ground contact-to-compaction model generator 528 identifies a relationship between percent ground contact values detected in in-situ sensor data 440, at respective geographic locations corresponding to where the respective percent ground contact values correspond, and compaction values from the compaction map 438 corresponding to the same locations in the worksite where the respective percent ground contact values correspond. Based on this relationship established by percent ground contact-to-compaction model generator 528, percent ground contact-to-compaction model generator 528 generates a predictive ground engagement model. The predictive ground engagement model is used by percent ground contact map generator 454 to predict percent ground contact values at different locations in the worksite based upon the georeferenced compaction values contained in the compaction map 438 at the different locations in the worksite. Thus, for a given location in the worksite, a percent ground contact value can be predicted at the given location based on the predictive ground engagement model generated by model generator 528 and the compaction value, from the compaction map 438, at that given location.

Percent ground contact-to-other characteristic model generator 529 identifies a relationship between percent ground contact values detected in in-situ sensor data 440, at respective geographic locations corresponding to where the respective percent ground contact values correspond, and other characteristic values from an other map 439 corresponding to the same locations in the worksite where the respective percent ground contact values correspond. Based on this relationship established by percent ground contact-to-other characteristic model generator 529, percent ground contact-to-other characteristic model generator 529 generates a predictive ground engagement model. The predictive ground engagement model is used by percent ground contact map generator 454 to predict percent ground contact values at different locations in the worksite based upon the georeferenced other characteristic values contained in the other map 439 at the different locations in the worksite. Thus, for a given location in the worksite, a percent ground contact value can be predicted at the given location based on the predictive ground engagement model generated by model generator 529 and the other characteristic value, from the other map 439, at that given location.

In light of the above, the predictive model generator 310 is operable to produce a plurality of predictive ground engagement models, such as one or more of the predictive ground engagement models generated by model generators 520, 521, 522, 523, 524, 525, 526, 527, 528, and 529. In another example, two or more of the predictive models described above may be combined into a single predictive ground engagement model, such as a predictive ground engagement model that predicts a ground engagement characteristic (e.g., percent ground contact) based upon two or more of the topographic values, the speed values, the soil moisture values, the soil type values, the soil roughness values, the irrigation values, the tillage values, the traffic characteristic values, the compaction values, and the other characteristic values at different locations in the field. Any of these ground engagement models, or combinations thereof, are represented collectively by predictive ground engagement model 450 in FIG. 8A. The predictive ground engagement model 450 is provided to predictive map generator 312. In the example of FIG. 8A, predictive map generator 312 includes a percent ground contact generator map 454. In other examples, predictive map generator 312 may include additional or different map generators. Thus, in some examples, predictive map generator 312 may include other items 456 which may include other types of map generators to generate other types of maps.

Percent ground contact map generator 454 receives one or more of the topographic map 430, the speed map 431, the soil moisture map 432, the soil type map 433, the soil roughness map 434, the irrigation map 435, the tillage map 436, the traffic map 437, the compaction map 438, and an other map 439, along with the predictive ground engagement model 450 which predicts a ground engagement characteristic (e.g., percent ground contact) based upon one or more of a topographic value, a speed value, a soil moisture value, a soil type value, a soil roughness value, an irrigation value, a tillage value, a traffic characteristic value, a compaction value, and an other characteristic value, and generates a predictive map that predicts a ground engagement characteristic (e.g., percent ground contact) at different locations in the worksite.

Predictive map generator 312 outputs a functional predictive ground engagement map 460 that is predictive of a ground engagement characteristic (e.g., percent ground contact). The functional predictive ground engagement map 460 is a predictive map 264. The functional predictive ground engagement map 460, in one example, predicts a ground engagement characteristic (e.g., percent ground contact) at different locations in a worksite. The functional predictive ground engagement map 460 may be provided to control zone generator 313, control system 314, or both. Control zone generator 313 generates control zones and incorporates those control zones into the functional predictive ground engagement map 460 to produce a predictive control zone map 265, that is a functional predictive ground engagement control zone map 461. One or both of functional predictive ground engagement map 460 and functional predictive ground engagement control zone map 461 may be provided to control system 314, which generates control signals to control one or more of the controllable subsystems 316 based upon the functional predictive ground engagement map 460, the functional predictive ground engagement control zone map 461, or both.

Machine dynamics-to-topographic model generator 530 identifies a relationship between machine dynamics values detected in in-situ sensor data 440, at respective geographic locations corresponding to where the respective machine dynamics values correspond, and topographic values from the topographic map 430 corresponding to the same locations in the worksite where the respective machine dynamics values correspond. Based on this relationship established by machine dynamics-to-topographic model generator 530, machine dynamics-to-topographic model generator 530 generates a predictive ground engagement model. The predictive ground engagement model is used by machine dynamics map generator 455 to predict machine dynamics values at different locations in the worksite based upon the georeferenced topographic values contained in the topographic map 430 at the different locations in the worksite. Thus, for a given location in the worksite, a machine dynamics value can be predicted at the given location based on the predictive ground engagement model generated by model generator 530 and the topographic value, from the topographic map 430, at that given location.

Machine dynamics-to-speed model generator 531 identifies a relationship between machine dynamics values detected in in-situ sensor data 440, at respective geographic locations corresponding to where the respective machine dynamics values correspond, and speed values from the speed map 431 corresponding to the same locations in the worksite where the respective machine dynamics values correspond. Based on this relationship established by machine dynamics-to-speed model generator 531, machine dynamics-to-speed model generator 531 generates a predictive ground engagement model. The predictive ground engagement model is used by machine dynamics map generator 455 to predict machine dynamics values at different locations in the worksite based upon the georeferenced speed values contained in the speed map 431 at the different locations in the worksite. Thus, for a given location in the worksite, a machine dynamics value can be predicted at the given location based on the predictive ground engagement model generated by model generator 531 and the speed value, from the speed map 431, at that given location.

Machine dynamics-to-soil moisture model generator 532 identifies a relationship between machine dynamics values detected in in-situ sensor data 440, at respective geographic locations corresponding to where the respective machine dynamics values correspond, and soil moisture values from the soil moisture map 432 corresponding to the same locations in the worksite where the respective machine dynamics values correspond. Based on this relationship established by machine dynamics-to-soil moisture model generator 532, machine dynamics-to-soil moisture model generator 532 generates a predictive ground engagement model. The predictive ground engagement model is used by machine dynamics map generator 455 to predict machine dynamics values at different locations in the worksite based upon the georeferenced soil moisture values contained in the soil moisture map 432 at the different locations in the worksite. Thus, for a given location in the worksite, a machine dynamics value can be predicted at the given location based on the predictive ground engagement model generated by model generator 532 and the soil moisture value, from the soil moisture map 432, at that given location.

Machine dynamics-to-soil type model generator 533 identifies a relationship between machine dynamics values detected in in-situ sensor data 440, at respective geographic locations corresponding to where the respective machine dynamics values correspond, and soil type values from the soil type map 433 corresponding to the same locations in the worksite where the respective machine dynamics values correspond. Based on this relationship established by machine dynamics-to-soil type model generator 533, machine dynamics-to-soil type model generator 533 generates a predictive ground engagement model. The predictive ground engagement model is used by machine dynamics map generator 455 to predict machine dynamics values at different locations in the worksite based upon the georeferenced soil type values contained in the soil type map 433 at the different locations in the worksite. Thus, for a given location in the worksite, a machine dynamics value can be predicted at the given location based on the predictive ground engagement model generated by model generator 533 and the soil type value, from the soil type map 433, at that given location.

Machine dynamics-to-soil roughness model generator 534 identifies a relationship between machine dynamics values detected in in-situ sensor data 440, at respective geographic locations corresponding to where respective machine dynamics values correspond, and soil roughness values from the soil roughness map 434 corresponding to the same locations in the worksite where the respective machine dynamics values correspond. Based on this relationship established by machine dynamics-to-soil roughness model generator 534, machine dynamics-to-soil roughness model generator 534 generates a predictive ground engagement model. The predictive ground engagement model is used by machine dynamics map generator 455 to predict machine dynamics values at different locations in the worksite based upon the georeferenced soil roughness values contained in the soil roughness map 434 at the different locations in the worksite. Thus, for a given location in the worksite, a machine dynamics value can be predicted at the given location based on the predictive ground engagement model generated by model generator 534 and the soil roughness value, from the soil roughness map 434, at that given location.

Machine dynamics-to-irrigation model generator 535 identifies a relationship between machine dynamics values detected in in-situ sensor data 440, at respective geographic locations corresponding to where the respective machine dynamics values correspond, and irrigation values from the irrigation map 435 corresponding to the same locations in the worksite where the respective machine dynamics values correspond. Based on this relationship established by machine dynamics-to-irrigation model generator 535, machine dynamics-to-irrigation model generator 535 generates a predictive ground engagement model. The predictive ground engagement model is used by machine dynamics map generator 455 to predict machine dynamics values at different locations in the worksite based upon the georeferenced irrigation values contained in the irrigation map 435 at the different locations in the worksite. Thus, for a given location in the worksite, a machine dynamics value can be predicted at the given location based on the predictive ground engagement model generated by model generator 535 and the irrigation value, from the irrigation map 435, at that given location.

Machine dynamics-to-tillage model generator 536 identifies a relationship between machine dynamics values detected in in-situ sensor data 440, at respective geographic locations corresponding to where the respective machine dynamics values correspond, and tillage values from the tillage map 436 corresponding to the same locations in the worksite where the respective machine dynamics values correspond. Based on this relationship established by machine dynamics-to-tillage model generator 536, machine dynamics-to-tillage model generator 536 generates a predictive ground engagement model. The predictive ground engagement model is used by machine dynamics map generator 455 to predict machine dynamics values at different locations in the worksite based upon the georeferenced tillage values contained in the tillage map 436 at the different locations in the worksite. Thus, for a given location in the worksite, a machine dynamics value can be predicted at the given location based on the predictive ground engagement model generated by model generator 536 and the tillage value, from the tillage map 436, at that given location.

Machine dynamics-to-traffic model generator 537 identifies a relationship between machine dynamics values detected in in-situ sensor data 440, at respective geographic locations corresponding to where the respective machine dynamics values correspond, and traffic characteristic values from the traffic map 437 corresponding to the same locations in the worksite where the respective machine dynamics values correspond. Based on this relationship established by machine dynamics-to-traffic model generator 537, machine dynamics-to-traffic model generator 537 generates a predictive ground engagement model. The predictive ground engagement model is used by machine dynamics map generator 455 to predict machine dynamics values at different locations in the worksite based upon the georeferenced traffic characteristic values contained in the traffic map 437 at the different locations in the worksite. Thus, for a given location in the worksite, a machine dynamics value can be predicted at the given location based on the predictive ground engagement model generated by model generator 537 and the traffic characteristic value, from the traffic map 437, at that given location.

Machine dynamics-to-compaction model generator 538 identifies a relationship between machine dynamics values detected in in-situ sensor data 440, at respective geographic locations corresponding to where the respective machine dynamics values correspond, and compaction values from the compaction map 438 corresponding to the same locations in the worksite where the respective machine dynamics values correspond. Based on this relationship established by machine dynamics-to-compaction model generator 538, machine dynamics-to-compaction model generator 538 generates a predictive ground engagement model. The predictive ground engagement model is used by machine dynamics map generator 455 to predict machine dynamics values at different locations in the worksite based upon the georeferenced compaction values contained in the compaction map 438 at the different locations in the worksite. Thus, for a given location in the worksite, a machine dynamics value can be predicted at the given location based on the predictive ground engagement model generated by model generator 538 and the compaction value, from the compaction map 438, at that given location.

Machine dynamics-to-other characteristic model generator 539 identifies a relationship between machine dynamics values detected in in-situ sensor data 440, at respective geographic locations corresponding to where the respective machine dynamics values correspond, and other characteristic values from an other map 439 corresponding to the same locations in the worksite where the respective machine dynamics values correspond. Based on this relationship established by machine dynamics-to-other characteristic model generator 539, machine dynamics-to-other characteristic model generator 539 generates a predictive ground engagement model. The predictive ground engagement model is used by machine dynamics map generator 455 to predict machine dynamics values at different locations in the worksite based upon the georeferenced other characteristic values contained in the other map 439 at the different locations in the worksite. Thus, for a given location in the worksite, a machine dynamics value can be predicted at the given location based on the predictive ground engagement model generated by model generator 539 and the other characteristic value, from the other map 439, at that given location.

In light of the above, the predictive model generator 310 is operable to produce a plurality of predictive ground engagement models, such as one or more of the predictive ground engagement models generated by model generators 530, 531, 532, 533, 534, 535, 536, 537, 538, and 539. In another example, two or more of the predictive models described above may be combined into a single predictive ground engagement model, such as a predictive ground engagement model that predicts a ground engagement characteristic (e.g., machine dynamics) based upon two or more of the topographic values, the speed values, the soil moisture values, the soil type values, the soil roughness values, the irrigation values, the tillage values, the traffic characteristic values, the compaction values, and the other characteristic values at different locations in the field. Any of these ground engagement models, or combinations thereof, are represented collectively by predictive ground engagement model 450 in FIG. 8A.

The predictive ground engagement model 450 is provided to predictive map generator 312. In the example of FIG. 8A, predictive map generator 312 includes a machine dynamics map generator 455. In other examples, predictive map generator 312 may include additional or different map generators. Thus, in some examples, predictive map generator 312 may include other items 456 which may include other types of map generators to generate other types of maps.

Machine dynamics map generator 455 receives one or more of the topographic map 430, the speed map 431, the soil moisture map 432, the soil type map 433, the soil roughness map 434, the irrigation map 435, the tillage map 436, the traffic map 437, the compaction map 438, and an other map 439, along with the predictive ground engagement model 450 which predicts a ground engagement characteristic (e.g., machine dynamics) based upon one or more of a topographic value, a speed value, a soil moisture value, a soil type value, a soil roughness value, an irrigation value, a tillage value, a traffic characteristic value, a compaction value, and an other characteristic value, and generates a predictive map that predicts a ground engagement characteristic (e.g., machine dynamics) at different locations in the worksite.

Predictive map generator 312 outputs a functional predictive ground engagement map 460 that is predictive of a ground engagement characteristic (e.g., machine dynamics). The functional predictive ground engagement map 460 is a predictive map 264. The functional predictive ground engagement map 460, in one example, predicts a ground engagement characteristic (e.g., machine dynamics) at different locations in a worksite. The functional predictive ground engagement map 460 may be provided to control zone generator 313, control system 314, or both. Control zone generator 313 generates control zones and incorporates those control zones into the functional predictive ground engagement map 460 to produce a predictive control zone map 265, that is a functional predictive ground engagement control zone map 461. One or both of functional predictive ground engagement map 460 and functional predictive ground engagement control zone map 461 may be provided to control system 314, which generates control signals to control one or more of the controllable subsystems 316 based upon the functional predictive ground engagement map 460, the functional predictive ground engagement control zone map 461, or both.

In light of the above, the predictive model generator is operable to produce a plurality of predictive ground engagement models, such as one or more of the predictive ground engagement models generated by model generators 500, 501, 502, 503, 504, 505, 506, 507, 508, 509, 510, 511, 512, 513, 514, 515, 516, 517, 518, 519, 520, 521, 522, 523, 524, 525, 526, 527, 528, 529, 530, 531, 532, 533, 534, 535, 536, 537, 538, and 539. In another example, two or more of the predictive models described above may be combined into a single predictive ground engagement model, such as predictive ground engagement model that predicts two or more ground engagement characteristics (e.g., two or more of downforce margin, ride quality, percent ground contact, and machine dynamics) based upon one or more the topographic values, the speed values, the soil moisture values, the soil type values, the soil roughness values, the irrigation values, the tillage values, the traffic characteristic values, the compaction values, and the other characteristic values at different locations in the field. Any of these ground engagement models, or combinations thereof, are represented collectively by predictive ground engagement model 450 in FIG. 8A.

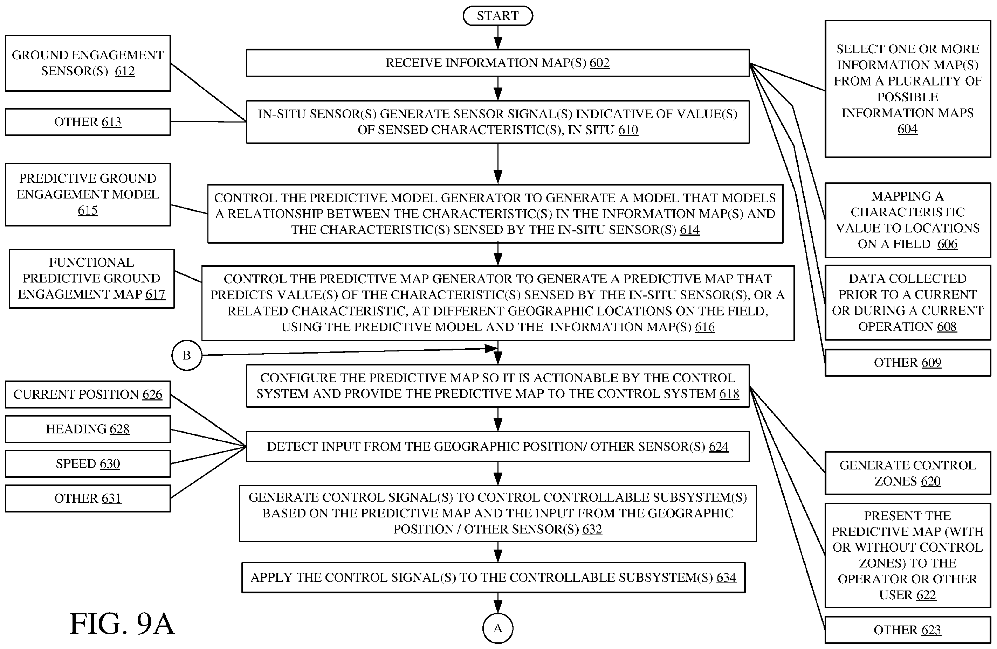

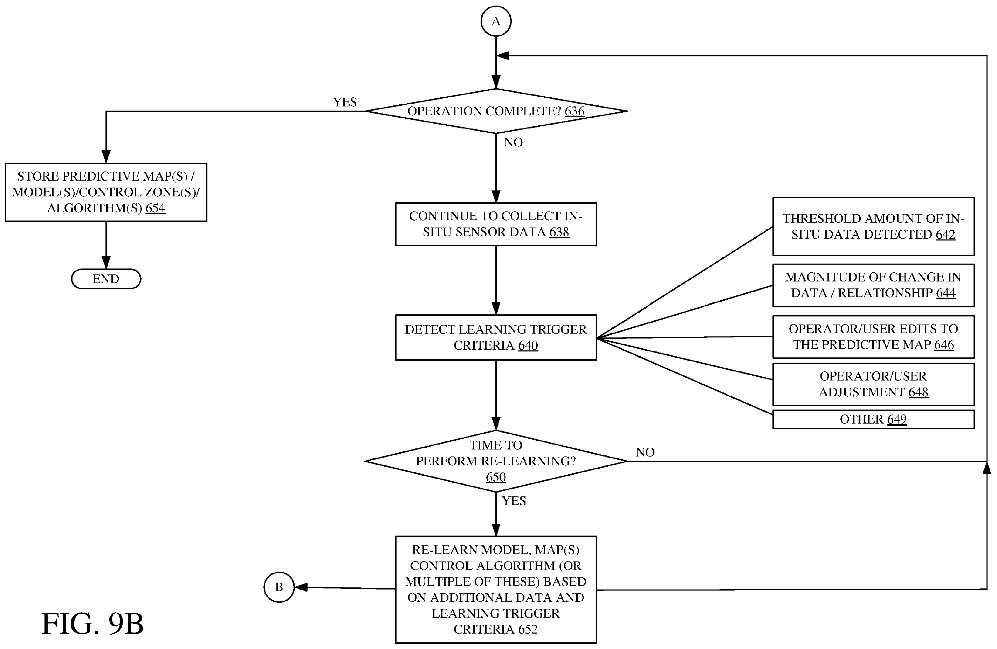

The predictive ground engagement model 450 is provide to predictive map generator 312. Predictive map generator 312 receives one or more of the topographic map 430, the speed map 431, the soil moisture map 432, the soil type map 433, the soil roughness map 434, the irrigation map 435, the tillage map 436, the traffic map 437, the compaction map 438, and an other map 439, along with the predictive ground engagement model 450 which predicts two or more ground engagement characteristics (e.g., two or more of downforce margin, ride quality, percent ground contact, and machine dynamics) based upon one or more of a topographic value, a speed value, a soil moisture value, a soil type value, a soil roughness value, an irrigation value, a tillage value, a traffic characteristic value, a compaction value, and an other characteristic value, and generates a predictive map that predicts two or more ground engagement characteristics (e.g., two or more of downforce margin, ride quality, percent ground contact, and machine dynamics) at different locations in the worksite. FIGS. 9A-9B (collectively referred to herein as FIG. 9) show a flow diagram illustrating one example of the operation of agricultural system architecture 300 in generating a predictive model and a predictive map

At block 602, agricultural system 300 receives one or more information maps 358. Examples of information maps 358 or receiving information maps 358 are discussed with respect to blocks 604, 606, 608, and 609. As discussed above, information maps 358 map values of a variable, corresponding to a characteristic, to different locations in the field, as indicated at block 606. As indicated at block 604, receiving the information maps 358 may involve selecting one or more of a plurality of possible information maps 358 that are available. For instance, one information map 358 may be a topographic map, such as topographic map 430. Another information map 358 may be a speed map, such as speed map 431. Another information map 358 may be a soil moisture map, such as soil moisture map 432. Another information map 358 may be a soil type map, such as soil type map 433. Another information map 358 may be a soil roughness map, such as soil roughness map 434. Another information map 358 may be an irrigation map, such as irrigation map 435. Another information map 358 may be a tillage map, such as tillage map 436. Another information map 358 may be a traffic map, such as traffic map 437. Another information map 358 may be a compaction map, such as compaction map 438. Information maps 358 may include various other types of maps that map various other characteristics, such as other maps 439. The process by which one or more information maps 358 are selected can be manual, semi-automated, or automated. The information maps 358 can be based on data collected prior to a current operation. For instance, the data may be collected based on aerial images taken during a previous year, or earlier in the current season, or at other times. The data may be based on data detected in ways other than using aerial images. For instance, the data may be collected during a previous operation on the worksite, such an operation during a previous year, or a previous operation earlier in the current season, or at other times. The machines performing those previous operations may be outfitted with one or more sensors that generate sensor data indicative of one or more characteristics. For example, the sensed operating parameters during a previous irrigation operation or the sensed operating parameters of a tilling machine earlier in the year may be used as data to generate the information maps 358. In other examples, and as described above, the information maps 358 may be predictive maps having predictive values, such as a predictive speed map having predictive speed values, a predictive soil moisture map having predictive soil moisture values, or another type of predictive map having predictive values of another characteristic. The predictive information map 358 can be generated by predictive map generator 312 based on a model generated by predictive model generator 310. The data for the information maps 358 can be obtained by agricultural system 300 using communication system 306 and stored in data store 302. The data for the information maps 358 can be obtained by agricultural system 300 using communication system 306 in other ways as well, and this is indicated by block 609 in the flow diagram of FIG. 9.

As mobile machine 100 is operating, in-situ sensors 308 generate sensor signals indicative of one or more in-situ data values indicative of a characteristic, for example, ground engagement sensors 180 generate sensor signals indicative of one or more in-situ data values indicative of one or more ground engagement characteristics, as indicated by block 612. For example, ground engagement sensors 180 can include one or more of downforce margin sensors 380 that sense one or more in-situ data values of downforce margin as a ground engagement characteristic, ride quality sensors 382 that sense one or more in-situ data values of ride quality as a ground engagement characteristic, percent ground contact sensors 384 that sense one or more in-situ data values of percent ground contact as a ground engagement characteristic, and machine dynamics sensors 388 that sense one or more in-situ data values of machine dynamics as a ground engagement characteristic. In some examples, data from in-situ sensors 308 is georeferenced using position, heading, or speed data, as well as machine dimension information, sensor position information, etc.

In one example, at block 614, predictive model generator 310 controls one or more of the model generators 500, 501, 502, 503, 504, 505, 506, 507, 508, and 509 to generate a model that models the relationship between the mapped values, such as the topographic values, the speed values, the soil moisture values, the soil type values, the soil roughness values, the irrigation values, the tillage values, the traffic characteristic values, the compaction values, and the other characteristic values contained in the respective information map and the in-situ downforce margin values sensed by the in-situ sensors 308. Predictive model generator 310 generates a predictive ground engagement model 450 (e.g., predictive downforce margin model) that predicts downforce margin values based on one or more of topographic values, speed values, soil moisture values, soil type values, soil roughness values, irrigation values, tillage values, traffic characteristic values, compaction values, and other characteristic values, as indicated by block 615.

In one example, at block 614, predictive model generator 310 controls one or more of the model generators 510, 511, 512, 513, 514, 515, 516, 517, 518, and 519 to generate a model that models the relationship between the mapped values, such as the topographic values, the speed values, the soil moisture values, the soil type values, the soil roughness values, the irrigation values, the tillage values, the traffic characteristic values, the compaction values, and the other characteristic values contained in the respective information map and the in-situ ride quality values sensed by the in-situ sensors 308. Predictive model generator 310 generates a predictive ground engagement model 450 (e.g., predictive ride quality model) that predicts ride quality values based on one or more of topographic values, speed values, soil moisture values, soil type values, soil roughness values, irrigation values, tillage values, traffic characteristic values, compaction values, and other characteristic values, as indicated by block 615.

In one example, at block 614, predictive model generator 310 controls one or more of the model generators 520, 521, 522, 523, 534, 525, 526, 527, 528, and 529 to generate a model that models the relationship between the mapped values, such as the topographic values, the speed values, the soil moisture values, the soil type values, the soil roughness values, the irrigation values, the tillage values, the traffic characteristic values, the compaction values, and the other characteristic values contained in the respective information map and the in-situ percent ground contact values sensed by the in-situ sensors 308. Predictive model generator 310 generates a predictive ground engagement model 450 (e.g., predictive percent ground contact model) that predicts percent ground contact values based on one or more of topographic values, speed values, soil moisture values, soil type values, soil roughness values, irrigation values, tillage values, traffic characteristic values, compaction values, and other characteristic values, as indicated by block 515.

In one example, at block 614, predictive model generator 310 controls one or more of the model generators 530, 531, 532, 533, 534, 535, 536, 537, 538, and 539 to generate a model that models the relationship between the mapped values, such as the topographic values, the speed values, the soil moisture values, the soil type values, the soil roughness values, the irrigation values, the tillage values, the traffic characteristic values, the compaction values, and the other characteristic values contained in the respective information map and the in-situ machine dynamics values sensed by the in-situ sensors 308. Predictive model generator 310 generates a predictive ground engagement model 450 (e.g., predictive machine dynamics model) that predicts machine dynamics values based on one or more of topographic values, speed values, soil moisture values, soil type values, soil roughness values, irrigation values, tillage values, traffic characteristic values, compaction values, and other characteristic values, as indicated by block 515.

In one example, at block 614, predictive model generator 310 controls one or more of the model generators 500, 501, 502, 503, 504, 505, 506, 507, 508, 509, 510, 511, 512, 513, 514, 515, 516, 517, 518, 519, 520, 521, 522, 523, 524, 525, 526, 527, 528, 529, 5230, 531, 532, 533, 534, 535, 536, 537, 538, and 539 to generate a model that models the relationship between the mapped values, such as the topographic values, the speed values, the soil moisture values, the soil type values, the soil roughness values, the irrigation values, the tillage values, the traffic characteristic values, the compaction values, and the other characteristic values contained in the respective information map and the in-situ values of one or more ground engagement characteristics (e.g., one or more of downforce margin, ride quality, percent ground contact, and machine dynamics) sensed by the in-situ sensors 308. Predictive model generator 310 generates a predictive ground engagement model 450 that predicts values of one or more ground engagement characteristics (e.g., predicts one or more of predictive downforce margin values, ride quality values, percent ground contact values, and machine dynamics values) based on one or more of topographic values, speed values, soil moisture values, soil type values, soil roughness values, irrigation values, tillage values, traffic values, compaction values, and other characteristic values, as indicated by block 615. At block 616, the relationship or model generated by predictive model generator 310 is provided to predictive map generator 312. Predictive map generator 312 generates a functional predictive ground engagement map 460 that predicts values of one or more ground engagement characteristics (or sensor values indicative of the one or more ground engagement characteristics) at different geographic locations in a worksite at which mobile machine 100 is operating using the predictive ground engagement model 450 and one or more of the information maps 358, such as topographic map 430, speed map 431, soil moisture map 432, soil type map 433, soil roughness map 434, irrigation map 435, tillage map 436, traffic map 437, compaction map 438, and an other map 439.

**In** one example, at block 616, predictive map generator 312 controls predictive downforce margin map generator 452 to generate a functional predictive ground engagement map 460 that predicts downforce margin (or sensor values indicative of downforce margin) at different geographic locations in a worksite at which mobile machine 100 is operating using the predictive ground engagement model 450 and one or more of the information maps 358, such as topographic map 430, speed map 431, soil moisture map 432, soil type map 433, soil roughness map 434, irrigation map 435, tillage map 436, traffic map 437, compaction map 438, and an other map 439.

In one example, at block 616, predictive map generator 312 controls predictive ride quality map generator 453 to generate a functional predictive ground engagement map 460 that predicts ride quality (or sensor values indicative of ride quality) at different geographic locations in a worksite at which mobile machine 100 is operating using the predictive ground engagement model 450 and one or more of the information maps 358, such as topographic map 430, speed map 431, soil moisture map 432, soil type map 433, soil roughness map 434, irrigation map 435, tillage map 436, traffic map 437, compaction map 438, and an other map 439.

In one example, at block 616, predictive map generator 312 controls predictive percent ground contact map generator 454 to generate a functional predictive ground engagement map 460 that predicts percent ground contact (or sensor values indicative of percent ground contact) at different geographic locations in a worksite at which mobile machine 100 is operating using the predictive ground engagement model 450 and one or more of the information maps 358, such as topographic map 430, speed map 431, soil moisture map 432, soil type map 433, soil roughness map 434, irrigation map 435, tillage map 436, traffic map 437, compaction map 438, and an other map 439.

In one example, at block 616, predictive map generator 312 controls predictive machine dynamics map generator 455 to generate a functional predictive ground engagement map 460 that predicts machine dynamics (or sensor values indicative of machine dynamics) at different geographic locations in a worksite at which mobile machine 100 is operating using the predictive ground engagement model 450 and one or more of the information maps 358, such as topographic map 430, speed map 431, soil moisture map 432, soil type map 433, soil roughness map 434, irrigation map 435, tillage map 436, traffic map 437, compaction map 438, and an other map 439.

It should be noted that, in some examples, the functional predictive ground engagement map 460 may include two or more different map layers. Each map layer may represent a different data type, for instance, a functional predictive ground engagement map 460 that provides two or more of a map layer that provides predictive downforce margin based on values from one or more information maps 358, a map layer that provides predictive ride quality based on values from one or more information maps 358, a map layer that provides predictive percent ground contact based on values from one or more information maps 358, and a map layer that provides predictive machine dynamics based on values from one or more information maps 358. Additionally, functional predictive ground engagement map 460 can include a map layer that provides two or more of predictive downforce margin, predictive ride quality, predictive percent ground contact, and predictive machine dynamics based on values from one or more information maps 358.

In other examples, the functional predictive ground engagement map 460 may provide one or more of predictive downforce margin, predictive ride quality, predictive percent ground contact, and predictive machine dynamics based on values from one or more information maps 358.

Providing the predictive ground engagement map 460 is indicated by block 617.

At block 618, predictive map generator 312 configures the functional predictive ground engagement map 460 so that the functional predictive ground engagement map 460 is actionable (or consumable) by control system 314. Predictive map generator 312 can provide the functional predictive ground engagement map 460 to the control system 314 or to control zone generator 313, or both. Some examples of the different ways in which the functional predictive ground engagement map 460 can be configured or output are described with respect to blocks 618, 620, 622, and 623. For instance, predictive map generator 312 configures functional predictive ground engagement map 460 so that functional predictive ground engagement map 460 includes values that can be read by control system 314 and used as the basis for generating control signals for one or more of the different controllable subsystems 316 of mobile machine 100, as indicated by block 618.

At block 620, control zone generator 313 can divide the functional predictive ground engagement map 460 into control zones based on the values on the functional predictive ground engagement map 460 to generate functional predictive ground engagement control zone map 461. Contiguously-geolocated values that are within a threshold value of one another can be grouped into a control zone. The threshold value can be a default threshold value, or the threshold value can be set based on an operator input, based on an input from an automated system, or based on other criteria. A size of the zones may be based on a responsiveness of the control system 314, the controllable subsystems 316, based on wear considerations, or on other criteria.

At block 622, predictive map generator 312 configures functional predictive ground engagement map 460 for presentation to an operator or other user. At block 622, control zone generator 313 can configure functional predictive ground engagement control zone map 461 for presentation to an operator or other user. When presented to an operator or other user, the presentation of the functional predictive ground engagement map 460 or of functional predictive ground engagement control zone map 461, or both, may contain one or more of the predictive values on the functional predictive ground engagement map 460 correlated to geographic location, the control zones of functional predictive ground engagement control zone map 461 correlated to geographic location, and settings values or control parameters that are used based on the predicted values on functional predictive ground engagement map 460 or control zones on functional predictive ground engagement control zone map 461. The presentation can, in another example, include more abstracted information or more detailed information. The presentation can also include a confidence level that indicates an accuracy with which the predictive values on functional predictive ground engagement map 460 or the control zones on functional predictive ground engagement control zone map 461 conform to measured values that may be measured by sensors on mobile machine 100 as mobile machine 100 operates at the worksite. Further where information is presented to more than one location, an authentication and authorization system can be provided to implement authentication and authorization processes. For instance, there may be a hierarchy of individuals that are authorized to view and change maps and other presented information. By way of example, an on-board display device may show the maps in near real time locally on the machine, or the maps may also be generated at one or more remote locations, or both. In some examples, each physical display device at each location may be associated with a person or a user permission level. The user permission level may be used to determine which display elements are visible on the physical display device and which values the corresponding person may change. As an example, a local operator of mobile machine 100 may be unable to see the information corresponding to the functional predictive map 460 or make any changes to machine operation. A supervisor, such as a supervisor at a remote location, however, may be able to see the functional predictive map 460 on the display but be prevented from making any changes. A manager, who may be at a separate remote location, may be able to see all of the elements on functional predictive map 460 and also be able to change the functional predictive map 460. In some instances, the functional predictive map 460 accessible and changeable by a manager located remotely may be used in machine control. This is one example of an authorization hierarchy that may be implemented. The functional predictive map 460 or functional predictive control zone map 461 or both can be configured in other ways as well, as indicated by block 623.

At block 624, input from geographic position sensor 304 and other in-situ sensors 308 are received by the control system 314. Particularly, at block 626, control system 314 detects an input from the geographic position sensor 304 identifying a geographic location of mobile machine 100. Block 628 represents receipt by the control system 314 of sensor inputs indicative of trajectory or heading of mobile machine 100, and block 630 represents receipt by the control system 314 of a speed of mobile machine 100. Block 631 represents receipt by the control system 314 of other information from various in-situ sensors 308.

At block 632, control system 314 generates control signals to control the controllable subsystems 316 based on the functional predictive ground engagement map 460 or the functional predictive ground engagement control zone map 461, or both, and the input from the geographic position sensor 304 and any other in-situ sensors 308. At block 634, control system 314 applies the control signals to the controllable subsystems 316. It will be appreciated that the particular control signals that are generated, and the particular controllable subsystems 316 that are controlled, may vary based upon one or more different things. For example, the control signals that are generated and the controllable subsystems 316 that are controlled may be based on the type of functional predictive ground engagement map 460 or functional predictive ground engagement control zone map 461, or both, that is being used. Similarly, the control signals that are generated and the controllable subsystems 316 that are controlled and the timing of the control signals can be based on various latencies of mobile machine 100 and the responsiveness of the controllable subsystems 316.

By way of example, propulsion controller 331 of control system 314 can generate control signals to control propulsion subsystem 350 to control one or more propulsion parameters of mobile machine 100, such as one or more of the speed at which the mobile machine travels, the deceleration of mobile machine 100, and the acceleration of mobile machine 100. For instance, functional predictive ground engagement map 460 or functional predictive ground engagement control zone map 461 may predict one or more ground engagement characteristics in area(s) of the field, in which case, propulsion controller 331 can generate control signals to control propulsion subsystem 350 to control a propulsion parameter of mobile machine 100, such as travel speed, acceleration, deceleration, etc., at those area(s). In another example, path planning controller 334 of control system 314 can generate control signals to control steering subsystem 352 to control a route parameter of mobile machine 100, such as one or more of a commanded path at the worksite over which mobile machine 100 travels, and the steering of mobile machine 100. For instance, functional predictive ground engagement map 460 or functional predictive ground engagement control zone map 461, or both, may predict one or more ground engagement characteristics in area(s) of the field, in which case, path planning controller 334 can generate control signals to control steering subsystem 352 to cause mobile machine 100 to avoid traveling those area(s) or to travel through them in a different manner, such as with limited steering angles, from a different direction, or with a different heading.

In another example, one or more row unit controllers 335 of control system 314 can generate control signals to control a respective row unit 106. For example, each row unit controller 335 can control a respective downforce subsystem 341 (e.g., 126 or 153, or both) to adjust an applied downforce on row unit 106 or on a component of row unit 106 (e.g., furrow closer 118). For instance, functional predictive ground engagement map 460 or functional predictive ground engagement control zone map 461, or both, may predict one or more ground engagement characteristics in area(s) of the field, in which case, each row unit controller 335 can generate control signals to control the respective downforce subsystem 341 to control an applied downforce at those area(s). In another example, each row unit controller 335 can control a respective depth subsystem 343 (e.g., 154) to adjust a planting depth, such as by adjusting a depth of furrow opener 114, such as by changing a position of gauge wheels 116. For instance, functional predictive ground engagement map 460 or functional predictive ground engagement control zone map 461, or both, may predict one or more ground engagement characteristics in area(s) of the field, in which case, each row unit controller 335 can generate control signals to control the respective depth subsystem 343 to control a depth of respective furrow openers 114 at those area(s).

In another example, suspension controller 337 of control system 314 can generate control signals to control suspension subsystem 354 to control a suspension parameter of mobile machine 100, such as an amount of fluid (e.g., air or hydraulic fluid) or a pressure of fluid (e.g., air pressure or hydraulic pressure) of a suspension of mobile machine 100, such as a suspension of planter 101. For instance, functional predictive ground engagement map 460 or functional predictive ground engagement control zone map 461, or both, may predict one or more ground engagement characteristics in area(s) of the field, in which case, suspension controller 337 can generate control signals to control suspension subsystem 354 to control a suspension parameter of mobile machine 100 at those areas.

In another example, interface controller 330 of control system 314 can generate control signals to control an interface mechanism (e.g., 218 or 364) to generate a display, alert, notification, or other indication based on or indicative of functional predictive ground engagement map 460 or functional predictive ground engagement control zone map 461, or both.

In another example, communication system controller 329 of control system 314 can generate control signals to control communication system 306 to communicate functional predictive ground engagement map 460 or functional predictive ground engagement control zone map 461, or both, to another item of agricultural system 300 (e.g., remote computing systems 368 or user interfaces 364).

These are merely examples. Control system 314 can generate various other control signals to control various other items of mobile machine 100 (or agricultural system 300) based on functional predictive ground engagement map 460 or functional predictive ground engagement control zone map 461, or both.

At block 636, a determination is made as to whether the operation has been completed. If the operation is not completed, the processing advances to block 638 where in-situ sensor data from geographic position sensor 304 and in-situ sensors 308 (and perhaps other sensors) continue to be read.

In some examples, at block 640, agricultural system 300 can also detect learning trigger criteria to perform machine learning on one or more of the functional predictive ground engagement map 460, functional predictive ground engagement control zone map 461, predictive ground engagement model 450, the zones generated by control zone generator 313, one or more control algorithms implemented by the controllers in the control system 314, and other triggered learning.

The learning trigger criteria can include any of a wide variety of different criteria. Some examples of detecting trigger criteria are discussed with respect to blocks 642, 644, 646, 648, and 649. For instance, in some examples, triggered learning can involve recreation of a relationship used to generate a predictive model when a threshold amount of in-situ sensor data are obtained from in-situ sensors 308. In such examples, receipt of an amount of in-situ sensor data from the in-situ sensors 308 that exceeds a threshold triggers or causes the predictive model generator 310 to generate a new predictive model that is used by predictive map generator 312. Thus, as mobile machine 100 continues an operation, receipt of the threshold amount of in-situ sensor data from the in-situ sensors 308 triggers the creation of a new relationship represented by a new predictive ground engagement model 450 generated by predictive model generator 310. Further, a new functional predictive ground engagement map 460, a new functional predictive ground engagement control zone map 461, or both can be generated using the new predictive ground engagement model 450. Block 642 represents detecting a threshold amount of in-situ sensor data used to trigger creation of a new predictive model.

In other examples, the learning trigger criteria may be based on how much the in-situ sensor data from the in-situ sensors 308 are changing, such as over time or compared to previous values. For example, if variations within the in-situ sensor data (or the relationship between the in-situ sensor data and the information in the one or more information maps 358) are within a selected range or is less than a defined amount, or below a threshold value, then a new predictive model is not generated by the predictive model generator 310. As a result, the predictive map generator 312 does not generate a new functional predictive ground engagement map 460, a new functional predictive ground engagement control zone map 461, or both. However, if variations within the in-situ sensor data are outside of the selected range, are greater than the defined amount, or are above the threshold value, for example, then the predictive model generator 310 generates a new predictive ground engagement model 450 using all or a portion of the newly received in-situ sensor data that the predictive map generator 312 uses to generate a new functional predictive ground engagement map 460 which can be provided to control zone generator 313 for the creation of a new functional predictive ground engagement control zone map 461. At block 644, variations in the in-situ sensor data, such as a magnitude of an amount by which the data exceeds the selected range or a magnitude of the variation of the relationship between the in-situ sensor data and the information in the one or more information maps, can be used as a trigger to cause generation of one or more of a new predictive ground engagement model 450, a new functional predictive ground engagement map 460, and a new functional predictive ground engagement control zone map 461. Keeping with the examples described above, the threshold, the range, and the defined amount can be set to default values; set by an operator or user interaction through a user interface; set by an automated system; or set in other ways.

Other learning trigger criteria can also be used. For instance, if predictive model generator 310 switches to a different information map (different from the originally selected information map), then switching to the different information map may trigger re-learning by predictive model generator 310, predictive map generator 312, control zone generator 313, control system 314, or other items. In another example, transitioning of mobile machine 100 to a different topography or to a different control zone may be used as learning trigger criteria as well.

In some instances, operator 360 or user 366 can also edit the functional predictive ground engagement map 460 or functional predictive ground engagement control zone map 461, or both. The edits can change a value on the functional predictive ground engagement map 460, change a size, shape, position, or existence of a control zone on functional predictive ground engagement control zone map 461, or both. Block 646 shows that edited information can be used as learning trigger criteria.

In some instances, it may also be that operator 360 or user 366 observes that automated control of a controllable subsystem 316, is not what the operator or user desires. In such instances, the operator 360 or user 366 may provide a manual adjustment to the controllable subsystem 316 reflecting that the operator 360 or user 366 desires the controllable subsystem 316 to operate in a different way than is being commanded by control system 314. Thus, manual alteration of a setting by the operator 360 or user 366 can cause one or more of predictive model generator 310 to generate a new model, predictive map generator 312 to generate a new functional predictive ground engagement map 460, control zone generator 313 to generate one or more new control zones on functional predictive ground engagement control zone map 461, and control system 314 to relearn a control algorithm or to perform machine learning on one or more of the controller components 329 through 337 in control system 314 based upon the adjustment by the operator 360 or user 366, as shown in block 648. Block 649 represents the use of other triggered learning criteria.

In other examples, relearning may be performed periodically or intermittently based, for example, upon a selected time interval such as a discrete time interval or a variable time interval, as indicated by block 650.

If relearning is triggered, whether based upon learning trigger criteria or based upon passage of a time interval, as indicated by block 650, then one or more of the predictive model generator 310, predictive map generator 312, control zone generator 313, and control system 314 performs machine learning to generate a new predictive model, a new predictive map, a new control zone, and a new control algorithm, respectively, based upon the learning trigger criteria. The new predictive model, the new predictive map, the new control zone, and the new control algorithm are generated using any additional data that has been collected since the last learning operation was performed. Performing relearning is indicated by block 652. If the operation has been completed, operation moves from block 652 to block 654 where one or more of the functional predictive ground engagement map 460, functional predictive ground engagement control zone map 461, the predictive ground engagement model 450, the control zone(s), and the control algorithm(s), are stored. The functional predictive map 460, functional predictive control zone map 461, predictive model 450, control zone(s), and control algorithm(s), may be stored locally on data store 302 or sent to a remote system using communication system 306 for later use.

If the operation has not been completed, operation moves from block 652 to block 618 such that the one or more of the new predictive model, the new functional predictive map, the new functional predictive control zone map, the new control zone(s), and the new control algorithm(s) can be used in the control of mobile machine 100.

The examples herein describe the generation of a predictive model and, in some examples, the generation of a functional predictive map based on the predictive model. The examples described herein are distinguished from other approaches by the use of a model which is at least one of multi-variate or site-specific (i.e., georeferenced, such as map-based). Furthermore, the model is revised as the work machine is performing an operation and while additional in-situ sensor data is collected. The model may also be applied in the future beyond the current worksite. For example, the model may form a baseline (e.g., starting point) for a subsequent operation at a different worksite or the same worksite at a future time.

The revision of the model in response to new data may employ machine learning methods. Without limitation, machine learning methods may include memory networks, Bayes systems, decisions trees, Eigenvectors, Eigenvalues and Machine Learning, Evolutionary and Genetic Algorithms, Cluster Analysis, Expert Systems/Rules, Support Vector Machines, Engines/Symbolic Reasoning, Generative Adversarial Networks (GANs), Graph Analytics and ML, Linear Regression, Logistic Regression, LSTMs and Recurrent Neural Networks (RNNSs), Convolutional Neural Networks (CNNs), MCMC, Random Forests, Reinforcement Learning or Reward-based machine learning. Learning may be supervised or unsupervised.

Model implementations may be mathematical, making use of mathematical equations, empirical correlations, statistics, tables, matrices, and the like. Other model implementations may rely more on symbols, knowledge bases, and logic such as rule-based systems. Some implementations are hybrid, utilizing both mathematics and logic. Some models may incorporate random, non-deterministic, or unpredictable elements. Some model implementations may make uses of networks of data values such as neural networks. These are just some examples of models.

The predictive paradigm examples described herein differ from non-predictive approaches where an actuator or other machine parameter is fixed at the time the machine, system, or component is designed, set once before the machine enters the worksite, is reactively adjusted manually based on operator perception, or is reactively adjusted based on a sensor value. The functional predictive map examples described herein also differ from other map-based approaches. In some examples of these other approaches, an a priori control map is used without any modification based on in-situ sensor data or else a difference determined between data from an in-situ sensor and a predictive map are used to calibrate the in-situ sensor. In some examples of the other approaches, sensor data may be mathematically combined with a priori data to generate control signals, but in a location-agnostic way; that is, an adjustment to an a priori, georeferenced predictive setting is applied independent of the location of the work machine at the worksite. The continued use or end of use of the adjustment, in the other approaches, is not dependent on the work machine being in a particular defined location or region within the worksite.

In examples described herein, the functional predictive maps and predictive actuator control rely on obtained maps and in-situ data that are used to generate predictive models. The predictive models are then revised during the operation to generate revised functional predictive maps and revised actuator control. In some examples, the actuator control is provided based on functional predictive control zone maps which are also revised during the operation at the worksite. In some examples, the revisions (e.g., adjustments, calibrations, etc.) are tied to regions or zones of the worksite rather than to the whole worksite or some non-georeferenced condition. For example, the adjustments are applied to one or more areas of a worksite to which an adjustment is determined to be relevant (e.g., such as by satisfying one or more conditions which may result in application of an adjustment to one or more locations while not applying the adjustment to one or more other locations), as opposed to applying a change in a blanket way to every location in a non-selective way.

In some examples described herein, the models determine and apply those adjustments to selective portions or zones of the worksite based on a set of a priori data, which, in some instances, is multivariate in nature. For example, adjustments may, without limitation, be tied to defined portions of the worksite based on site-specific factors such as topography, soil type, crop variety, soil moisture, as well as various other factors, alone or in combination. Consequently, the adjustments are applied to the portions of the field in which the site-specific factors satisfy one or more criteria and not to other portions of the field where those site-specific factors do not satisfy the one or more criteria. Thus, in some examples described herein, the model generates a revised functional predictive map for at least the current location or zone, the unworked part of the worksite, or the whole worksite.

As an example, in which the adjustment is applied only to certain areas of the field, consider the following. The system may determine that a detected in-situ characteristic value (e.g., detected ground engagement characteristic value) varies from a predictive value of the characteristic (e.g., predictive ground engagement characteristic value), such as by a threshold amount. This deviation may only be detected in areas of the field where the elevation of the worksite is above a certain level. Thus, the revision to the predictive value is only applied to other areas of the worksite having elevation above the certain level. In this simpler example, the predictive characteristic value and elevation at the point the deviation occurred and the detected characteristic value and elevation at the point the deviation cross the threshold are used to generate a linear equation. The linear equation is used to adjust the predictive characteristic value in areas of the worksite (which have not yet been operated on in the current operation, such as unplanted/unseeded areas) in the functional predictive map as a function of elevation and the predicted characteristic value. This results in a revised functional predictive map in which some values are adjusted while others remain unchanged based on selected criteria, e.g., elevation as well as threshold deviation. The revised functional map is then used to generate a revised functional control zone map for controlling the machine.

As an example, without limitation, consider an instance of the paradigm described herein which is parameterized as follows.

One or more maps of the field are obtained, such as one or more of a topographic map, a speed map, a soil moisture map, a soil type map, a soil roughness map, an irrigation map, a tillage map, a traffic map, a compaction map, and another type of map.

In-situ sensors generate sensor data indicative of in-situ characteristic values, such as in-situ values of one or more ground engagement characteristics (e.g., one or more of downforce margin, ride quality, percent ground contact, and machine dynamics).

A predictive model generator generates one or more predictive models based on the one or more obtained maps and the in-situ sensor data, such as a predictive ground engagement model.

A predictive map generator generates one or more functional predictive maps based on a model generated by the predictive model generator and the one or more obtained maps. For example, the predictive map generator may generate a functional predictive ground engagement map that maps predictive values of one or more ground engagement characteristics to one or more locations on the worksite based on a predictive ground engagement model and the one or more obtained maps.

Control zones, which include machine settings values, can be incorporated into the functional predictive ground engagement map to generate a functional predictive ground engagement map with control zones.

As the mobile machine continues to operate at the worksite, additional in-situ sensor data is collected. A learning trigger criteria can be detected, such as threshold amount of additional in-situ sensor data being collected, a magnitude of change in a relationship (e.g., the in-situ characteristic values varies to a certain [e.g., threshold] degree from a predictive value of the characteristic), and operator or user makes edits to the predictive map(s) or to a control algorithm, or both, a certain (e.g., threshold) amount of time elapses, as well as various other learning trigger criteria. The predictive model(s) are then revised based on the additional in-situ sensor data and the values from the obtained maps. The functional predictive maps or the functional predictive control zone maps, or both, are then revised based on the revised model(s) and the values in the obtained maps.

The present discussion has mentioned processors and servers. In some examples, the processors and servers include computer processors with associated memory and timing circuitry, not separately shown. They are functional parts of the systems or devices to which they belong and are activated by and facilitate the functionality of the other components or items in those systems.

Also, a number of user interface displays have been discussed. The displays can take a wide variety of different forms and can have a wide variety of different user actuatable operator interface mechanisms disposed thereon. For instance, user actuatable operator interface mechanisms may include text boxes, check boxes, icons, links, drop-down menus, search boxes, etc. The user actuatable operator interface mechanisms can also be actuated in a wide variety of different ways. For instance, they can be actuated using operator interface mechanisms such as a point and click device, such as a track ball or mouse, hardware buttons, switches, a joystick or keyboard, thumb switches or thumb pads, etc., a virtual keyboard or other virtual actuators. In addition, where the screen on which the user actuatable operator interface mechanisms are displayed is a touch sensitive screen, the user actuatable operator interface mechanisms can be actuated using touch gestures. Also, user actuatable operator interface mechanisms can be actuated using speech commands using speech recognition functionality. Speech recognition may be implemented using a speech detection device, such as a microphone, and software that functions to recognize detected speech and execute commands based on the received speech.

A number of data stores have also been discussed. It will be noted the data stores can each be broken into multiple data stores. In some examples, one or more of the data stores may be local to the systems accessing the data stores, one or more of the data stores may all be located remote form a system utilizing the data store, or one or more data stores may be local while others are remote. All of these configurations are contemplated by the present disclosure. Also, the figures show a number of blocks with functionality ascribed to each block. It will be noted that fewer blocks can be used to illustrate that the functionality ascribed to multiple different blocks is performed by fewer components. Also, more blocks can be used illustrating that the functionality may be distributed among more components. In different examples, some functionality may be added, and some may be removed.

It will be noted that the above discussion has described a variety of different systems, components, logic and interactions. It will be appreciated that any or all of such systems, components, logic and interactions may be implemented by hardware items, such as processors, memory, or other processing components, some of which are described below, that perform the functions associated with those systems, components, or logic, or interactions. In addition, any or all of the systems, components, logic and interactions may be implemented by software that is loaded into a memory and is subsequently executed by a processor or server or other computing component, as described below. Any or all of the systems, components, logic and interactions may also be implemented by different combinations of hardware, software, firmware, etc., some examples of which are described below. These are some examples of different structures that may be used to implement any or all of the systems, components, logic and interactions described above. Other structures may be used as well.

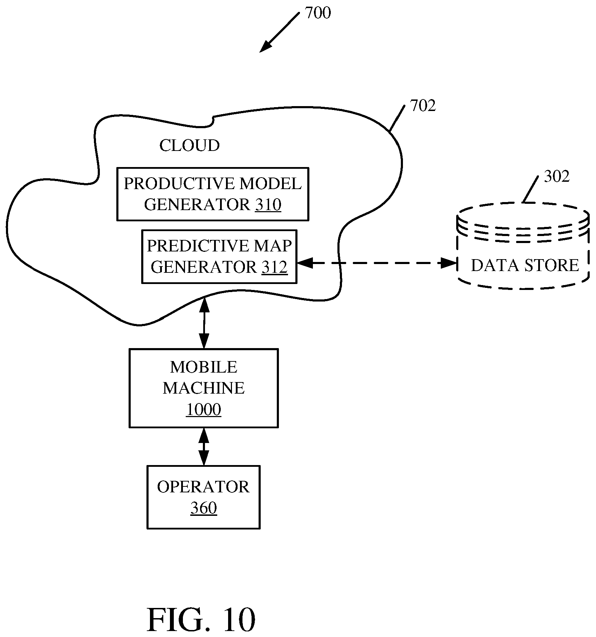

FIG. 10 is a block diagram of mobile machine 1000, which may be similar to mobile machine 100 shown in FIG. 7. The mobile machine 1000 communicates with elements in a remote server architecture 700. In some examples, remote server architecture 700 provides computation, software, data access, and storage services that do not require end-user knowledge of the physical location or configuration of the system that delivers the services. In various examples, remote servers may deliver the services over a wide area network, such as the internet, using appropriate protocols. For instance, remote servers may deliver applications over a wide area network and may be accessible through a web browser or any other computing component. Software or components shown in FIG. 7 as well as data associated therewith, may be stored on servers at a remote location. The computing resources in a remote server environment may be consolidated at a remote data center location, or the computing resources may be dispersed to a plurality of remote data centers. Remote server infrastructures may deliver services through shared data centers, even though the services appear as a single point of access for the user. Thus, the components and functions described herein may be provided from a remote server at a remote location using a remote server architecture. Alternatively, the components and functions may be provided from a server, or the components and functions can be installed on client devices directly, or in other ways.

In the example shown in FIG. 10, some items are similar to those shown in FIG. 7 and those items are similarly numbered. FIG. 10 specifically shows that predictive model generator 310 or predictive map generator 312, or both, may be located at a server location 702 that is remote from the mobile machine 1000. Therefore, in the example shown in FIG. 10, mobile machine 1000 accesses systems through remote server location 702. In other examples, various other items may also be located at server location 702, such as data store 302, map selector 309, predictive model 311, functional predictive maps 263 (including predictive maps 264 and predictive control zone maps 265), control zone generator 313, and processing system 338.

FIG. 10 also depicts another example of a remote server architecture. FIG. 10 shows that some elements of FIG. 7 may be disposed at a remote server location 702 while others may be located elsewhere. By way of example, data store 302 may be disposed at a location separate from location 702 and accessed via the remote server at location 702. Regardless of where the elements are located, the elements can be accessed directly by mobile machine 1000 through a network such as a wide area network or a local area network; the elements can be hosted at a remote site by a service; or the elements can be provided as a service or accessed by a connection service that resides in a remote location. Also, data may be stored in any location, and the stored data may be accessed by, or forwarded to, operators, users or systems. For instance, physical carriers may be used instead of, or in addition to, electromagnetic wave carriers. In some examples, where wireless telecommunication service coverage is poor or nonexistent, another machine, such as a fuel truck or other mobile machine or vehicle, may have an automated, semi-automated or manual information collection system. As the mobile machine 1000 comes close to the machine containing the information collection system, such as a fuel truck prior to fueling, the information collection system collects the information from the mobile machine 1000 using any type of ad-hoc wireless connection. The collected information may then be forwarded to another network when the machine containing the received information reaches a location where wireless telecommunication service coverage or other wireless coverage- is available. For instance, a fuel truck may enter an area having wireless communication coverage when traveling to a location to fuel other machines or when at a main fuel storage location. All of these architectures are contemplated herein. Further, the information may be stored on the mobile machine 1000 until the mobile machine 1000 enters an area having wireless communication coverage. The mobile machine 1000, itself, may send the information to another network.

It will also be noted that the elements of FIG. 7, or portions thereof, may be disposed on a wide variety of different devices. One or more of those devices may include an on-board computer, an electronic control unit, a display unit, a server, a desktop computer, a laptop computer, a tablet computer, or other mobile device, such as a palm top computer, a cell phone, a smart phone, a multimedia player, a personal digital assistant, etc.

In some examples, remote server architecture 700 may include cybersecurity measures. Without limitation, these measures may include encryption of data on storage devices, encryption of data sent between network nodes, authentication of people or processes accessing data, as well as the use of ledgers for recording metadata, data, data transfers, data accesses, and data transformations. In some examples, the ledgers may be distributed and immutable (e.g., implemented as blockchain).

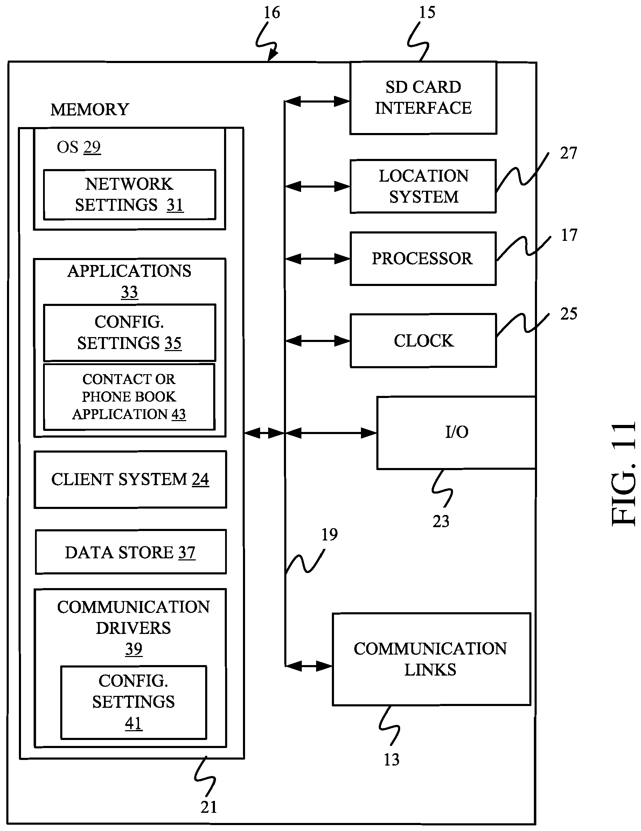

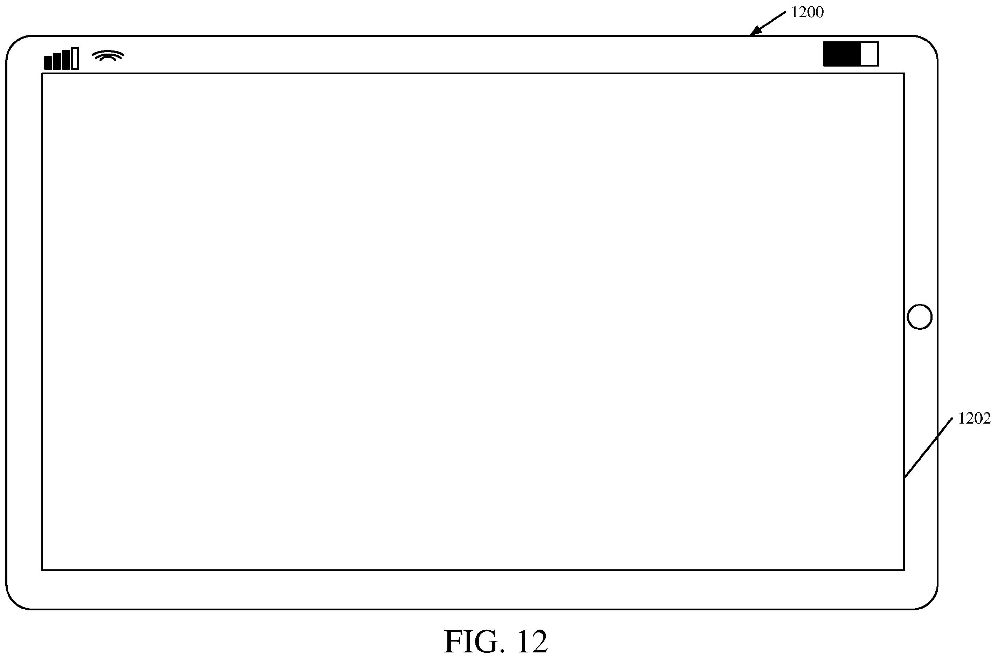

FIG. 11 is a simplified block diagram of one illustrative example of a handheld or mobile computing device that can be used as a user's or client's hand held device 16, in which the present system (or parts of it) can be deployed. For instance, a mobile device can be deployed in the operator compartment of mobile machine 100 for use in generating, processing, or displaying the maps discussed above. FIGS. 12-13 are examples of handheld or mobile devices.

FIG. 11 provides a general block diagram of the components of a client device 16 that can run some components shown in FIG. 7, that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from other FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a LORAN system, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and nonvolatile computer-readable memory devices. Memory 21 may also include computer storage media (described below). Memory 21 stores computer readable instructions that, when executed by processor 17, cause the processor to perform computer-implemented steps or functions according to the instructions. Processor 17 may be activated by other components to facilitate their functionality as well.

FIG. 12 shows one example in which device 16 is a tablet computer 1200. In FIG. 12, computer 1200 is shown with user interface display screen 1202. Screen 1202 can be a touch screen or a pen-enabled interface that receives inputs from a pen or stylus. Tablet computer 1200 may also use an on-screen virtual keyboard. Of course, computer 1200 might also be attached to a keyboard or other user input device through a suitable attachment mechanism, such as a wireless link or USB port, for instance. Computer 1200 may also illustratively receive voice inputs as well.

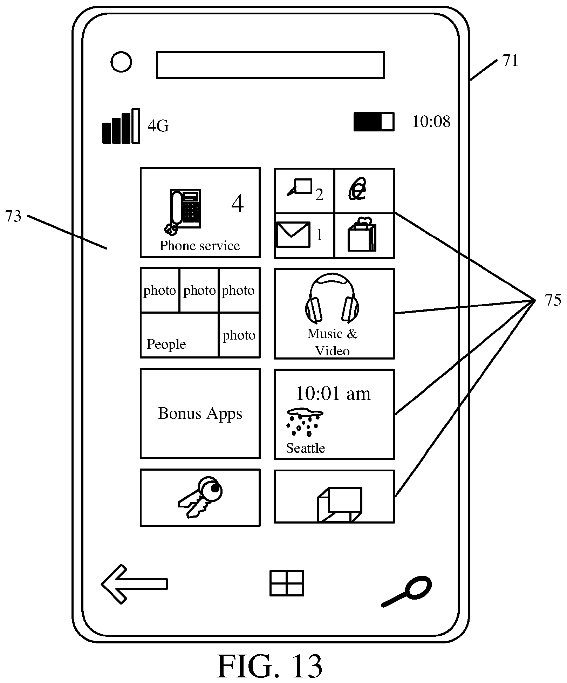

FIG. 13 is similar to FIG. 12 except that the device is a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

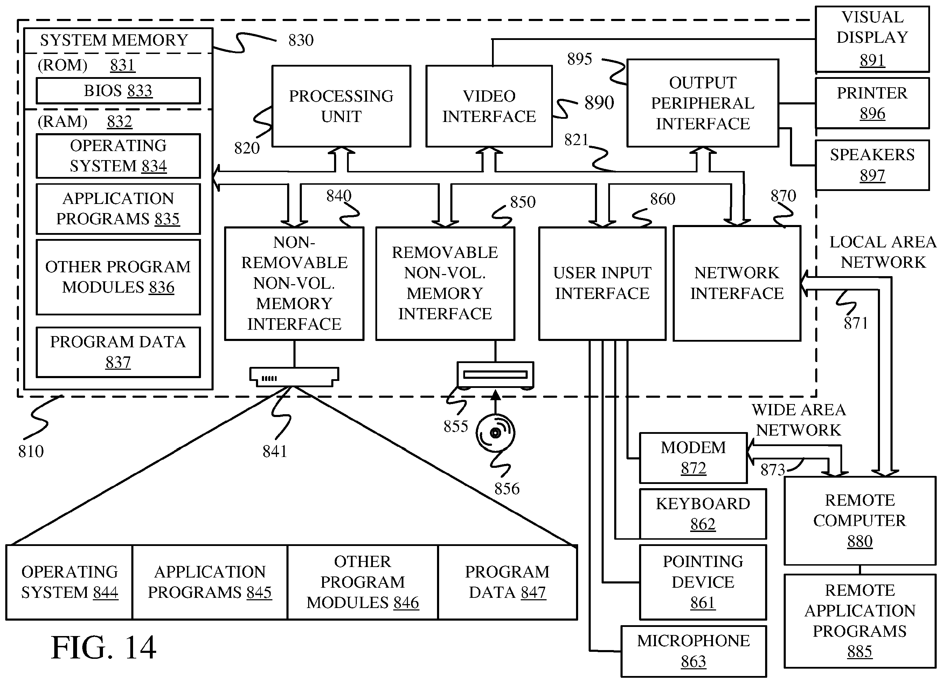

FIG. 14 is one example of a computing environment in which elements of FIG. 7 can be deployed. With reference to FIG. 14, an example system for implementing some embodiments includes a computing device in the form of a computer 810 programmed to operate as discussed above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to FIG. 7 can be deployed in corresponding portions of FIG. 14.

Computer 810 typically includes a variety of computer readable media. Computer readable media may be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. Computer readable media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory or both such as read only memory (ROM) 831 and random access memory (RAM) 832. A basic input/output system 833 (BIOS), containing the basic routines that help to transfer information between elements within computer 810, such as during startup, is typically stored in ROM 831. RAM 832 typically contains data or program modules or both that are immediately accessible to and/or presently being operated on by processing unit 820. By way of example, and not limitation, FIG. 14 illustrates operating system 834, application programs 835, other program modules 836, and program data 837.

The computer 810 may also include other removable/non-removable volatile/nonvolatile computer storage media. By way of example only, FIG. 14 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 14, provide storage of computer readable instructions, data structures, program modules and other data for the computer 810. In FIG. 14, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 14 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of the claims.

The foregoing description and examples has been set forth merely to illustrate the disclosure and are not intended as being limiting. Each of the disclosed aspects and embodiments of the present disclosure may be considered individually or in combination with other aspects, embodiments, and variations of the disclosure. In addition, unless otherwise specified, none of the steps of the methods of the present disclosure are confined to any particular order of performance. Modifications of the disclosed embodiments incorporating the spirit and substance of the disclosure may occur to persons skilled in the art and such modifications are within the scope of the present disclosure. Furthermore, all references cited herein are incorporated by reference in their entirety.

Terms of orientation used herein, such as "top," "bottom," "horizontal," "vertical," "longitudinal," "lateral," and "end" are used in the context of the illustrated embodiment. However, the present disclosure should not be limited to the illustrated orientation. Indeed, other orientations are possible and are within the scope of this disclosure. Terms relating to circular shapes as used herein, such as diameter or radius, should be understood not to require perfect circular structures, but rather should be applied to any suitable structure with a crosssectional region that can be measured from side-to-side. Terms relating to shapes generally, such as "circular" or "cylindrical" or "semi-circular" or "semi-cylindrical" or any related or similar terms, are not required to conform strictly to the mathematical definitions of circles or cylinders or other structures, but can encompass structures that are reasonably close approximations.

Conditional language used herein, such as, among others, "can," "might," "may," "e.g.," and the like, unless specifically stated otherwise, or otherwise understood within the context as used, is generally intended to convey that some embodiments include, while other embodiments do not include, certain features, elements, and/or states. Thus, such conditional language is not generally intended to imply that features, elements, blocks, and/or states are in any way required for one or more embodiments or that one or more embodiments necessarily include logic for deciding, with or without author input or prompting, whether these features, elements and/or states are included or are to be performed in any particular embodiment.

Conjunctive language, such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

The terms "approximately," "about," and "substantially" as used herein represent an amount close to the stated amount that still performs a desired function or achieves a desired result. For example, in some embodiments, as the context may dictate, the terms "approximately", "about", and "substantially" may refer to an amount that is within less than or equal to 10% of the stated amount. The term "generally" as used herein represents a value, amount, or characteristic that predominantly includes or tends toward a particular value, amount, or characteristic. As an example, in certain embodiments, as the context may dictate, the term "generally parallel" can refer to something that departs from exactly parallel by less than or equal to 20 degrees.

Unless otherwise explicitly stated, articles such as "a" or "an" should generally be interpreted to include one or more described items. Accordingly, phrases such as "a device configured to" are intended to include one or more recited devices. Such one or more recited devices can be collectively configured to carry out the stated recitations. For example, "a processor configured to carry out recitations A, B, and C" can include a first processor configured to carry out recitation A working in conjunction with a second processor configured to carry out recitations B and C.

The terms "comprising," "including," "having," and the like are synonymous and are used inclusively, in an open-ended fashion, and do not exclude additional elements, features, acts, operations, and so forth. Likewise, the terms "some," "certain," and the like are synonymous and are used in an open-ended fashion. Also, the term "or" is used in its inclusive sense (and not in its exclusive sense) so that when used, for example, to connect a list of elements, the term "or" means one, some, or all of the elements in the list.

Overall, the language of the claims is to be interpreted broadly based on the language employed in the claims. The language of the claims is not to be limited to the non-exclusive embodiments and examples that are illustrated and described in this disclosure, or that are discussed during the prosecution of the application.

Although systems and methods for generating functional predictive maps and controlling a machine based on functional predictive maps have been disclosed in the context of certain embodiments and examples, this disclosure extends beyond the specifically disclosed embodiments to other alternative embodiments and/or uses of the embodiments and certain modifications and equivalents thereof. Various features and aspects of the disclosed embodiments can be combined with or substituted for one another in order to form varying modes of systems and methods for generating functional predictive maps and controlling a machine based on functional predictive maps. The scope of this disclosure should not be limited by the particular disclosed embodiments described herein.

Certain features that are described in this disclosure in the context of separate implementations can be implemented in combination in a single implementation. Conversely, various features that are described in the context of a single implementation can be implemented in multiple implementations separately or in any suitable subcombination. Although features may be described herein as acting in certain combinations, one or more features from a claimed combination can, in some cases, be excised from the combination, and the combination may be claimed as any subcombination or variation of any subcombination.

While the methods and devices described herein may be susceptible to various modifications and alternative forms, specific examples thereof have been shown in the drawings and are herein described in detail. It should be understood, however, that the invention is not to be limited to the particular forms or methods disclosed, but, to the contrary, the invention is to cover all modifications, equivalents, and alternatives falling within the spirit and scope of the various embodiments described and the appended claims. Further, the disclosure herein of any particular feature, aspect, method, property, characteristic, quality, attribute, element, or the like in connection with an embodiment can be used in all other embodiments set forth herein. Any methods disclosed herein need not be performed in the order recited. Depending on the embodiment, one or more acts, events, or functions of any of the algorithms, methods, or processes described herein can be performed in a different sequence, can be added, merged, or left out altogether (e.g., not all described acts or events are necessary for the practice of the algorithm). In some embodiments, acts or events can be performed concurrently, e.g., through multi-threaded processing, interrupt processing, or multiple processors or processor cores or on other parallel architectures, rather than sequentially. Further, no element, feature, block, or step, or group of elements, features, blocks, or steps, are necessary or indispensable to each embodiment. Additionally, all possible combinations, subcombinations, and rearrangements of systems, methods, features, elements, modules, blocks, and so forth are within the scope of this disclosure. The use of sequential, or timeordered language, such as "then," "next," "after," "subsequently," and the like, unless specifically stated otherwise, or otherwise understood within the context as used, is generally intended to facilitate the flow of the text and is not intended to limit the sequence of operations performed. Thus, some embodiments may be performed using the sequence of operations described herein, while other embodiments may be performed following a different sequence of operations.

Moreover, while operations may be depicted in the drawings or described in the specification in a particular order, such operations need not be performed in the particular order shown or in sequential order, and all operations need not be performed, to achieve the desirable results. Other operations that are not depicted or described can be incorporated in the example methods and processes. For example, one or more additional operations can be performed before, after, simultaneously, or between any of the described operations. Further, the operations may be rearranged or reordered in other implementations. Also, the separation of various system components in the implementations described herein should not be understood as requiring such separation in all implementations, and it should be understood that the described components and systems can generally be integrated together in a single product or packaged into multiple products. Additionally, other implementations are within the scope of this disclosure.

Some embodiments have been described in connection with the accompanying figures. Certain figures are drawn and/or shown to scale, but such scale should not be limiting, since dimensions and proportions other than what are shown are contemplated and are within the scope of the embodiments disclosed herein. Distances, angles, etc. are merely illustrative and do not necessarily bear an exact relationship to actual dimensions and layout of the devices illustrated.

The methods disclosed herein may include certain actions taken by a practitioner; however, the methods can also include any third-party instruction of those actions, either expressly or by implication. For example, actions such as "positioning an electrode" include "instructing positioning of an electrode."

The ranges disclosed herein also encompass any and all overlap, subranges, and combinations thereof. Language such as "up to," "at least," "greater than," "less than," "between," and the like includes the number recited. Numbers preceded by a term such as "about" or "approximately" include the recited numbers and should be interpreted based on the circumstances (e.g., as accurate as reasonably possible under the circumstances, for example ±5%, ±10%, ±15%, etc.). For example, "about 1 V" includes "1 V." Phrases preceded by a term such as "substantially" include the recited phrase and should be interpreted based on the circumstances (e.g., as much as reasonably possible under the circumstances). For example, "substantially perpendicular" includes "perpendicular." Unless stated otherwise, all measurements are at standard conditions including temperature and pressure.

In summary, various embodiments and examples of systems and methods for generating functional predictive maps and controlling a machine based on functional predictive maps, have been disclosed. Although the systems and methods for generating functional predictive maps and controlling a machine based on functional predictive maps have been disclosed in the context of those embodiments and examples, this disclosure extends beyond the specifically disclosed embodiments to other alternative embodiments and/or other uses of the embodiments, as well as to certain modifications and equivalents thereof. This disclosure expressly contemplates that various features and aspects of the disclosed embodiments can be combined with, or substituted for, one another. Thus, the scope of this disclosure should not be limited by the particular disclosed embodiments described herein, but should be determined only by a fair reading of the claims that follow.

## Claims

1. An agricultural planting system (300) comprising:
a communication system (306) configured to receive an information map (358) that includes values of a characteristic corresponding to different geographic locations in a field;
an in-situ sensor (308, 180) configured to detect a value of a ground engagement characteristic corresponding to a geographic location in the field;
a predictive model generator (310, 441) configured to generate a predictive ground engagement model (311, 450) that models a relationship between the characteristic values and the ground engagement characteristic based on the value of the ground engagement characteristic detected by the in-situ sensor at the geographic location and the value of the characteristic in the information map (358) at the geographic location;
a predictive map generator (312) configured to generate a functional predictive ground engagement map (263, 460) of the worksite, that maps predictive values of the ground engagement characteristic to the different geographic locations in the worksite, based on the values of the characteristic in the information map (358) and based on the predictive ground engagement model, the predictive map generator (312) configured to configure the functional predictive ground engagement map (263, 460) for consumption by a control system (314); **characterised in**
a mobile agricultural planting machine (101) with the control system (314) configured to generate a control signal to control a suspension subsystem (354) of the mobile agricultural planting machine (101) based on the functional predictive ground engagement map (263, 460), the suspension subsystem (354) comprising a controllable suspension (113) of a set of frame wheels (111) attached to a tool bar (102) supporting the planting machine (101) over the surface at which it operates, the suspension (113) controllable to control a height of the tool bar (102) relative to the field.

2. The agricultural planting system (300) of claim 1, wherein the in-situ sensor (180, 380) is configured to detect, as the value of the ground engagement characteristic, a downforce margin value corresponding to the geographic location, the downforce margin value representing a force acting on gauge wheels (116) of the planting machine (100);
wherein the predictive ground engagement model (450) models a relationship between the characteristic values and downforce margin values based on the downforce margin value detected by the in-situ sensor corresponding to the geographic location and the value of the characteristic in the information map (358) at the geographic location; and
wherein the functional predictive ground engagement map (263, 460) maps predictive downforce margin values to the different geographic locations in the worksite based on the values of the characteristic in the information map (358) and based on the predictive ground engagement model.

3. The agricultural planting system (300) of one of the claims 1 or 2, wherein the in-situ sensor (180, 382) is configured to detect, as the value of the ground engagement characteristic, a ride quality value corresponding to the geographic location, the ride quality value representing acceleration of the planting machine (101) or the row units (106);
wherein the predictive ground engagement model (450) models a relationship between the characteristic values and ride quality values based on the ride quality value detected by the in-situ sensor corresponding to the geographic location and the value of the characteristic in the information map (358) at the geographic location; and
wherein the functional predictive ground engagement map (263, 460) maps predictive ride quality values to the different geographic locations in the worksite based on the values of the characteristic in the information map (358) and based on the predictive ground engagement model.

4. The agricultural planting system (300) of one of the claims 1 to 3, wherein the in-situ sensor (180, 384) is configured to detect, as the value of the ground engagement characteristic, a percent ground contact value corresponding to the geographic location,
wherein the predictive ground engagement model (450) models a relationship between the characteristic values and percent ground contact values based on the percent ground contact value detected by the in-situ sensor corresponding to the geographic location and the value of the characteristic in the information map (358) at the geographic location; and
wherein the functional predictive ground engagement map (263, 460) maps predictive percent ground contact values to the different geographic locations in the worksite based on the values of the characteristic in the information map (358) and based on the predictive ground engagement model.

5. The agricultural planting system (300) of one of the claims 1 to 4, wherein the in-situ sensor (180, 388) is configured to detect, as the value of the ground engagement characteristic, a machine dynamics value corresponding to the geographic location;
wherein the predictive ground engagement model (450) models a relationship between the characteristic values and machine dynamics values based on the machine dynamics value detected by the in-situ sensor corresponding to the geographic location and the value of the characteristic in the information map (358) at the geographic location; and
wherein the functional predictive ground engagement map (263, 460) maps predictive machine dynamics values to the different geographic locations in the worksite based on the values of the characteristic in the information map (358) and based on the predictive ground engagement model.

6. The agricultural planting system (300) of one of the claims 1 to 5, wherein the information map (358) comprises one or more information maps (358), wherein each one of the one or more information maps (358) include values of a respective characteristic corresponding to different geographic locations in the field, wherein the one or more information maps (358) comprise one or more of:
a topographic map (430) that maps, as the values of the respective characteristic, topographic values to the different geographic locations in the field;
a speed map (430) that maps, as the values of the respective characteristic, speed values to the different geographic locations in the field;
a soil moisture map (430) that maps, as the values of the respective characteristic, soil moisture values to the different geographic locations in the field;
a soil type map (430) that maps, as the values of the respective characteristic, soil type values to the different geographic locations in the field;
a soil roughness map (430) that maps, as the values of the respective characteristic, soil roughness values to the different geographic locations in the field;
an irrigation map (430) that maps, as the values of the respective characteristic, irrigation values to the different geographic locations in the field;
a tillage map (430) that maps, as the values of the respective characteristic, tillage values to the different geographic locations in the field;
a traffic map (430) that maps, as the values of the respective characteristic, traffic characteristic values to the different geographic locations in the field; and
a compaction map (430) that maps, as the values of the respective characteristic, compaction values to the different geographic locations in the field; and
wherein the predictive ground engagement model (450) models a relationship between one or more of topographic values, speed values, soil moisture values, soil type values, soil roughness values, irrigation values, tillage values, traffic characteristic values, and compaction values and values of the ground engagement characteristic based on the value of the ground engagement characteristic detected by the in-situ sensor corresponding to the geographic location and one or more of the topographic value, the speed value, the soil moisture value, the soil type value, the soil roughness value, the irrigation value, the tillage value, the ruts value, and the compaction value, in the respective maps, at the geographic location, the predictive ground engagement model being configured to receive one or more of a topographic value, a speed value, a soil moisture value, a soil type value, a soil roughness value, an irrigation value, a tillage value, a traffic characteristic value, and a compaction value, as one or more model inputs, and generate a predictive value of the ground engagement characteristic as a model output based on the modeled relationship; and
wherein the predictive map generator (312) generates the functional predictive ground engagement map (263, 460) of the worksite, that maps predictive values of the ground engagement characteristic to the different geographic locations in the worksite, based on one or more of the topographic values, the speed values, the soil moisture values, the soil type values, the soil roughness values, the irrigation values, the tillage values, the traffic characteristic values, and the compaction values in the respective information map (358) and based on the predictive ground engagement model.

7. The agricultural planting system (300) of one of the claims 1 to 6 wherein the control system (314) is configured to generate a control signal to control a propulsion subsystem (350) of a mobile agricultural planting machine (100), to control a speed of the mobile agricultural planting machine based on the functional predictive ground engagement map (263, 460).

8. The agricultural planting system (300) of one of the claims 1 to 6 wherein the control system (314) is configured to generate a control signal to control a downforce subsystem (341) of a mobile agricultural planting machine (100) to adjust a downforce applied by the downforce subsystem on a component of the mobile agricultural planting machine, based on the functional predictive ground engagement map (263, 460).

9. The agricultural planting system (300) of one of the claims 1 to 6 wherein the control system (314) is configured to generate a control signal to control a depth subsystem (343) of a mobile agricultural planting machine to adjust the planting depth of an agricultural planting machine (100), based on the functional predictive ground engagement map (263, 460).

10. A computer implemented method of generating a functional predictive ground engagement map (263, 460), comprising the agricultural planting system (300) of one of the claims 1 to 9 and further comprising the steps of:
receiving an information map (358) that indicates values of a characteristic corresponding to different geographic locations in a field;
detecting, with an in-situ sensor (308, 180), a value of a ground engagement characteristic corresponding to a geographic location;
generating a predictive ground engagement model (311, 450) that models a relationship between the characteristic and the ground engagement characteristic;
controlling a predictive map generator (312) to generate the functional predictive ground engagement map (263, 460) of the field, that maps predictive values of the ground engagement characteristic to the different locations in the field based on the values of the characteristic in the information map (358) and the predictive ground engagement model; **characterised in**
generating control signals to control a control a suspension subsystem (354) on the mobile agricultural planting machine (100) based on the functional predictive ground engagement map (263, 460) the suspension subsystem (354) comprising a controllable suspension (113) of a set of frame wheels (111) attached to a tool bar (102) supporting the planting machine (101) over the surface at which it operates, the suspension (113) controllable to control a height of the tool bar (102) relative to the field.

11. The computer implemented method of claim 10, wherein detecting, with the in-situ sensor (180, 380, 382, 384, 388), a value of the ground engagement characteristic comprises detecting, with one or more in-situ sensors, one or more of a downforce margin value, a ride quality value, a percent ground contact value, and a machine dynamics value.

12. The computer implemented method of one of the claims 10 to 11, wherein generating the predictive ground engagement model (450) comprises:
identifying a relationship between the characteristic and one or more of downforce margin, ride quality, percent ground contact, and machine dynamics based on one or more of the downforce margin value, ride quality value, the percent ground contact value, and the machine dynamics value detected by the one or more in-situ sensors corresponding to the geographic location and the value of the characteristic, in the information map (358), at the geographic location; and
controlling a predictive model generator (310, 441) to generate the predictive ground engagement model that receives a value of the characteristic as a model input and generates one or more of a predictive downforce margin value, a predictive ride quality value, a predictive percent ground contact value, and a predictive machine dynamics value as a model output based on the identified relationship; and
wherein controlling the predictive map generator (312) comprises:
controlling the predictive map generator (312) to generate the functional predictive ground engagement map (263, 460) of the field, that maps one or more of predictive downforce margin values, predictive ride quality values, predictive percent ground contact values, and predictive machine dynamics values to the different geographic locations in the field based on the values of the characteristic in the information map (358) and the predictive ground engagement model.

## Patentansprüche

1. Landwirtschaftliches Pflanzsystem (300), umfassend:
ein Kommunikationssystem (306), das dazu ausgelegt ist, eine Informationskarte (358) zu empfangen, die Werte einer Charakteristik beinhaltet, die unterschiedlichen geographischen Orten in einem Feld entsprechen;
einen In-situ-Sensor (308, 180), der dazu ausgelegt ist, einen Wert einer Bodeneingriffscharakteristik zu detektieren, der einem geografischen Ort in dem Feld entspricht;
einen prädiktiven Modellgenerator (310, 441), der dazu ausgelegt ist, ein prädiktives Bodeneingriffsmodell (311, 450), das eine Beziehung zwischen den Charakteristikwerten und der Bodeneingriffscharakteristik modelliert, basierend auf dem Wert der Bodeneingriffscharakteristik, der durch den In-situ-Sensor an dem geografischen Ort detektiert wird, und dem Wert der Charakteristik in der Informationskarte (358) an dem geografischen Ort zu erzeugen;
einen prädiktiven Kartengenerator (312), der dazu ausgelegt ist, eine funktionale prädiktive Bodeneingriffskarte (263, 460) des Arbeitsbereiches, die prädiktive Werte der Bodeneingriffscharakteristik auf die unterschiedlichen geografischen Orte in dem Arbeitsbereich abbildet, basierend auf den Werten der Charakteristik in der Informationskarte (358) und basierend auf dem prädiktiven Bodeneingriffsmodell zu erzeugen, wobei der prädiktive Kartengenerator (312) dazu ausgelegt ist, die funktionale prädiktive Bodeneingriffskarte (263, 460) auf einen Verbrauch durch ein Steuersystem (314) auszulegen; **gekennzeichnet durch** eine mobile landwirtschaftliche Pflanzmaschine (101) mit dem Steuersystem (314), das dazu ausgelegt ist, ein Steuersignal zum Steuern eines Aufhängungssubsystems (354) der mobilen landwirtschaftlichen Pflanzmaschine (101) basierend auf der funktionalen prädiktiven Bodeneingriffskarte (263, 460) zu erzeugen, wobei das Aufhängungssubsystem (354) eine steuerbare Aufhängung (113) eines Satzes von an einer Werkzeugstange (102) angebrachten Rahmenrädern (111) umfasst, die die Pflanzmaschine (101) über der Oberfläche, auf der sie betrieben wird, tragen, wobei die Aufhängung (113) zum Steuern einer Höhe der Werkzeugstange (102) relativ zum Feld steuerbar ist.

2. Landwirtschaftliches Pflanzsystem (300) nach Anspruch 1, wobei der In-situ-Sensor (180, 380) dazu ausgelegt ist, als den Wert der Bodeneingriffscharakteristik einen Anpresskraftspielraumwert, der dem geografischen Ort entspricht, zu detektieren, wobei der Anpresskraftspielraumwert eine Kraft repräsentiert, die auf Einstellräder (116) der Pflanzmaschine (100) wirkt; wobei das prädiktive Bodeneingriffsmodell (450) eine Beziehung zwischen den Charakteristikwerten und Anpresskraftspielraumwerten basierend auf dem Anpresskraftspielraumwert, der durch den In-situ-Sensor detektiert wird, der dem geografischen Ort entspricht, und dem Wert der Charakteristik in der Informationskarte (358) an dem geografischen Ort modelliert; und
wobei die funktionale prädiktive Bodeneingriffskarte (263, 460) prädiktive Anpresskraftspielraumwerte auf die unterschiedlichen geografischen Orte in dem Arbeitsbereich basierend auf den Werten der Charakteristik in der Informationskarte (358) und basierend auf dem prädiktiven Bodeneingriffsmodell abbildet.

3. Landwirtschaftliches Pflanzsystem (300) nach einem der Ansprüche 1 oder 2, wobei der In-situ-Sensor (180, 382) dazu ausgelegt ist, als den Wert der Bodeneingriffscharakteristik einen Fahrqualitätswert zu detektieren, der dem geografischen Ort entspricht, wobei der Fahrqualitätswert eine Beschleunigung der Pflanzmaschine (101) oder der Reiheneinheiten (106) repräsentiert;
wobei das prädiktive Bodeneingriffsmodell (450) eine Beziehung zwischen den Charakteristikwerten und Fahrqualitätswerten basierend auf dem Fahrqualitätswert, der durch den In-situ-Sensor detektiert wird, der dem geografischen Ort entspricht, und dem Wert der Charakteristik in der Informationskarte (358) an dem geografischen Ort modelliert; und
wobei die funktionale prädiktive Bodeneingriffskarte (263, 460) prädiktive Fahrqualitätswerte auf die unterschiedlichen geografischen Orte in dem Arbeitsbereich basierend auf den Werten der Charakteristik in der Informationskarte (358) und basierend auf dem prädiktiven Bodeneingriffsmodell abbildet.

4. Landwirtschaftliches Pflanzsystem (300) nach einem der Ansprüche 1 bis 3, wobei der In-situ-Sensor (180, 384) dazu ausgelegt ist, als den Wert der Bodeneingriffscharakteristik einen prozentualen Bodenkontaktwert zu detektieren, der dem geografischen Ort entspricht,
wobei das prädiktive Bodeneingriffsmodell (450) eine Beziehung zwischen den Charakteristikwerten und prozentualen Bodenkontaktwerten basierend auf dem prozentualen Bodenkontaktwert, der durch den In-situ-Sensor detektiert wird, der dem geografischen Ort entspricht, und dem Wert der Charakteristik in der Informationskarte (358) an dem geografischen Ort modelliert; und
wobei die funktionale prädiktive Bodeneingriffskarte (263, 460) prädiktive prozentuale Bodenkontaktwerte auf die unterschiedlichen geografischen Orte in dem Arbeitsbereich basierend auf den Werten der Charakteristik in der Informationskarte (358) und basierend auf dem prädiktiven Bodeneingriffsmodell abbildet.

5. Landwirtschaftliches Pflanzsystem (300) nach einem der Ansprüche 1 bis 4, wobei der In-situ-Sensor (180, 388) dazu ausgelegt ist, als den Wert der Bodeneingriffscharakteristik einen Maschinendynamikwert zu detektieren, der dem geografischen Ort entspricht; wobei das prädiktive Bodeneingriffsmodell (450) eine Beziehung zwischen den Charakteristikwerten und Maschinendynamikwerten basierend auf dem Maschinendynamikwert, der durch den In-situ-Sensor detektiert wird, der dem geografischen Ort entspricht, und dem Wert der Charakteristik in der Informationskarte (358) an dem geografischen Ort modelliert; und
wobei die funktionale prädiktive Bodeneingriffskarte (263, 460) prädiktive Maschinendynamikwerte auf die unterschiedlichen geografischen Orte in dem Arbeitsbereich basierend auf den Werten der Charakteristik in der Informationskarte (358) und basierend auf dem prädiktiven Bodeneingriffsmodell abbildet.

6. Landwirtschaftliches Pflanzsystem (300) nach einem der Ansprüche 1 bis 5, wobei die Informationskarte (358) eine oder mehrere Informationskarten (358) umfasst, wobei jede der einen oder mehreren Informationskarten (358) Werte einer jeweiligen Charakteristik beinhaltet, die unterschiedlichen geografischen Orten in dem Feld entsprechen, wobei die eine oder die mehreren Informationskarten (358) eines oder mehrere von Folgendem umfassen:
eine topografische Karte (430), die als die Werte der jeweiligen Charakteristik topografische Werte auf die unterschiedlichen geografischen Orte in dem Feld abbildet;
eine Geschwindigkeitskarte (430), die als die Werte der jeweiligen Charakteristik Geschwindigkeitswerte auf die unterschiedlichen geografischen Orte in dem Feld abbildet;
eine Bodenfeuchtigkeitskarte (430), die als die Werte der jeweiligen Charakteristik Bodenfeuchtigkeitswerte auf die unterschiedlichen geografischen Orte in dem Feld abbildet;
eine Bodentypkarte (430), die als die Werte der jeweiligen Charakteristik Bodentypwerte auf die unterschiedlichen geografischen Orte in dem Feld abbildet;
eine Bodenrauigkeitskarte (430), die als die Werte der jeweiligen Charakteristik Bodenrauigkeitswerte auf die unterschiedlichen geografischen Orte in dem Feld abbildet;
eine Bewässerungskarte (430), die als die Werte der jeweiligen Charakteristik Bewässerungswerte auf die unterschiedlichen geografischen Orte in dem Feld abbildet;
eine Bodenbearbeitungskarte (430), die als die Werte der jeweiligen Charakteristik Bodenbearbeitungswerte auf die unterschiedlichen geografischen Orte in dem Feld abbildet;
eine Verkehrskarte (430), die als die Werte der jeweiligen Charakteristik Verkehrscharakteristikwerte auf die unterschiedlichen geografischen Orte in dem Feld abbildet; und
eine Verdichtungskarte (430), die als die Werte der jeweiligen Charakteristik Verdichtungswerte auf die unterschiedlichen geografischen Orte in dem Feld abbildet; und
wobei das prädiktive Bodeneingriffsmodell (450) eine Beziehung zwischen einem oder mehreren von topographischen Werten, Geschwindigkeitswerten, Bodenfeuchtigkeitswerten, Bodentypwerten, Bodenrauigkeitswerten, Bewässerungswerten, Bodenbearbeitungswerten, Verkehrscharakteristikwerten und Verdichtungswerten und Werten der Bodeneingriffscharakteristik basierend auf dem Wert der Bodeneingriffscharakteristik, der durch den In-situ-Sensor detektiert wird, der dem geografischen Ort entspricht, und einem oder mehreren des topographischen Werts, des Geschwindigkeitswerts, des Bodenfeuchtigkeitswerts, des Bodentypwerts, des Bodenrauigkeitswerts, des Bewässerungswerts, des Bodenbearbeitungswerts, des Furchenwerts und des Verdichtungswerts in den jeweiligen Karten an dem geografischen Ort modelliert, wobei das prädiktive Bodeneingriffsmodell dazu ausgelegt ist, einen oder mehrere eines topographischen Werts, eines Geschwindigkeitswerts, eines Bodenfeuchtigkeitswerts, eines Bodentypwerts, eines Bodenrauigkeitswerts, eines Bewässerungswerts, eines Bodenbearbeitungswerts, eines Verkehrscharakteristikwerts und eines Verdichtungswerts als eine oder mehrere Modelleingaben zu empfangen und einen prädiktiven Wert der Bodeneingriffscharakteristik als eine Modellausgabe basierend auf der modellierten Beziehung zu erzeugen; und
wobei der prädiktive Kartengenerator (312) die funktionale prädiktive Bodeneingriffskarte (263, 460) des Arbeitsbereiches, die prädiktive Werte der Bodeneingriffscharakteristik auf die unterschiedlichen geografischen Orte in dem Arbeitsbereich abbildet, basierend auf einem oder mehreren der topographischen Werte, der Geschwindigkeitswerte, der Bodenfeuchtigkeitswerte, der Bodentypwerte, der Bodenrauigkeitswerte, der Bewässerungswerte, der Bodenbearbeitungswerte, der Verkehrscharakteristikwerte, und der Verdichtungswerte in der jeweiligen Informationskarte (358) und basierend auf dem prädiktiven Bodeneingriffsmodell erzeugt.

7. Landwirtschaftliches Pflanzsystem (300) nach einem der Ansprüche 1 bis 6, wobei das Steuersystem (314) dazu ausgelegt ist, ein Steuersignal zum Steuern eines Antriebssubsystems (350) einer mobilen landwirtschaftlichen Pflanzmaschine (100) zum Steuern einer Geschwindigkeit der mobilen landwirtschaftlichen Pflanzmaschine basierend auf der funktionalen prädiktiven Bodeneingriffskarte (263, 460) zu erzeugen.

8. Landwirtschaftliches Pflanzsystem (300) nach einem der Ansprüche 1 bis 6, wobei das Steuersystem (314) dazu ausgelegt ist, ein Steuersignal zum Steuern eines Anpresskraftsubsystems (341) einer mobilen landwirtschaftlichen Pflanzmaschine (100) zum Anpassen einer Anpresskraft, die durch das Anpresskraftsubsystem auf eine Komponente der mobilen landwirtschaftlichen Pflanzmaschine ausgeübt wird, basierend auf der funktionalen prädiktiven Bodeneingriffskarte (263, 460) zu erzeugen.

9. Landwirtschaftliches Pflanzsystem (300) nach einem der Ansprüche 1 bis 6, wobei das Steuersystem (314) dazu ausgelegt ist, ein Steuersignal zum Steuern eines Tiefensubsystems (343) einer mobilen landwirtschaftlichen Pflanzmaschine zum Anpassen der Pflanztiefe einer landwirtschaftlichen Pflanzmaschine (100) basierend auf der funktionalen prädiktiven Bodeneingriffskarte (263, 460) zu erzeugen.

10. Computerimplementiertes Verfahren zum Erzeugen einer funktionalen prädiktiven Bodeneingriffskarte (263, 460), umfassend das landwirtschaftliche Pflanzsystem (300) nach einem der Ansprüche 1 bis 9 und ferner umfassend die folgenden Schritte:
Empfangen einer Informationskarte (358), die Werte einer Charakteristik angibt, die unterschiedlichen geografischen Orten in einem Feld entsprechen;
Detektieren, mit einem In-situ-Sensor (308, 180), eines Werts einer Bodeneingriffscharakteristik, der einem geografischen Ort entspricht;
Erzeugen eines prädiktiven Bodeneingriffsmodells (311, 450), das eine Beziehung zwischen der Charakteristik und der Bodeneingriffscharakteristik modelliert;
Steuern eines prädiktiven Kartengenerators (312) zum Erzeugen der funktionalen prädiktiven Bodeneingriffskarte (263, 460) des Feldes, die prädiktive Werte der Bodeneingriffscharakteristik auf die unterschiedlichen Orte in dem Feld abbildet, basierend auf den Werten der Charakteristik in der Informationskarte (358) und dem prädiktiven Bodeneingriffsmodell; **gekennzeichnet durch** Erzeugen von Steuersignalen zum Steuern einer Steuerung eines Aufhängungssubsystems (354) an der mobilen landwirtschaftlichen Pflanzmaschine (100) basierend auf der funktionalen prädiktiven Bodeneingriffskarte (263, 460), wobei das Aufhängungssubsystem (354) eine steuerbare Aufhängung (113) eines Satzes von an einer Werkzeugstange (102) angebrachten Rahmenrädern (111) umfasst, die die Pflanzmaschine (101) über der Oberfläche, auf der sie betrieben wird, tragen, wobei die Aufhängung (113) zum Steuern einer Höhe der Werkzeugstange (102) relativ zum Feld steuerbar ist.

11. Computerimplementiertes Verfahren nach Anspruch 10, wobei das Detektieren, mit dem In-situ-Sensor (180, 380, 382, 384, 388), eines Wertes der Bodeneingriffscharakteristik Detektieren, mit einem oder mehreren In-situ-Sensoren, eines oder mehrerer eines Anpresskraftspielraumwerts, eines Fahrqualitätswerts, eines prozentualen Bodenkontaktwerts und eines Maschinendynamikwerts umfasst.

12. Computerimplementiertes Verfahren nach einem der Ansprüche 10 bis 11, wobei das Erzeugen des prädiktiven Bodeneingriffsmodells (450) Folgendes umfasst:
Identifizieren einer Beziehung zwischen der Charakteristik und einem oder mehreren eines Anpresskraftspielraums, einer Fahrqualität, eines prozentualen Bodenkontakts und einer Maschinendynamik basierend auf einem oder mehreren des Anpresskraftspielraumwerts, des Fahrqualitätswerts, des prozentualen Bodenkontaktwerts und des Maschinendynamikwerts, die durch den einen oder die mehreren In-situ-Sensoren detektiert werden, die dem geografischen Ort entsprechen, und dem Wert der Charakteristik in der Informationskarte (358) an dem geografischen Ort; und
Steuern eines prädiktiven Modellgenerators (310, 441) zum Erzeugen des prädiktiven Bodeneingriffsmodells, das einen Wert der Charakteristik als eine Modelleingabe empfängt und einen oder mehrere eines prädiktiven Anpresskraftspielraumwerts, eines prädiktiven Fahrqualitätswerts, eines prädiktiven prozentualen Bodenkontaktwerts und eines prädiktiven Maschinendynamikwerts als eine Modellausgabe basierend auf der identifizierten Beziehung erzeugt; und
wobei das Steuern des prädiktiven Kartengenerators (312) Folgendes umfasst:
Steuern des prädiktiven Kartengenerators (312) zum Erzeugen der funktionalen prädiktiven Bodeneingriffskarte (263, 460) des Feldes, die einen oder mehrere von prädiktiven Anpresskraftspielraumwerten, prädiktiven Fahrqualitätswerten, prädiktiven prozentualen Bodenkontaktwerten und prädiktiven Maschinendynamikwerten auf die unterschiedlichen geografischen Orte in dem Feld abbildet, basierend auf den Werten der Charakteristik in der Informationskarte (358) und dem prädiktiven Bodeneingriffsmodell.

## Revendications

1. Système (300) de plantation agricole comprenant :
un système de communication (306) configuré pour recevoir une carte d'informations (358) qui comporte des valeurs d'une caractéristique correspondant à différents emplacements géographiques dans un champ ;
un capteur in situ (308, 180) configuré pour détecter une valeur d'une caractéristique d'engagement au sol correspondant à un emplacement géographique dans le champ ;
un générateur de modèle prédictif (310, 441) configuré pour générer un modèle prédictif d'engagement au sol (311, 450) qui modélise une relation entre les valeurs de la caractéristique et la caractéristique d'engagement au sol sur la base de la valeur de la caractéristique d'engagement au sol détectée par le capteur in situ à l'emplacement géographique et de la valeur de la caractéristique dans la carte d'informations (358) à l'emplacement géographique ;
un générateur de carte prédictive (312) configuré pour générer une carte prédictive fonctionnelle d'engagement au sol (263, 460) du site de travail, laquelle cartographie des valeurs prédictives de la caractéristique d'engagement au sol aux différents emplacements géographiques sur le site de travail, sur la base des valeurs de la caractéristique dans la carte d'informations (358) et sur la base du modèle prédictif d'engagement au sol, le générateur de carte prédictive (312) étant configuré pour configurer la carte prédictive fonctionnelle d'engagement au sol (263, 460) en vue de son exploitation par un système de commande (314) ; **caractérisé par**
une machine de plantation agricole mobile (101) dotée du système de contrôle (314) configuré pour générer un signal de commande afin de commander un sous-système de suspension (354) sur la machine de plantation agricole mobile (101) sur la base de la carte prédictive fonctionnelle d'engagement au sol (263, 460), le sous-système de suspension (354) comprenant une suspension commandable (113) d'un ensemble de roues de châssis (111) fixées à une barre porte-outils (102) supportant la machine de plantation (101) au-dessus de la surface au niveau de laquelle elle opère, la suspension (113) étant commandable pour commander une hauteur de la barre porte-outils (102) par rapport au champ.

2. Système de plantation agricole (300) selon la revendication 1, dans lequel le capteur in situ (180, 380) est configuré pour détecter, en tant que valeur de la caractéristique d'engagement au sol, une valeur de marge de force d'appui correspondant à l'emplacement géographique, la valeur de marge de force d'appui représentant une force agissant sur des roues de jauge (116) de la machine de plantation (100) ;
dans lequel le modèle prédictif d'engagement au sol (450) modélise une relation entre les valeurs de la caractéristique et les valeurs de marge de force d'appui sur la base de la valeur de marge de force d'appui détectée par le capteur in situ correspondant à l'emplacement géographique et de la valeur de la caractéristique dans la carte d'informations (358) à l'emplacement géographique ; et
dans lequel la carte prédictive fonctionnelle d'engagement au sol (263, 460) cartographie des valeurs prédictives de marge de force d'appui aux différents emplacements géographiques sur le site de travail sur la base des valeurs de la caractéristique dans la carte d'informations (358) et sur la base du modèle prédictif d'engagement au sol.

3. Système de plantation agricole (300) selon l'une des revendications 1 ou 2, dans lequel le capteur in situ (180, 382) est configuré pour détecter, en tant que valeur de la caractéristique d'engagement au sol, une valeur de qualité de roulement correspondant à l'emplacement géographique, la valeur de qualité de roulement représentant l'accélération de la machine de plantation (101) ou des unités de rang (106) ;
dans lequel le modèle prédictif d'engagement au sol (450) modélise une relation entre les valeurs de la caractéristique et des valeurs de qualité de roulement sur la base de la valeur de qualité de roulement détectée par le capteur in situ correspondant à l'emplacement géographique et de la valeur de la caractéristique dans la carte d'informations (358) à l'emplacement géographique ; et
dans lequel la carte prédictive fonctionnelle d'engagement au sol (263, 460) cartographie des valeurs prédictives de qualité de roulement aux différents emplacements géographiques sur le site de travail sur la base des valeurs de la caractéristique dans la carte d'informations (358) et sur la base du modèle prédictif d'engagement au sol.

4. Système de plantation agricole (300) selon l'une des revendications 1 à 3, dans lequel le capteur in situ (180, 384) est configuré pour détecter, en tant que valeur de la caractéristique d'engagement au sol, une valeur de contact avec le sol en pourcentage correspondant à l'emplacement géographique,
dans lequel le modèle prédictif d'engagement au sol (450) modélise une relation entre les valeurs de la caractéristique et des valeurs de contact avec le sol en pourcentage sur la base de la valeur de contact avec le sol en pourcentage détectée par le capteur in situ correspondant à l'emplacement géographique et de la valeur de la caractéristique dans la carte d'informations (358) à l'emplacement géographique ; et
dans lequel la carte prédictive fonctionnelle d'engagement au sol (263, 460) cartographie des valeurs prédictives de contact avec le sol en pourcentage aux différents emplacements géographiques sur le site de travail sur la base des valeurs de la caractéristique dans la carte d'informations (358) et sur la base du modèle prédictif d'engagement au sol.

5. Système de plantation agricole (300) selon l'une des revendications 1 à 4, dans lequel le capteur in situ (180, 388) est configuré pour détecter, en tant que valeur de la caractéristique d'engagement au sol, une valeur de dynamique de la machine correspondant à l'emplacement géographique ;
dans lequel le modèle prédictif d'engagement au sol (450) modélise une relation entre les valeurs de la caractéristique et des valeurs de dynamique de la machine sur la base de la valeur de dynamique de la machine détectée par le capteur in situ correspondant à l'emplacement géographique et de la valeur de la caractéristique dans la carte d'informations (358) à l'emplacement géographique ; et
dans lequel la carte prédictive fonctionnelle d'engagement au sol (263, 460) cartographie des valeurs prédictives de dynamique de la machine aux différents emplacements géographiques sur le site de travail sur la base des valeurs de la caractéristique dans la carte d'informations (358) et sur la base du modèle prédictif d'engagement au sol.

6. Système de plantation agricole (300) selon l'une des revendications 1 à 5, dans lequel la carte d'informations (358) comprend une ou plusieurs cartes d'informations (358), chacune parmi la ou les cartes d'informations (358) comportant des valeurs d'une caractéristique respective correspondant à différents emplacements géographiques dans le champ, la ou les cartes d'informations (358) comprenant au moins une des cartes suivantes :
une carte topographique (430) qui cartographie, en tant que valeurs de la caractéristique respective, des valeurs topographiques aux différents emplacements géographiques dans le champ ;
une carte de vitesse (430) qui cartographie, en tant que valeurs de la caractéristique respective, des valeurs de vitesse aux différents emplacements géographiques dans le champ ;
une carte d'humidité du sol (430) qui cartographie, en tant que valeurs de la caractéristique respective, des valeurs d'humidité du sol aux différents emplacements géographiques dans le champ ;
une carte de type du sol (430) qui cartographie, en tant que valeurs de la caractéristique respective, des valeurs de type du sol aux différents emplacements géographiques dans le champ ;
une carte de rugosité du sol (430) qui cartographie, en tant que valeurs de la caractéristique respective, des valeurs de rugosité du sol aux différents emplacements géographiques dans le champ ;
une carte d'irrigation (430) qui cartographie, en tant que valeurs de la caractéristique respective, des valeurs d'irrigation aux différents emplacements géographiques dans le champ ;
une carte de travail du sol (430) qui cartographie, en tant que valeurs de la caractéristique respective, des valeurs de travail du sol aux différents emplacements géographiques dans le champ ;
une carte de circulation (430) qui cartographie, en tant que valeurs de la caractéristique respective, des valeurs de caractéristique de circulation aux différents emplacements géographiques dans le champ ; et
une carte de compactage (430) qui cartographie, en tant que valeurs de la caractéristique respective, des valeurs de compactage aux différents emplacements géographiques dans le champ ; et
dans lequel le modèle prédictif d'engagement au sol (450) modélise une relation entre des valeurs topographiques et/ou des valeurs de vitesse et/ou des valeurs d'humidité du sol et/ou des valeurs de type du sol et/ou des valeurs de rugosité du sol et/ou des valeurs d'irrigation et/ou des valeurs de travail du sol et/ou des valeurs de caractéristique de circulation et/ou des valeurs de compactage et des valeurs de la caractéristique d'engagement au sol sur la base de la valeur de la caractéristique d'engagement au sol détectée par le capteur in situ correspondant à l'emplacement géographique et de la valeur topographique et/ou de la valeur de vitesse et/ou de la valeur d'humidité du sol et/ou de la valeur de type du sol et/ou de la valeur de rugosité du sol et/ou de la valeur d'irrigation et/ou de la valeur de travail du sol et/ou de la valeur d'ornières et/ou de la valeur de compactage, dans les cartes respectives, à l'emplacement géographique, le modèle prédictif d'engagement au sol étant configuré pour recevoir, comme entrée ou entrées de modèle, une valeur topographique et/ou une valeur de vitesse et/ou une valeur d'humidité du sol et/ou une valeur de type du sol et/ou une valeur d'irrigation et/ou une valeur de rugosité du sol et/ou une valeur de travail du sol et/ou une valeur de caractéristique de circulation et/ou une valeur de compactage, et générer, comme sortie de modèle, une valeur prédictive de la caractéristique d'engagement au sol sur la base de la relation modélisée ; et
dans lequel le générateur de carte prédictive (312) génère la carte prédictive fonctionnelle d'engagement au sol (263, 460) du site de travail, laquelle cartographie des valeurs prédictives de la caractéristique d'engagement au sol aux différents emplacements géographiques sur le site de travail, sur la base des valeurs topographiques et/ou des valeurs de vitesse et/ou des valeurs d'humidité du sol et/ou des valeurs de type du sol et/ou des valeurs de rugosité du sol et/ou des valeurs d'irrigation et/ou des valeurs de travail du sol et/ou des valeurs de caractéristique de circulation et/ou des valeurs de compactage dans la carte d'informations (358) respective et sur la base du modèle prédictif d'engagement au sol.

7. Système de plantation agricole (300) selon l'une des revendications 1 à 6, dans lequel le système de commande (314) est configuré pour générer un signal de commande afin de commander un sous-système de propulsion (350) d'une machine de plantation agricole mobile (100), pour commander une vitesse de la machine de plantation agricole mobile sur la base de la carte prédictive fonctionnelle d'engagement au sol (263, 460).

8. Système de plantation agricole (300) selon l'une des revendications 1 à 6, dans lequel le système de commande (314) est configuré pour générer un signal de commande afin de commander un sous-système de force d'appui (341) d'une machine de plantation agricole mobile (100) pour ajuster une force d'appui appliquée par le sous-système de force d'appui sur un composant de la machine de plantation agricole mobile, sur la base de la carte prédictive fonctionnelle d'engagement au sol (263, 460).

9. Système de plantation agricole (300) selon l'une des revendications 1 à 6, dans lequel le système de commande (314) est configuré pour générer un signal de commande afin de commander un sous-système de profondeur (343) d'une machine de plantation agricole mobile pour ajuster la profondeur de plantation d'une machine de plantation agricole (100), sur la base de la carte prédictive fonctionnelle d'engagement au sol (263, 460).

10. Procédé, mis en œuvre par ordinateur, de génération d'une carte prédictive fonctionnelle d'engagement au sol (263, 460), comprenant le système de plantation agricole (300) selon l'une des revendications 1 à 9 et comprenant en outre les étapes suivantes :
la réception d'une carte d'informations (358) qui indique des valeurs d'une caractéristique correspondant à différents emplacements géographiques dans un champ ;
la détection, à l'aide d'un capteur in situ (308, 180), d'une valeur d'une caractéristique d'engagement au sol correspondant à l'emplacement géographique ;
la génération d'un modèle prédictif d'engagement au sol (311, 450) qui modélise une relation entre la caractéristique et la caractéristique d'engagement au sol ;
la commande d'un générateur de carte prédictive (312) afin de générer la carte prédictive fonctionnelle d'engagement au sol (263, 460) du champ, laquelle cartographie des valeurs prédictives de la caractéristique d'engagement au sol aux différents emplacements dans le champ sur la base des valeurs de la caractéristique dans la carte d'informations (358) et du modèle prédictif d'engagement au sol ; **caractérisé par** la génération de signaux de commande afin de commander une commande un sous-système de suspension (354) de la machine de plantation agricole mobile (100) sur la base de la carte prédictive fonctionnelle d'engagement au sol (263, 460), le sous-système de suspension (354) comprenant une suspension commandable (113) d'un ensemble de roues de châssis (111) fixées à une barre porte-outils (102) supportant la machine de plantation (101) au-dessus de la surface au niveau de laquelle elle agit, la suspension (113) étant commandable pour commander une hauteur de la barre porte-outils (102) par rapport au champ.

11. Procédé mis en œuvre par ordinateur selon la revendication 10, dans lequel la détection, à l'aide du capteur in situ (180, 380, 382, 384, 388), d'une valeur de la caractéristique d'engagement au sol comprend la détection, à l'aide d'un ou de plusieurs capteurs in situ, d'une valeur de marge de force d'appui et/ou d'une valeur de qualité de roulement et/ou d'une valeur de contact avec le sol en pourcentage et/ou d'une valeur de dynamique de la machine.

12. Procédé mis en œuvre par ordinateur selon l'une des revendications 10 à 11, dans lequel la génération du modèle prédictif d'engagement au sol (450) comprend :
l'identification d'une relation entre la caractéristique et la marge de force d'appui et/ou la qualité de roulement et/ou le contact avec le sol en pourcentage et/ou la dynamique de la machine sur la base de la valeur de marge de force d'appui et/ou de la valeur de qualité de roulement et/ou de valeur de contact avec le sol en pourcentage et/ou de la valeur de dynamique de la machine détectées par le ou les capteurs in situ correspondant à l'emplacement géographique et de la valeur de la caractéristique, dans la carte d'informations (358), à l'emplacement géographique ; et
la commande d'un générateur de modèle prédictif (310, 441) afin de générer le modèle prédictif d'engagement au sol qui reçoit, comme entrée de modèle, une valeur de la caractéristique et génère, comme sortie de modèle, une valeur prédictive de marge de force d'appui et/ou une valeur prédictive de qualité de roulement et/ou une valeur prédictive de contact avec le sol en pourcentage et/ou une valeur prédictive de dynamique de la machine sur la base de la relation identifiée ; et
dans lequel la commande du générateur de carte prédictive (312) comprend :
la commande du générateur de carte prédictive (312) afin de générer la carte prédictive fonctionnelle d'engagement au sol (263, 460) du champ, laquelle cartographie des valeurs prédictives de marge de force d'appui et/ou des valeurs prédictives de qualité de roulement et/ou des valeurs prédictives de contact avec le sol en pourcentage et/ou des valeurs prédictives de dynamique de la machine aux différents emplacements géographiques dans le champ sur la base des valeurs de la caractéristique dans la carte d'informations (358) et du modèle prédictif d'engagement au sol.
